# EUROPÄISCHE PATENTSCHRIFT

(11) **EP 1 521 691 B1**
(45) Veröffentlichungstag und Bekanntmachung des Hinweises auf die Patenterteilung: **19.03.2008**
(21) Anmeldenummer: 02781153.8
(22) Anmeldetag: 05.11.2002
(51) Int. Cl.: B60R 21/16, B60R 21/20

(54) **AIRBAG VORRICHTUNG UND BETRIEBSVERFAHREN DAFÜR**
AIRBAG SYSTEM AND OPERATING METHOD FOR THE SAME
SYSTEME D'AIRBAG ET PROCEDE POUR LE FAIRE FONCTIONNER

(30) Priorität: 03.12.2001 DE 20119506 U; 05.03.2002 DE 20203496 U; 11.06.2002 DE 20209047 U
(43) Veröffentlichungstag der Anmeldung: 13.04.2005
(73) Patentinhaber: Inova GmbH Technische Entwicklungen, 65428 Rüsselsheim (DE)
(72) Erfinder: MÜLLER, Olaf, 65428 Rüsselsheim (DE)
(74) Vertreter: Lindner, Manfred Klaus
(86) Internationale Anmeldenummer: PCT/DE2002/004097
(87) Internationale Veröffentlichungsnummer: WO 2003/047917

(56) Entgegenhaltungen:
- DE-A- 19 858 690
- DE-U- 20 106 598
- DE-U- 20 106 599
- DE-U- 29 606 709

## Beschreibung

Die Erfindung betrifft allgemein eine Airbagvorrichtung nach dem Oberbegriff des Anspruchs 1 sowie Betriebsverfahren dafür.

Die auf den vorliegenden Anmelder/Inhaber zurückgehenden älteren deutschen Patentanmeldungen 197 12 782.7, 197 26 878.1, 197 33 896.8, 100 13759.8, 100 25 417.9 und 101 23 685.9, europäische Patentanmeldung 98 10 55 51.0, 99 93 63 35.1, 00 11 24 32.0 und 00 12 51 50.3, internationale Patentanmeldung PCT/DE 99/01564, PCT/DE 00/02625, PCT/DE 00/02892, PCT/DE 00/02391, PCT/DE 01/01379, PCT/DE 01/01594, sowie Gebrauchsmusteranmeldungen 298 09 554.8, 298 19 165.2, 298 20 722.2, 299 05 000.9, 299 05 919.7, 299 08 946.0, 299 10 059.6 , 299 13 628.0, 200 11 391.7, 200 12 707.1, 200 16 554.2, 201 01 990.6 und 201 09 976.4 befassen sich allgemein mit einer Airbagvorrichtung sowie Herstellungs- und Auslöseverfahren dafür insbesondere im Zusammenhang mit aktiv zu öffnenden Airbagklappen und deren Steuerungen.

Heutige Airbags schützen beim Unfall, wenn sie in der richtigen Entfernung die Insassen auffangen. Da das innerhalb von etwa 40 msec. passieren muss, bläst das Gas mit etwa 280 km/h in den Airbag mit einem Druck bis zu 60 bar am Austritt der Gaserzeugungskartusche. Dabei muss die Gasdurchtrittsfläche z.B. beim Beifahrerbag gleich oder größer 20 cm² sein. Dies macht den Airbag zum tödlichen Geschoss wenn Insassen z.B. unangeschnallt in den Austrittsbereich des Airbags gelangen.

Hierzu gibt es zur Erfüllung der amerikanischen Gesetzgebung FMVSS 208 ab 09/2002: 1. mehrstufige Airbags, 2. Austrittspositionen auf der Armaturentafel, 3. Sitzbelegungserkennungsmatten, die zwischen schweren, leichten Personen und Kindersitzen unterscheiden, 4. fotografische Überwachung der Insassenbewegung, und 5. Anschnallerkennung.

Dies alles wird beim Stand der Technik benötigt, um den gefährlichen Airbag abzuschalten oder nur teilweise, beispielsweise nur mit einer 1. Stufe, zu zünden. Das ist bis zu € 200,-teuer und lässt viele Probleme ungelöst. Die bessere Lösung wäre, den Airbag nicht aggressiv austreten zu lassen.

Bei Airbags nach dem Stand der Technik strömt das Gas mit bis zu 40 bar Druck frontal gegen das Gewebe des Airbags bzw. den Insassen. Das führt bei "OOP" (out of position), d.h. bei einem geringen Abstand zwischen beispielsweise Beifahrer oder allgemein Insasse und Airbag, zum Tod des Insassen. Es gibt Schutzrechtsanmeldungen, z.B. die Gebrauchsmusteranmeldung 201 09 976.4, nach denen die zentrale Ausströmung des Gases tangential rechtwinkling "abgelenkt" wird. Die vorliegende Erfindung strebt weitere Verbesserungen an.

Die vorliegende Erfindung hat zum Ziel, eine Airbagvorrichtung und ein Betriebsverfahren dafür zu schaffen, womit auf einfache, zuverlässige und kostengünstige Weise die Aggressivität des Airbagaustrittes herabgesetzt wird, um Verletzungsgefahren von Insassen durch sich öffnende Airbags abzuwenden.

Zur Erreichung dieses Zieles schafft die Erfindung eine Airbagvorrichtung mit einem Airbag mit Entfaltungssteuereinrichtungen, insbesondere zur aktiven Querentfaltung, sowie ein Betriebsverfahren dafür. Die Richtung der Querentfaltung ist dabei quer in Bezug auf die Ausbreitungsrichtung eines Airbags zu einem Insassen hin.

Erfindungsgemäß dienen dem angegebenen Ziel Vorrichtungen und Verfahren, vorzugsweise unter Einbeziehung einer optimierten Faltung des Gassackes, zu einem gezielten Ausblasen des Gases über Entfaltungssteuereinrichtungen, insbesondere in der Querrichtung, um dadurch beim Aufblasen des Gassackes oder Airbags eine größere Airbagbasis zu schaffen, durch die sozusagen die Aggressivität des sich ausbreitenden Airbags verteilt wird, und/oder um den Austrittsweg eines Airbags von seiner Unterbringung hinter einer Fahrzeuginnenverkleidung vorzugeben und/oder zu öffnen.

Da das Gas ein geringes spezifisches Gewicht hat und wenn es mit maximal 280 km/h geblasen wird, entsteht entsprechend dieser weiteren vorzugsweisen Spezifizierung nach dem Gesetz m/2xV 2 in vorteilhafter Weise eine Vergrößerung des Bags um 10 %.

Die vorliegende Erfindung benutzt entsprechend weiterer bevorzugter Ausgestaltungen zur Vergrößerung des Airbags den Druck des Gases. Insbesondere kann mit flankierenden Techniken eine 500-fache Kraft durch das Gesetz "Druck x Fläche" für eine gerichtete Entfaltung des Airbags erhalten werden.

Um den Druck entstehen zu lassen, ist es bevorzugt, wenn Gas zuerst in Schläuchen, Rohren oder kleinen, später aufreißenden, in den eigentlichen Bag eingepackten Hilfsbags "gefangen" wird.

Da diese Hilfsmittel (Schläuche, Rohre oder kleine, später aufreißende, in den eigentlichen Bag eingepackte Hilfsbags) bei kleinem Weg eine große Kraft erzeugen, sind sie in vorteilhafter Weise entsprechend weiteren Ausgestaltungen auch nutzbar zum begrenzten Öffnen von Abdeckungen, z.B. beim Fahrerbag.

Diese Hilfsmittel (Schläuche, Rohre oder kleine, später aufreißende, in den eigentlichen Bag eingepackte Hilfsbags) sind bevorzugt weiter geeignet und vorgesehen, um den Gasaustritt an neue, bisher nicht übliche Stellen im Fahrzeuginneren zu verlegen. Dies kann vorteilhafterweise genutzt werden, um durch beispielsweise Defrosteröffnungen oder Öffnungen hinter Zierleisten Schläuche und ähnliches mit ihrem Mündungen austreten zu lassen. Hierdurch kann bei entsprechenden Weiterbildungen der Erfindung das Gas z.B. auf der Armaturentafel in den Bag geleitet werden. Entsprechende Inneneinrichtungs- oder Verkleidungsmodule bleiben damit nach einem Crash formstabil. Es genügt die Reinen Airbagvorrichtungsmodule mit Gasdgenerator und Airbag sowie die hier als Hilfsmittel bezeichneten Einrichtungen auszutauschen. Intakte Instrumententafeln nach einem Crash können bis zu zwei Kaskoklassen in der realen Nachbewertung der Schadenshöhe bedeuten.

Die vorliegenden Ausführungen können auch bei der "Active Door" eingesetzt werden."Active Door" heißt die Öffnung der Airbagklappe(n) zeitlich vor dem Bagaustritt durch eine pyrotechnisch unterstützte Mechanik. Nähere Einzelheiten zum thema "Active Door" ergeben sich aus den eingangs angegebenen älteren Anmeldungen

Durch die vorliegende Erfindung werden gemäß weiterer bevorzugter Ausgestaltungen insbesondere eine tangentiale Airbag-Gaseinströmleitung für verschiedene Airbagausführungen sowie ein Betriebsverfahren dafür geschaffen.

Die Erfindung sieht zur Verbesserung der Airbagvorrichtung eine Vergrößerung der Airbagfläche zum Zeitpunkt des Vorwärtspropagierens des Airbags zu einem Insassen hin vor. Diese Airbagfläche breitet sich tangential vom Außenrand des Airbags nach außen in die Ebene bzw. in den Raum aus und liegt nächstmöglich zum Insassen. Zusätzlich zeigt die Erfindung alternative Lösungen für verschiedene Airbagsysteme auf.

Vorteile der vorliegenden Erfindung sind, dass die Verletzungsschwere im Nahbereich reduziert wird, da die Erfindung eine optimal tangentiale Gasausströmung zu beiden bzw. allen Seiten derart realisiert, dass bei Personen, die sich zu nahe am Airbag befinden, der Airbag nach der gegenüberliegenden Seite ausweicht. Außderdem entsteht in Verbindung mit "Active Door" (vor einem Austreten des Airbags aus einem Raum hinter einer Verkleidung geöffnete Klappen) eine Absenkung der Aggressivität, so dass man auf mehrstufige Airbagvorrichtung und eine Gewichtserkennung verzichten kann.

Insbesondere schafft die vorliegende Erfindung gemäß einer bevorzugten Ausgestaltung einen Frontbeifahrerbag unter den Belüftungsblenden sowie ein Betriebsverfahren dafür.

Für die US-Gesetzgebung FMVSS 208 ist es notwendig, vor allem den Beifahrerbag in einem Bereich aus der Armaturentafel austreten zu lassen, wo der Kopf bei "OOP" (out of position) nicht hinkommen kann. Deshalb werden die Beifahrerbags weitgehend "TOPMOUNTED", d.h. oben auf der Armaturentafel nahe der Windschutzscheibenunterkante, installiert. Da man dort in aller Regel aus stilistischen Gründen keinen sichtbaren Deckel akzeptiert, wird bei Austritt des Airbags die Armaturentafel zerstört. Die hierdurch entstehenden Kosten führen bei der "Zweiteinstufung" nach der tatsächlichen Schadenshöhe zu einer Verschlechterung der Kaskoklasse bis zu zwei Stufen. Die vorstehende Ausgestaltung gemäß der vorliegenden Erfindung schafft damit nicht nur besonders geschickt die Verlegung des Airbagaustrittes an die für Insassen ungefährlichen Orte von Lüftungsaustritten, sondern ermöglicht zur Absenkung der Aggressivität den Airbag möglichst "breit" austreten zu lassen und verringert die Schäden am Fahrzeug durch die Auslösung des Airbags auf ein Minimum, da bereits vorhandene Öffnungen in der Inneneinrichtung verwendet werden und eine Instandsetzung nach einer Airbagauslösung mit nur relativ niedrigen Kosten möglich ist.

Insbesondere werden im Umfang der vorstehenden Ausgestaltungsvarianten der Erfindung weitere vorteilhafte Mechanismen und -antriebe zur Öffnung von Airbagklappen geschaffen.

Erreicht wird diese vorteilhafte Ausgestaltung gemäß der vorliegenden Erfindung allgemein ausgedrückt mit einer Anordnung von Airbagmodulen in Kombination mit Belüftungskanälen. Eine Luftverteilerblende ist gleichzeitig eine Airbagabdeckung. Ein Ausblasen von Airbaggas erfolgt jeweils durch Schläuche, die bei Entfaltung des Airbags auf der Armaturentafeloberfläche enden, um so den Gasdruck frei in den Airbag zu bringen ohne das Modulgehäuse, wie es heute Stand der Technik ist, zu verformen.

In weiter vorteilhafter Weise kann ein gleichzeitiges Ausbringen des Airbagtextils großflächig außen auf die Armaturentafel mittels "Geschossen" realisiert werden, die in einem Gasausblasschlauch untergebracht sind.

Erfindungsgemäß ist eine Airbagvorrichtung mit einem Airbag und Gaserzeugungseinrichtungen derart gestaltet, dass Entfaltungssteuereinrichtungen vorgesehen sind, die ein Entfalten des Airbags zumindest teilweise vorgeben, bevor der Airbag mit Gas aus den Gaserzeugungseinrichtungen aufgeblasen wird.

Vorzugsweise sind die Entfaltungssteuereinrichtungen ausgelegt, um eine Querentfaltung des Airbags vorzugeben. Alternativ oder zusätzlich können die Entfaltungssteuereinrichtungen ausgelegt sein, um insbesondere in der Querrichtung beim späteren Aufblasen des Airbags eine größere Airbagbasis zu schaffen, und/oder um den Austrittsweg eines Airbags von seiner Unterbringung hinter einer Fahrzeuginnenverkleidung vorzugeben und/oder zu öffnen.

Gemäß einer bevorzugten Weiterbildung ist vorgesehen, dass Gaseinstromführungen vorgesehen sind, die einen Airbag tangential oder quer zur Bewegungsrichtung des sich füllenden Airbags zu einem Insassen hin aufblasen. Alternativ oder zusätzlich kann vorgesehen sein, dass dass ein Gasverteilergehäuse vorgesehen ist, das Öffnungen aufweist, durch die ein Airbag tangential oder quer zur Bewegungsrichtung des sich füllenden Airbags zu einem Insassen hin aufgeblasen wird.

Bei einer anderen erfindungsgemäßen Variante ist ein Gasausblassystem für den Airbag, insbesondere Beifahrerairbag, vorgesehen, welches Gasausblassystem zeitlich vor dem Aufblasen ein Gewebe des Airbags über eine Airbagaustrittsöffnung in einer Fahrzeuginnenverkleidung hebt. In Weiterbildung davon wird das angehobene Gewebe quer und damit nicht aggressiv zur Schutzrichtung des sich füllenden Airbags zu einem Insassen hin mechanisch ausgebreitet, wobei vorzugsweise der Antrieb für die Querausbreitung der Gasdruck zum Aufblasen des Airbags ist. Dies wiederum kann dadurch weitergebildet werden, dass der Airbag an den Stellen des angehobenen und/oder ausgebreiteten Gewebes zuerst unter Verteilung der Aggressivität zur örtlichen Aufteilung aufgeblasen wird.

Eine weitere Alternative der vorstehenden Versionen besteht darin, dass die Entfaltungssteuereinrichtungen gegenläufig angeordnete Schläuche mit schlauchartigen Stopfen zur Entfaltung bzw. zum Abschießen mittels Gasdruck vorzugsweise aus den Gaserzeugungseinrichtungen enthalten, um den Airbag zu entfalten. In Weiterbildung davon enthalten die Entfaltungssteuereinrichtungen Kolben, die in Zylindern auch mit dem Gasdruck vorzugsweise aus den Gaserzeugungseinrichtungen beaufschlagt werden und die Schläuche in Schussrichtung anheben, um den Airbag zu entfalten.

Die vorstehenden Varianten können ferner dadurch weitergebildet sein, dass die Entfaltungssteuereinrichtungen Gasausblasrohre enthalten, die mit einem Gelenk versehen sind, um ein Hochschwenken bzw. eine Nachgiebigkeit der Rohre beim Kopfaufschlag zu erzeugen, welche Rohre mittels Gasdruck vorzugsweise aus den Gaserzeugungseinrichtungen beaufschlagt werden, um den Airbag zu entfalten. In Weiterbildung davon ist das Gasausblasrohr teleskopartig derartig gestaltet, dass das vom geschlossene teleskopartig Gasausblasrohr das Gewebe des Airbags auf der Armaturentafel nach außen schiebt. Dies wiederum kann dadurch weitergebildet werden, dass die teleskopartigen Gasausblasrohre in Alternativen derart ausgeführt sind, dass nach einer bestimmten Wegstrecke das Gas an der richtigen Stelle in das Gewebe austreten kann, und alternative Techniken mit entriegelbarem Stopfen und Querlöchern vorgesehen sind.

Noch weitere bevorzugte Alternativen der erfindungsgemäßen Airbagvorrichtung sind dadurch gekennzeichnet, dass die Entfaltungssteuereinrichtungen Kolben in Zylindern enthalten, um damit den Airbag in Position zu bringen. Alternativ oder zusätzlich hebt ein Teleskopgasleitbock ein Rohrsystem in Position, um damit den Airbag in Position zu bringen. Ferner kann alternativ oder zusätzlich vorgesehen sein, dass ein Stift oder Ähnliches das Ausblasen von Stopfen in oder über den Enden von Gaseinstromführungen, Öffnungen des Gasverteilergehäuses, Gasausblassystem, Schläuchen und/oder Gasausblasrohren solange verhindert, bis die Ausblasmechanik in Position gebracht ist. Die letztere Variante läßt sich mit Vorteil dadurch weiterbilden, dass eine Wegesteuerung der Mechanik vorgesehen ist, welche Wegsteuerung eine Haltefunktion eines Sperrgliedes, wie z.B. eines Stiftes, entrastet.

Erfindungsgemäß kann bei einer Airbagvorrichtung vorgesehen sein, dass die Entfaltungssteuereinrichtungen zur Erzeugung jedenfalls zunächst einer Querausströmung von Gas in dem Airbag ein matratzenartiges Gewebe enthalten. In Weiterbildung davon ist das matratzenartige Gewebe durch eine Matratze mit einer Mehrzahl von Wülsten gebildet, welche Matratze derart gestaltet ist, dass Wulst nach Wulst aufgeblasen wird, so dass sich der Airbag weggesteuert entfaltet. Alternativ oder zusätzlich kann vorgesehen sein, dass das matratzenartige Gewebe durch eine Matratze mit einer Mehrzahl von Wülsten gebildet ist, bei welcher Matratze die Matratzenwülste derart untereinander vernäht sind, dass nach Füllung mit Gasdruck eines jeweiligen Wulstes Verbindungslöcher von diesem Wulst zum nächsten Wulst aufplatzen, so dass wiederum letzterer gefüllt wird. Eine weitere alternative oder zusätzliche Gestaltungsvariante besteht darin, dass das matratzenartige Gewebe durch eine Matratze mit einer Mehrzahl von Wülsten gebildet ist, welche Matratze derart gestaltet ist, dass der letzte Wulst Löcher enthält, bei deren Aufplatzen Gas in den eigentlichen Airbag geblasen wird. Noch eine weitere Version, alternativ oder zusätzlich zu den vorbeschriebenen Ausgestaltungen, sieht vor, dass das matratzenartige Gewebe durch eine Matratze mit einer Mehrzahl von Wülsten gebildet ist, welche Matratze von einem teleskopartig ausfahrenden Kamin aus von der Mitte aus mit Gas gefüllt wird. Die letztere Ausgestaltung kann dadurch weitergebildet werden, dass eine Deckelplatte des Kamines derart mit Löchern versehen ist, dass auch die Mitte des Bags angemessen direkt mit Gas gefüllt wird.

Bei einer weiteren bevorzugten Ausgestaltung der Airbagvorrichtung ist vorgesehen, dass die Entfaltungssteuereinrichtungen Bestandteil der modular aufgebauten Airbagvorrichtung sind.

Ferner ist es bevorzugt, wenn die Entfaltungssteuereinrichtungen wenigstens einen Druckkanal enthalten, der insbesondere in einem abgewinkelten Bereich eine teleskopartig herausfahrbare Verlängerung hat, um den Airbag dadurch zu entfalten und dann zu füllen.

Noch weiter enthalten die Entfaltungssteuereinrichtungen vorzugsweise ein gerundetes Leitblech, um das der Airbag beim Auszug herum gezogen wird.

Bei einer weiteren vorzugsweisen Variante enthalten die Entfaltungssteuereinrichtungen Schläuche, durch die Gasstrom auf die Armaturentafel geleitet wird, so dass sich der größte Druck direkt in den Airbag entspannt. In Weiterbildung davon ist bevorzugt vorgesehen, dass die Entfaltungssteuereinrichtungen derart ausgelegt sind und wirken, das die modular aufgebaute Airbagvorrichtung bei Ihrer Auslösung nicht mit Druck verformt wird, so dass das Modul unbeschadet nach einem Crash ausgewechselt werden kann.

Bei einer Airbagvorrichtung nach der Erfindung kann ferner vorgesehen sein, dass die Entfaltungssteuereinrichtungen Defroster-Lüftungsöffnungen für den Austritt des Airbags enthalten, und dass im normalen Gebrauch des Fahrzeuges ohne Auslösung der Airbagvorrichtung die Defrosterluft ungehindert oberhalb des Airbags passieren kann. Eine bevorzugte Weiterbildung davon besteht darin, dass dass im Crashfall die Schläuche, Rohre, Hilfsbags o.ä. durch die Defrosterdüse austreten können.

Weiterhin kann mit Vorzug vorgesehen sein, dass die Entfaltungssteuereinrichtungen Austrittshilfsmittel enthalten, die derart gestaltet sind, dass das Gas, das an ihrem Ende austritt, den Airbag wie ein Papiertaschentuch durch einen Schlitz im Armaturenkasten zieht.

Eine besonders bevorzugte Ausgestaltung der Erfindung besteht darin, dass die Entfaltungssteuereinrichtungen den Airbag mit Geschossen aus einer gestalterisch im Fahrzeuginnenraum ohnehin gegebenen Öffnung an die sicherheitsrelevante Stelle im Fahrzeug befördern.

Mit Vorteil kann ferner vorgesehen sein, dass die Gaserzeugungseinrichtungen, wie insbesondere ein Gasgenerator, derart gestaltet ist, dass sie/er in eine Defrosteröffnung passen/passt und vorzugsweise beidseitig ausbläst.

Für entsprechende Platzverhältnisse in einem Fahrzeug insbesondere hinter einer Armaturentafel kann es von Vorteil sein, wenn dass die Entfaltungssteuereinrichtungen wenigstens einen Gaskanal enthalten, der ausgelegt ist, um in einer Sektion kreisförmige Gasströmung zu bewirken. Zur WEiterbildung ist mit Vorzug vorgesehen, dass der Gaskanal derart aus Kreissegmenten gestaltet ist, dass sich ein teleskopischer Einsatz darin kreisförmig bewegen kann, und/oder dass die kreisförmige Ausbildung derart ist, dass der Airbag über diese Rundungen problemlos ausgezogen werden kann.

Mit Vorzug ist die ERfindung auch so gestaltet, dass die Entfaltungssteuereinrichtungen zum Entfalten des Airbags wenigstens einen Hilfsbag enthalten, in dem der Generator eingenäht ist. Dabei ist das Textil des Hilfsbags vorzugsweise zu Schläuchen abgenäht, die dann eingestülpt oder mit Geschossen versehen werden können.

Es ist auch bevorzugt, wenn wenigstens zwei Airbags für den Beifahrer enthalten sind. Dabei kann ein oberer Airbag aus einer Defrosterdüse heraus entfaltbar und aufblasbar sein. Weiterhin kann ein unterer Airbag als Kniebag und gleichzeitig Polsterung einer Hinterkante der Armaturentafel ausgelegt sein, und kann ferner vorzugsweise vorgesehen sein, dass eine Verteilung des unteren Airbags mittels eines Hilfsbags mit abgenähten, eingestülpten Schläuchen erfolgt. Alternativ oder zusätzlich ist vorzugsweise für den oberen Airbag und den unteren Airbag ein gemeinsamer Gasgenerator als Gaserzeugungseinrichtungen vorgesehen.

Bei einer weiteren gestalterischen Variante der Erfindung sind Einrichtungen zum Rückziehen von Zierleisten insbesondere mit Kolben vorgesehen sind, die den Gasstrom für den Airbag als Energiequelle nutzen.

Eine erfindungsgemäße Airbagvorrichtung kann ferner so gestaltet sein, dass wenigstens ein Hilfsbag so ausgelegt ist, dass er im Auslösungsfall eine integrierte Klappe in einer Armaturentafel öffnet, um einen Austritt des sich entfaltenden und/oder aufblasenden Airbags durch die so in der Armaturentafel entstandene Öffnung zu ermöglichen. Dies kann dadurch weitergebildet sein, dass zum Öffnen der Klappe eine Druckplatte vorgesehen ist, auf der der Hilfsbag befestigt ist. Letzteres wiederum kann dadurch weitergebildet sein, dass Rasthebel in Kulissen vorgesehen sind, die eine stabile obere Lage der Druckplatte direkt unter dem Armaturentafelkörper sicherstellen.

Weiterhin kann die Airbagvorrichtung so gestaltet sein, dass die Airbagvorrichtung als ein Rollkolbenmodul für eine Airbagklappen Öffnung mittels Rollkolben ausgelegt ist, und dass das Rollkolbenmodul zwei vorzugsweise Alu-Halbschalen-Strangpressprofile mit insbesondere eingeschobenem Druckkanal und mit oben aufgesetzten Hilfsbags enthält.

Eine andere Gestaltungsvariante der Airbagvorrichtung besteht darin, dass die Airbagvorrichtung einen Dachairbag betreibt und im Dachrahmen des Schiebedachs aus Strangpreßprofil untergebracht ist. Dies läßt sich weiterbilden, indem in dem eigentlichen Airbag ein Hilfsbag integriert ist, um den eigentlichen Airbag zuerst aus dem Strangpreßprofilgehäuse auszuschieben, so dass der eigentliche Airbag im Freien gleichmäßig aufgeblasen wird. Alternativ oder zusätzlich kann vorgesehen sein, dass Gaskanäle in die Alustrangpreßprofile des Dachrahmens integriert sind.

Bei einer anderen Weiterbildung der erfindungsgemäßen Airbagvorrichtung ist vorgesehen, dass die Airbagvorrichtung modular ist, und dass das Airbagmodul an Innenraum-Belüftungsöffnungen eines Fahrzeuges so angeschlossen oder anschließbar ist, dass im Fall einer Auslösung der Airbagvorrichtung der Airbag durch die Innenraum-Belüftungsöffnungen austritt oder austreten kann.

Ferner wird ein Betriebsverfahren für eine Airbagvorrichtung geschaffen, welches Betriebsverfahren dadurch gekennzeichnet ist, dass eine Airbagvorrichtung nach einem der vorhergehenden Ansrüche bestimmungs- und gestaltungsgemäß eingesetzt und betrieben wird.

Insbesondere kann bei dem Betriebsverfahren für eine Airbagvorrichtung vorgesehen sein, dass Gasfluss durch ein Gasverteilergehäuse und/oder Gasverteilungsschlauch geleitet wird. Alternativ oder zusätzlich kann vorgesehen sein, dass ein Gasfluss von beiden oder allen Seiten des Airbags tangential oder quer zum Aufblasen des Airbags eingeleitet wird, und/oder dass eine Airbagabdeckung den Airbag über Ausströmöffnung hält, wobei Sollbruchstellen der Airbagabdeckung durch den Gasstrom aufgebrochen werden, so dass obere Textilschichten des Airbags ungehindert durch den Gasstrom angehoben werden.

Ferner wird ein Betriebsverfahren für eine Airbagvorrichtung mit zumindest einem Airbagmodul und wenigstens einem Airbag geschaffen, welches Betriebsverfahren dadurch gekennzeichnet ist, dass der Airbag im Fall einer Auslösung der Airbagvorrichtung durch die Anbringung des Airbagmoduls an Innenraum-Belüftungsöffnungen eines Fahrzeuges durch die Innenraum-Belüftungsöffnungen austritt oder austreten kann. Insbesondere ist bei einem solchen Betriebsverfahren vorgesehen, dass eine Airbagvorrichtung nach einem der vorhergehenden Ansrüche bestimmungs- und gestaltungsgemäß eingesetzt und betrieben wird.

Bevorzugte und/oder vorteilhafte Ausgestaltungen der Erfindung ergeben sich aus den jeweils abhängigen Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnungen näher erläutert, in denen
- Fig. 1: eine schematische Schnittzeichnung durch ein erstes Ausführungsbeispiel einer erfindungsgemäßen Airbagvorrichtung vor einer Auslösung zeigt,
- Fig. 2: eine schematische Schnittzeichnung durch die erste Ausführung der erfindungsgemäßen Airbagvorrichtung gemäß der Fig. 1 nach einer Auslösung während der Entfaltung des Airbags zeigt,
- Fig. 3: eine schematische Schnittzeichnung durch ein zweites Ausführungsbeispiel der erfindungsgemäßen Airbagvorrichtung nach einer Auslösung während der Entfaltung des Airbags zeigt,
- Fig. 4: eine schematische Schnittzeichnung durch ein drittes Ausführungsbeispiel der erfindungsgemäßen Airbagvorrichtung nach einer Auslösung während der Entfaltung des Airbags zeigt,
- Fig. 5: eine schematische Schnittzeichnung durch ein viertes Ausführungsbeispiel der erfindungsgemäßen Airbagvorrichtung nach einer Auslösung während der Entfaltung des Airbags zeigt,
- Fig. 6: aufeinanderfolgende Momentaufnahmen während des Entfaltens und Aufblasens einer erfindungsgemäßen Airbagvorrichtung,
- Fig. 7: eine schematische Schnittzeichnung durch ein fünftes Ausführungsbeispiel der erfindungsgemäßen Airbagvorrichtung nach einer Auslösung während der Entfaltung des Airbags zeigt,
- Fig. 8: eine schematische Schnittzeichnung durch ein sechstes Ausführungsbeispiel der erfindungsgemäßen Airbagvorrichtung nach einer Auslösung während der Entfaltung des Airbags zeigt,
- Fig. 9: eine schematische Schnittzeichnung durch ein siebtes Ausführungsbeispiel der erfindungsgemäßen Airbagvorrichtung nach einer Auslösung während der Entfaltung des Airbags zeigt,
- Fig. 10: eine schematische Schnittzeichnung durch ein achtes Ausführungsbeispiel der erfindungsgemäßen Airbagvorrichtung nach einer Auslösung während der Entfaltung des Airbags zeigt,
- Fig. 11: eine schematische Schnittzeichnung durch ein neuntes Ausführungsbeispiel der erfindungsgemäßen Airbagvorrichtung vor einer Auslösung des Airbags zeigt,
- Fig. 12: eine schematische Schnittzeichnung durch das neunte Ausführungsbeispiel der erfindungsgemäßen Airbagvorrichtung gemäß der Fig. 11 nach einer Auslösung während der Entfaltung des Airbags zeigt,
- Fig. 13: eine schematische Schnittzeichnung durch das Ausführungsbeispiel der erfindungsgemäßen Airbagvorrichtung gemäß den Fig. 11 und 12 in einer um 90° gedrehten Ansicht nach einer Auslösung während der Entfaltung des Airbags zeigt,
- Fig. 14: eine schematische Ansicht des Ausführungsbeispiels gemäß den Fig. 11 bis 13 in einem Fahrzeug zeigt,
- Fig. 15: eine schematische Schnittzeichnung durch ein zehntes Ausführungsbeispiel der erfindungsgemäßen Airbagvorrichtung vor einer Auslösung des Airbags zeigt,

- Fig. 16: eine schematische Schnittzeichnung durch das Ausführungsbeispiel der erfindungsgemäßen Airbagvorrichtung gemäß der Fig. 15 nach einer Auslösung während der Entfaltung des Airbags in einer Ausschnittsansicht zeigt,
- Fig. 17: eine schematische Ansicht des Ausführungsbeispiels gemäß den Fig. 15 und 16 in einem Fahrzeug zeigt,
- Fig. 18: eine schematische Schnittzeichnung durch ein elftes Ausführungsbeispiel der erfindungsgemäßen Airbagvorrichtung vor einer Auslösung des Airbags zeigt,
- Fig. 19: eine schematische Draufsicht auf das elfte Ausführungsbeispiel der erfindungsgemäßen Airbagvorrichtung vor einer Auslösung des Airbags gemäß der Fig. 18 zeigt,
- Fig. 20: eine schematische Schnittzeichnung durch das elfte Ausführungsbeispiel der erfindungsgemäßen Airbagvorrichtung gemäß der Fig. 18 nach einer Auslösung während der Entfaltung des Airbags zeigt,
- Fig. 21: eine schematische Draufsicht auf das elfte Ausführungsbeispiel der erfindungsgemäßen Airbagvorrichtung nach einer Auslösung während der Entfaltung des Airbags gemäß der Fig. 18 zeigt,
- Fig. 22: eine schematische Schnittansicht durch das elfte Ausführungsbeispiel der erfindungsgemäßen Airbagvorrichtung vor einer Auslösung des Airbags gemäß der Fig. 18 in um 90 ° gedrehter Ansicht zeigt,
- Fig. 23: eine schematische Schnittansicht durch das elfte Ausführungsbeispiel der erfindungsgemäßen Airbagvorrichtung nach einer Auslösung während der Entfaltung des Airbags gemäß der Fig. 22 zeigt,
- Fig. 24: eine schematische Schnittansicht durch das elfte Ausführungsbeispiel der erfindungsgemäßen Airbagvorrichtung vor einer Auslösung des Airbags gemäß der Fig. 18 in einer Ausschnittdarstellung zeigt,
- Fig. 25: eine schematische Ansicht des elften Ausführungsbeispiels gemäß den Fig. 18 bis 24 in einem Fahrzeug zeigt,
- Fig. 26: ein Detail des elften Ausführungsbeispiels der erfindungsgemäßen Airbagvorrichtung gemäß der Fig. 18 nach einer Auslösung während der Entfaltung des Airbags in einer schematischen Schnittzeichnung zeigt,
- Fig. 27: ein Detail des elften Ausführungsbeispiels der erfindungsgemäßen Airbagvorrichtung gemäß der Fig. 18 nach einer Auslösung während der Entfaltung des Airbags in einer schematischen Schnittzeichnung zu einem bezüglich der Darstellung in der Fig. 26 späteren Zeitpunkt zeigt,
- Fig. 28: eine Einzelheit in Verbindung mit jedem der Ausführungsbeispiele der erfindungsgemäßen Airbagvorrichtung in einem Fahrzeug zeigt,
- Fig. 29: eine schematische Schnittzeichnung durch ein zwölftes Ausführungsbeispiel der erfindungsgemäßen Airbagvorrichtung nach einer Auslösung während der Entfaltung des Airbags zeigt,
- Fig. 30: eine schematische Schnittansicht durch das zwölfte Ausführungsbeispiel der erfindungsgemäßen Airbagvorrichtung vor einer Auslösung des Airbags gemäß der Fig. 29 an einer anderen Stelle zeigt,
- Fig. 31: eine schematische Schnittansicht durch das zwölfte Ausführungsbeispiel der erfindungsgemäßen Airbagvorrichtung vor einer Auslösung des Airbags gemäß der Fig. 29 zeigt,
- Fig. 32: eine schematische Schnittansicht durch das zwölfte Ausführungsbeispiel der erfindungsgemäßen Airbagvorrichtung vor und (strichpunktiert) nach einer Auslösung des Airbags während der Entfaltung quer zu den Schnitten der Fig. 30 und 31 zeigt,
- Fig. 33: eine schematische Schnittzeichnung durch ein dreizehntes Ausführungsbeispiel der erfindungsgemäßen Airbagvorrichtung vor einer Auslösung des Airbags zeigt,
- Fig. 34: eine schematische Schnittansicht durch das dreizehnte Ausführungsbeispiel der erfindungsgemäßen Airbagvorrichtung vor einer Auslösung des Airbags gemäß der Fig. 33 in einer um 90 ° gedrehten Ansicht zeigt,
- Fig. 35: eine schematische Schnittansicht eines vergrößerten Details gemäß dem dreizehnten Ausführungsbeispiels der erfindungsgemäßen Airbagvorrichtung vor einer Auslösung des Airbags gemäß der Fig. 33 zeigt,
- Fig. 36: eine schematische Schnittzeichnung durch ein vierzehntes Ausführungsbeispiel der erfindungsgemäßen Airbagvorrichtung vor einer Auslösung des Airbags zeigt,
- Fig. 37: eine schematische Schnittzeichnung durch das vierzehnte Ausführungsbeispiel der erfindungsgemäßen Airbagvorrichtung nach einer Auslösung zu Beginn der Entfaltung des Airbags zeigt,
- Fig. 38: eine schematische Schnittzeichnung durch das vierzehnte Ausführungsbeispiel der erfindungsgemäßen Airbagvorrichtung nach einer Auslösung zeitlich nach dem Zustand gemäß der Fig. 37 während der Entfaltung des Airbags zeigt,
- Fig. 39: eine schematische Draufsicht auf ein Detail eines fünfzehnten Ausführungsbeispiels der erfindungsgemäßen Airbagvorrichtung vor einer Auslösung des Airbags zeigt,
- Fig. 40: eine schematische Draufsicht auf das Detail des fünfzehnten Ausführungsbeispiels der erfindungsgemäßen Airbagvorrichtung gemäß der Fig. 39 nach einer Auslösung während der Entfaltung des Airbags zeigt,
- Fig. 41: eine schematische Draufsicht auf das Detail des fünfzehnten Ausführungsbeispiels der erfindungsgemäßen Airbagvorrichtung gemäß der Fig. 39 nach einer Auslösung während der Entfaltung des Airbags zeitlich nach dem Zustand gemäß der Fig. 40 zeigt,
- Fig. 42: eine schematische Schnittansicht eines sechzehnten Ausführungsbeispiels der erfindungsgemäßen Airbagvorrichtung vor einer Auslösung des Airbags zeigt,
- Fig. 43: eine schematische Schnittansicht des sechzehnten Ausführungsbeispiels der erfindungsgemäßen Airbagvorrichtung nach einer Auslösung während der Entfaltung des Airbags zeigt,
- Fig. 44: eine schematische Draufsicht auf ein Detail eines siebzehnten Ausführungsbeispiels der erfindungsgemäßen Airbagvorrichtung vor einer Auslösung des Airbags zeigt,
- Fig. 45: eine schematische Draufsicht auf ein Detail eines achtzehnten Ausführungsbeispiels der erfindungsgemäßen Airbagvorrichtung vor einer Auslösung des Airbags zeigt,
- Fig. 46: eine schematische Draufsicht auf das Detail des achtzehnten Ausführungsbeispiels der erfindungsgemäßen Airbagvorrichtung gemäß der Fig. 45 nach einer Auslösung während der Entfaltung des Airbags zeigt,
- Fig. 47: schematisch im Schnitt ein Detail aus der Herstellung im zusammenhang mit dem achtzehnten Ausführungsbeispiel der erfindungsgemäßen Airbagvorrichtung gemäß der Fig. 45 zeigt,
- Fig. 48: eine schematische Schnittansicht durch das achtzehnte Ausführungsbeispiel der erfindungsgemäßen Airbagvorrichtung vor einer Auslösung des Airbags gemäß der Fig. 45 zeigt,
- Fig. 49: eine schematische Schnittansicht durch das achtzehnte Ausführungsbeispiel der erfindungsgemäßen Airbagvorrichtung gemäß der Fig. 45 nach einer Auslösung während der Entfaltung des Airbags zeigt,
- Fig. 50: eine schematische Schnittansicht durch ein neunzehntes Ausführungsbeispiel der erfindungsgemäßen Airbagvorrichtung vor einer Auslösung des Airbags zeigt,
- Fig. 51: eine schematische Schnittansicht durch das neunzehnte Ausführungsbeispiel der erfindungsgemäßen Airbagvorrichtung gemäß der Fig. 50 nach einer Auslösung während der Entfaltung des Airbags zeigt,
- Fig. 52: eine schematische Schnittansicht durch ein zwanzigstes Ausführungsbeispiel der erfindungsgemäßen Airbagvorrichtung vor einer Auslösung des Airbags zeigt,
- Fig. 53: eine schematische Schnittansicht durch das zwanzigste Ausführungsbeispiel der erfindungsgemäßen Airbagvorrichtung gemäß der Fig. 52 nach einer Auslösung während der Entfaltung des Airbags zeigt,
- Fig. 54: eine schematische Schnittansicht durch ein einundzwanzigstes Ausführungsbeispiel der erfindungsgemäßen Airbagvorrichtung vor einer Auslösung des Airbags zeigt,
- Fig. 55: eine schematische Schnittansicht durch das einundzwanzigste Ausführungsbeispiel der erfindungsgemäßen Airbagvorrichtung gemäß der Fig. 54 nach einer Auslösung während der Entfaltung des Airbags zeigt,
- Fig. 56: eine schematische Schnittansicht durch ein zweiundzwanzigstes Ausführungsbeispiel der erfindungsgemäßen Airbagvorrichtung nach einer Auslösung während der Entfaltung des Airbags zeigt,
- Fig. 57: eine schematische Schnittansicht eines Details eines dreiundzwanzigsten Ausführungsbeispiels der erfindungsgemäßen Airbagvorrichtung zeigt,
- Fig. 58: eine schematische Schnittansicht eines Details eines vierundzwanzigsten Ausführungsbeispiels der erfindungsgemäßen Airbagvorrichtung zeigt,
- Fig. 59: eine schematische Schnittansicht eines Details eines fünfundzwanzigsten Ausführungsbeispiels der erfindungsgemäßen Airbagvorrichtung zeigt,
- Fig. 60: eine schematische Schnittansicht eines Details eines sechsundzwanzigsten Ausführungsbeispiels der erfindungsgemäßen Airbagvorrichtung zeigt,
- Fig. 61: eine schematische Schnittansicht des Details des sechsundzwanzigsten Ausführungsbeispiels der erfindungsgemäßen Airbagvorrichtung gemäß der Fig. 60 in einem gegenüber letzterer fortgeschrittenen Entfaltungszustand zeigt,
- Fig. 62: eine schematische Schnittansicht durch ein siebenundzwanzigstes Ausführungsbeispiel der erfindungsgemäßen Airbagvorrichtung vor einer Auslösung des Airbags zeigt,

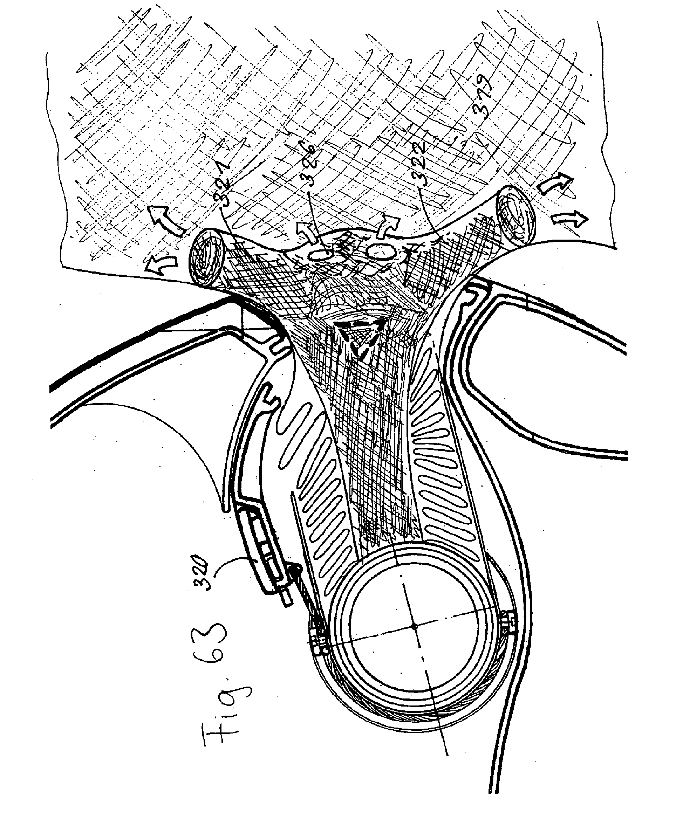

- Fig. 63: eine schematische Schnittansicht durch das siebenundzwanzigste Ausführungsbeispiel der erfindungsgemäßen Airbagvorrichtung gemäß der Fig. 62 nach einer Auslösung während der Entfaltung des Airbags zeigt,
- Fig. 64: eine schematische Schnittansicht durch ein achtundzwanzigstes Ausführungsbeispiel der erfindungsgemäßen Airbagvorrichtung vor einer Auslösung des Airbags zeigt,
- Fig. 65: eine schematische Schnittansicht durch das achtundzwanzigste Ausführungsbeispiel der erfindungsgemäßen Airbagvorrichtung gemäß der Fig. 64 nach einer Auslösung während der Entfaltung des Airbags zeigt,
- Fig. 66: eine schematische Schnittansicht durch das achtundzwanzigste Ausführungsbeispiel der erfindungsgemäßen Airbagvorrichtung vor einer Auslösung des Airbags analog Fig. 64 um 90 ° gedreht zeigt,
- Fig. 67: eine schematische Schnittansicht durch das achtundzwanzigste Ausführungsbeispiel der erfindungsgemäßen Airbagvorrichtung gemäß der Fig. 64 nach einer Auslösung während der Entfaltung des Airbags analog Fig. 65 um 90 ° gedreht zeigt,
- Fig. 68: eine schematische Schnittansicht durch ein neunundzwanzigstes Ausführungsbeispiel der erfindungsgemäßen Airbagvorrichtung zeigt,
- Fig. 69: eine schematische Schnittansicht durch ein dreißigstes Ausführungsbeispiel der erfindungsgemäßen Airbagvorrichtung zeigt,
- Fig. 70: eine schematische Schnittansicht durch ein einunddreißigstes Ausführungsbeispiel der erfindungsgemäßen Airbagvorrichtung vor einer Auslösung des Airbags zeigt,
- Fig. 71: eine schematische Schnittansicht durch das einunddreißigste Ausführungsbeispiel der erfindungsgemäßen Airbagvorrichtung gemäß der Fig. 70 nach einer Auslösung während der Entfaltung des Airbags zeigt,
- Fig. 72: eine Prinzipanordnung eines zweiunddreißigsten Ausführungsbeispiels der erfindungsgemäßen Airbagvorrichtung zeigt,
- Fig. 73: eine Prinzipanordnung eines dreiunddreißigsten Ausführungsbeispiels der erfindungsgemäßen Airbagvorrichtung zeigt,
- Fig. 74: eine schematische Schnittansicht durch ein vierunddreißigstes Ausführungsbeispiel der erfindungsgemäßen Airbagvorrichtung vor einer Auslösung des Airbags zeigt,
- Fig. 75: eine schematische Schnittansicht durch das vierunddreißigste Ausführungsbeispiel der erfindungsgemäßen Airbagvorrichtung gemäß der Fig. 74 nach einer Auslösung während der Entfaltung des Airbags zeigt,
- Fig. 76: eine schematische Draufsicht und zwei Schnitte daraus betreffend ein fünfunddreißigstes Ausführungsbeispiel der erfindungsgemäßen Airbagvorrichtung zeigt,
- Fig. 77: eine Prinzipskkizze eines sechsunddreißigsten Ausführungsbeispiels der erfindungsgemäßen Airbagvorrichtung zeigt,
- Fig. 78: eine schematische Schnittansicht durch das sechsunddreißigste Ausführungsbeispiel der erfindungsgemäßen Airbagvorrichtung vor einer Auslösung des Airbags entsprechend Schnitt "A" in der Fig. 77 zeigt,
- Fig. 79: eine schematische Schnittansicht durch das siebenunddreißigste Ausführungsbeispiel der erfindungsgemäßen Airbagvorrichtung gemäß der Fig. 78 nach einer Auslösung während der Entfaltung des Airbags entsprechend Schnitt "A" in der Fig. 77 zeigt,
- Fig. 80: eine schematische Schnittansicht durch das sechsunddreißigste Ausführungsbeispiel der erfindungsgemäßen Airbagvorrichtung vor einer Auslösung des Airbags entsprechend Schnitt "B" in der Fig. 77 und bezüglich Fig. 78 um 90° gedreht zeigt, und
- Fig. 81: eine schematische Schnittansicht durch das siebenunddreißigste Ausführungsbeispiel der erfindungsgemäßen Airbagvorrichtung gemäß der Fig. 78 nach einer Auslösung während der Entfaltung des Airbags entsprechend Schnitt "B" in der Fig. 77 und bezüglich Fig. 79 um 90 ° gedreht zeigt.

Anhand der nachfolgend beschriebenen und in den Zeichnungen dargestellten Ausführungs- und Anwendungsbeispiele wird die Erfindung lediglich exemplarisch näher erläutert.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Die erfindungsgemäßen Entfaltungssteuereinrichtungen sorgen in ihren jeweiligen Ausgestaltungen, dafür, dass der Airbag vor seinem eigentlichen Aufblasen entfaltet wird, insbesondere in Querrichtung hinsichtlich seiner Ausbreitungs- oder Schutzrichtung. Die Entfaltungssteuereinrichtungen sind durch ihre Funktion definiert und die jeweiligen Komponenten ergeben sich aus der Beschreibung und/oder den Darstellungen in den Zeichnungen für einen Fachmann ohne weiteres. Wenn nachfolgend von einem Airbagmodul die Rede ist, so steht dies ohne Einschränkungen auch allgemein für eine Airbagvorrichtung, die nicht modular aufgebaut ist.

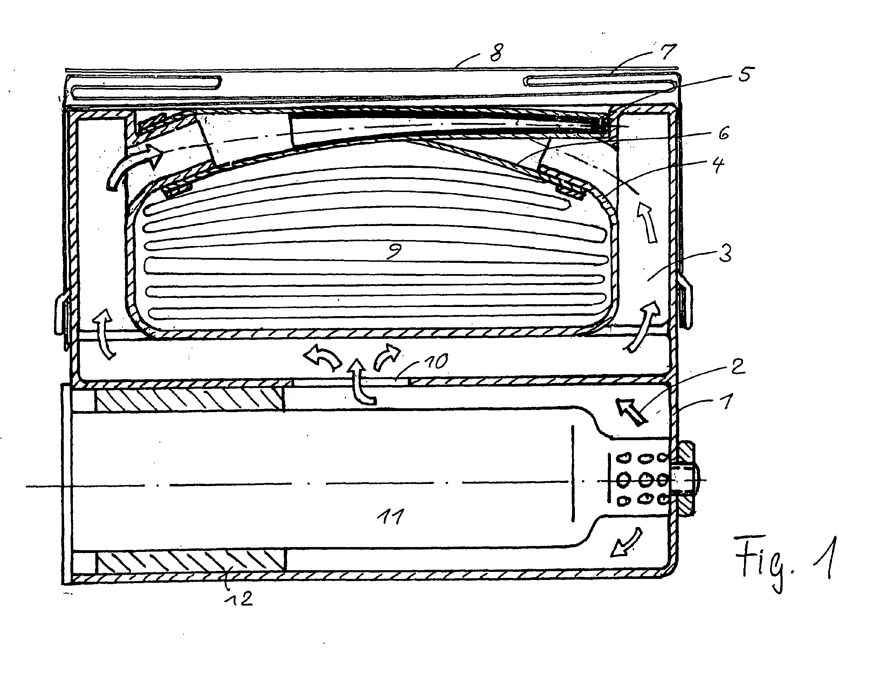

Die Fig. 1 zeigt als erstes Ausführungsbeispiel ein Beifahrerairbagmodul mit einem Modulgehäuse 1, in welchem sich ein Generator 11 befindet. In diesem Beispiel umgibt den Generator 11 ein Kolben von der "ACTIVE DOOR" 12 (siehe eingangs angegebene frühere Anmeldungen). Andere Alternativen sind eingeschlossen oder mit umfaßt. Das Gas geht nicht, wie bei früheren Bauarten üblich, direkt zum Airbag 9, sondern durch einen Gasweg 10 in Gaskanäle 3 und dann über Anschlussstutzen 4 in 2 bis 4 Schläuche 6.

Die Besonderheit dieses Ausführungsbeispiels ist, dass in den Schläuchen 6 "Schlauchpfropfen" 5 installiert sind. Die im Ausgangszustand gemäß der Fig. 1 beigefalteten Schläuche 6 sind an ihrem Ende mit einem "locker" gefalteten Airbaggewebe mit spezieller Faltung 7 umgeben. Der Zusammenbau wird mit einer Abdeckung derart zusammengehalten, dass sich die Schläuche mit dem lose beigefalteten Airbaggewebe in der lockeren Faltung 7 leicht "seitlich" entfalten können. Der größte Teil des Airbags 9 ist seitlich neben den Schläuchen 6 eingesteckt (nicht gezeigt).

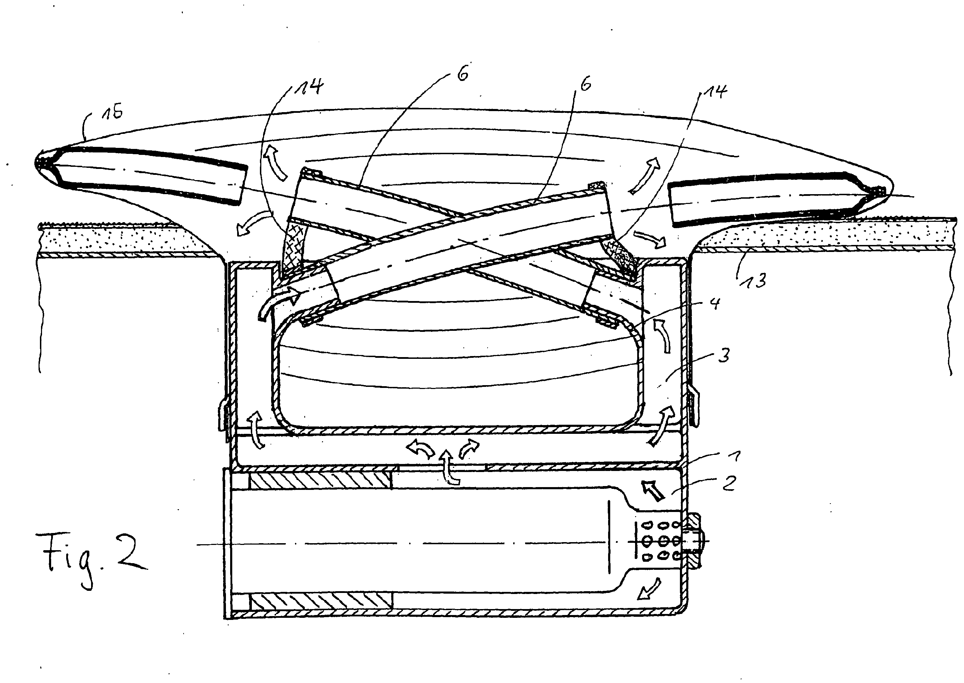

Die Fig. 2 zeigt die Situation des ersten Ausführungsbeispiels gemäß der Fig. 1 während des Entfaltens und Aufblasens. Durch Füllen der Schläuche 6 mit Gas 2 richten sich die Schläuche 6 auf. Die Anordnung ist derart gestaltet, dass die Schläuche 6 über die Kante der Öffnung in einer Armaturentafel 13 "zielen". Das entsprechend faltige und lockere Airbaggewebe 15 lässt das zu. Damit sich die Schläuche 6 nicht zu stark und sich unkontrolliert aufrichten und durch den Gasdruck nicht verkürzen können, sind sie am Ende festgehalten durch entsprechend ausgelegte Haltebänder 14. Durch den Gasdruck wird der Schlauchpfropfen 5 ausgeblasen wie ein Sektkorken. Er bringt das Airbaggewebe 15 in eine Lage flach auf der Armaturentafel 13, wo es durch das nachfolgende Gas - an dieser Stelle beginnend - aufgeblasen wird. Die Schlauchpfropfen 5 können Schlauchstücke sein, die am Ende geschlossen sind. Ebenso sind Teile aus Thermoplast oder anderen Materialien denkbar. Die Schlauchpfropfen 5 können auch alternativ außen über die Schläuche gestülpt sein. Vorteilhaft hierzu sind ausreichend steife Schläuche 6, die beispielsweise keine Haltebänder benötigen.

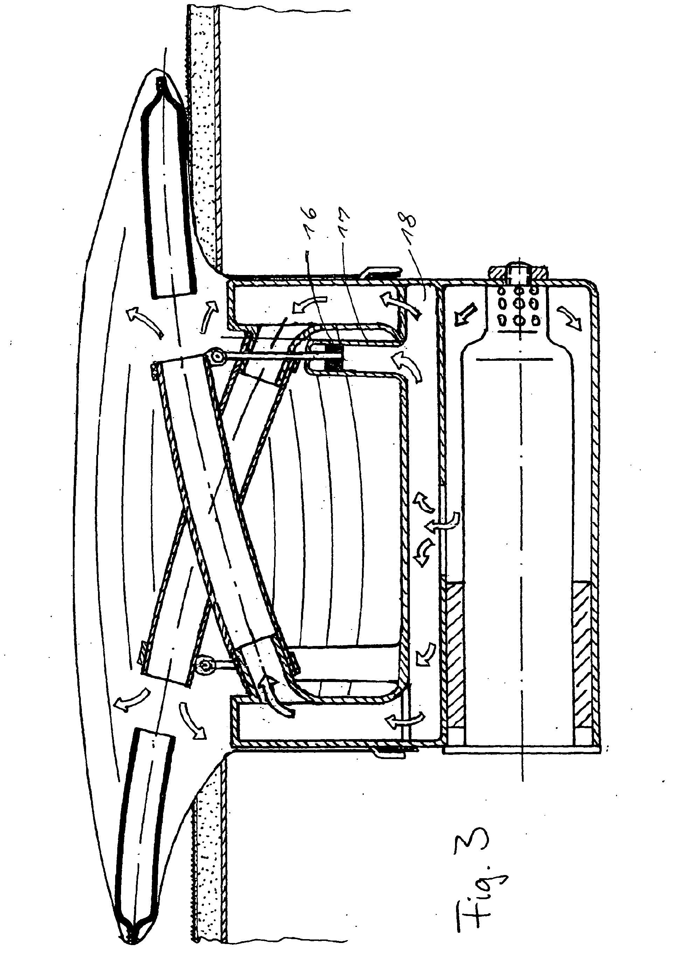

Die Fig. 3 zeigt ein weiteres Ausführungsbeispiel. Hier werden die Schläuche 6 mittels Kolben 16 in Zylindern 17, die an einen Gasdruckraum 18 angeschlossen sind, beaufschlagt. Hierdurch ergibt sich eine exakte Position der Schläuche 6 und ihrer "Schussrichtung". Alternativ können die Schläuche 6 auch Rohre sein, die entsprechend ausgerichtet sind und wobei die Packageverhältnisse in der Armaturentafel 13 keine Kopfaufschlagprobleme erwarten lassen. Alternativ können die Schläuche 6 auch Rohre sein, die an der Anbindung mit einem Gelenk versehen sind, das eine begrenzte Schwenkbewegung zulässt. Bei eventuellem Kopfaufschlag wird das Rohr wieder in das Modul gedrückt. Alternativ können die Schläuche 6 auch von einem mittig angeordneten "Kamin" mit Gas versorgt werden. Damit die somit kürzeren Schläuche 6 nicht zu steil blasen müssen, ist es von Vorteil, wenn der Kamin dann "teleskopartig" ausfahrbar ist.

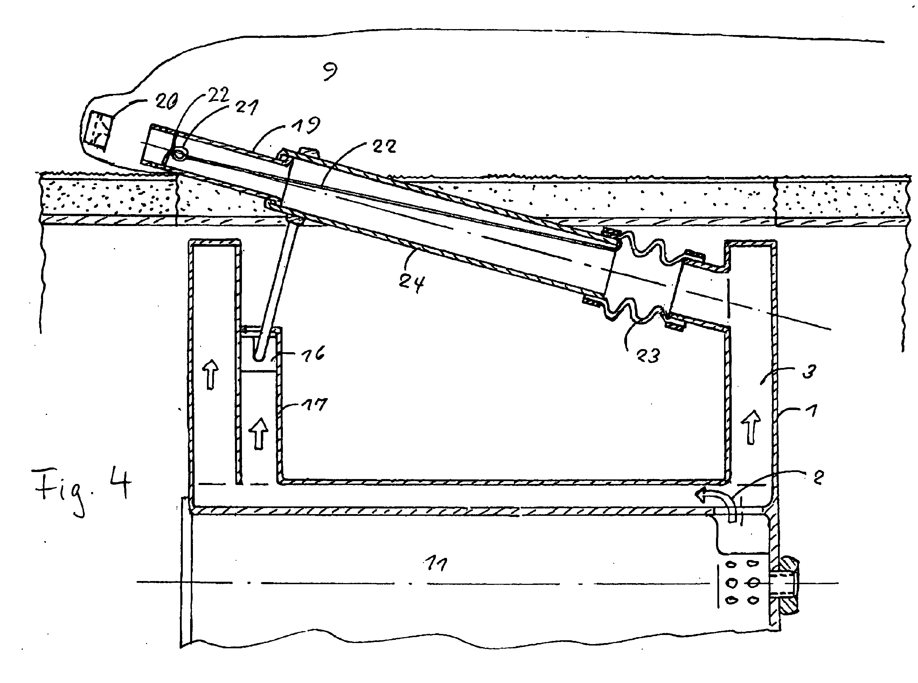

Als weiteres Ausführungsbeispiel ist in der Fig. 4 eine Anordnung dargestellt, bei der die Gasausströmung 2 mittels eines Gasausblasrohres 24, das mittels eines Flexgelenkes 23 am Gaskanal 3 angebunden ist, gezielt ausströmt. Bei einem Crash wird dieses Gasausblasrohr mittels Kolben 16 im Zylinder derart hochgeschwenkt, dass es über die Oberfläche der Armaturentafel 13 "schießt". Durch den Gasdruck schiebt ein Teleskopverlängerungsrohr 19 das entsprechend weich um das Gasausblasrohr 24 gefaltete Gewebe nach der Seite. Währenddessen ist das Teleskopverlängerungsrohr 19 mit einem Stopfen 20 verschlossen. Der Stopfen 19 ist z.B. mit einem durch ein Entriegelungsseil 22 entriegelbaren Splint gesichert. Das Entriegelungsseil 22 ist in der Länge derart abgestimmt, dass bei voll ausgefahrenem Teleskopverlängerungsrohr 19 der Gasstrom in den Airbag 9 freigegeben wird. Vorteil dieser Auslegung ist, dass zuerst das Gewebe nach "außen" gestoßen wird und dann dieses Gewebe an dieser Stelle auf der Armaturentafel 13 zuerst aufgeblasen wird.

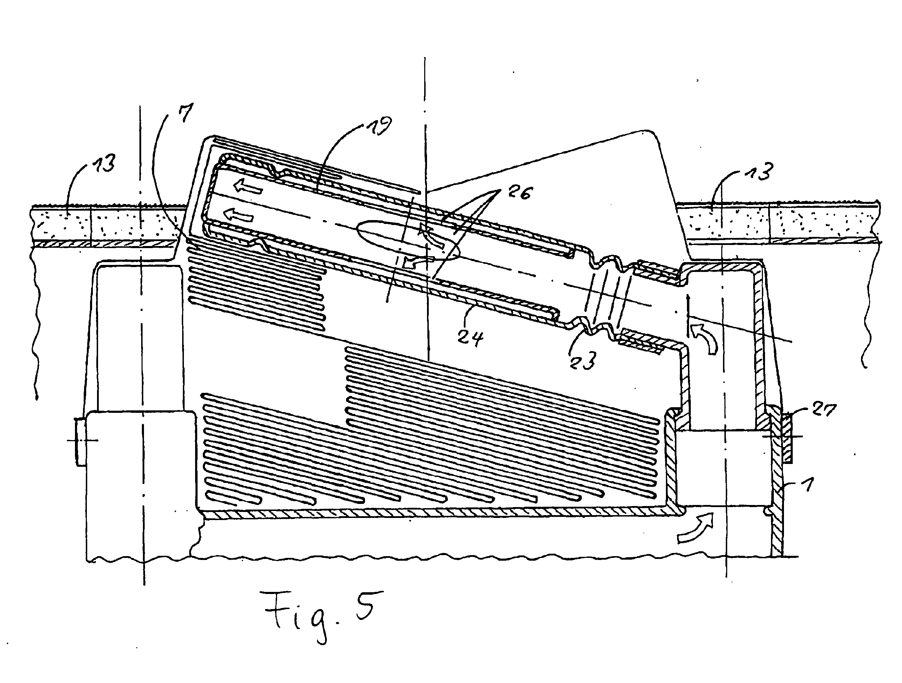

Die Fig. 5 zeigt eine weitere Alternative der "Querausströmung". Die Gasausströmung 2 geht zuerst in einen Teleskop-Gasleitbock 27, der durch den Gasdruck hochfährt. Weiter schiebt der Gasdruck ein Teleskopverlängerungsrohr 19 in Airbaggewebe 15 mit spezieller Faltung 7. Etwa in der Mitte des Teleskopverlängerungsrohres befinden sich die Löcher für den Gasaustritt 26. Das Gas strömt dann durch diese Löcher 26 in den Airbag 9, der dort auf der Armaturentafel 13 liegt. Das Flexgelenk 23 ist so ausgelegt, dass es bei "Kopfaufschlag" ein Nachgeben des Gasausblasrohres 24 zulässt. Vorteil dieses Ausführungsbeispiels ist der einfache Aufbau.

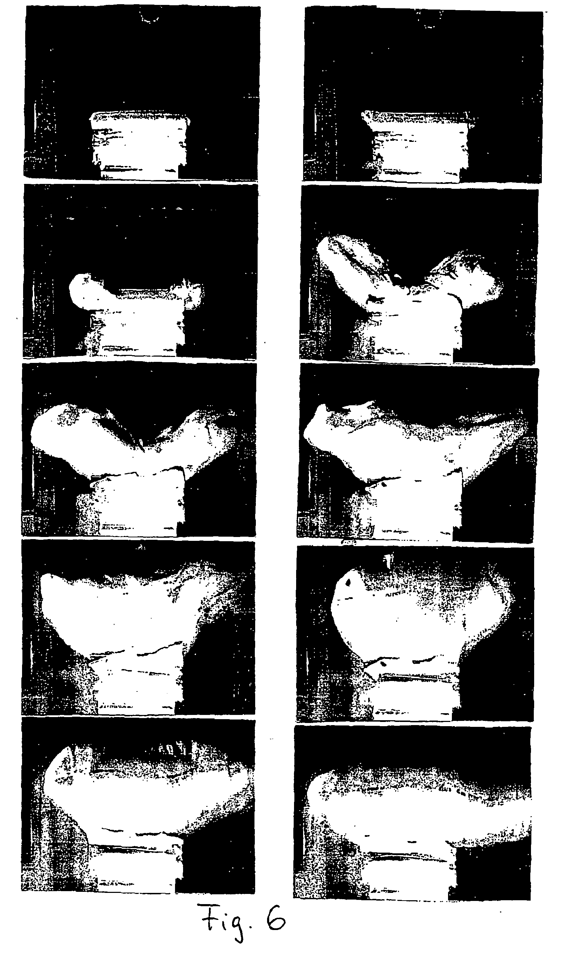

Die Fig. 6 zeigt besser als es jede Beschreibung könnte Versuchsergebnisse in Form von Momentaufnahmen eines sich erfindungsgemäß aufblasenden Airbags und somit einer entsprechenden Airbagvorrichtung im Verlauf des Aufblasens und damit Ausbreitens des Airbags.

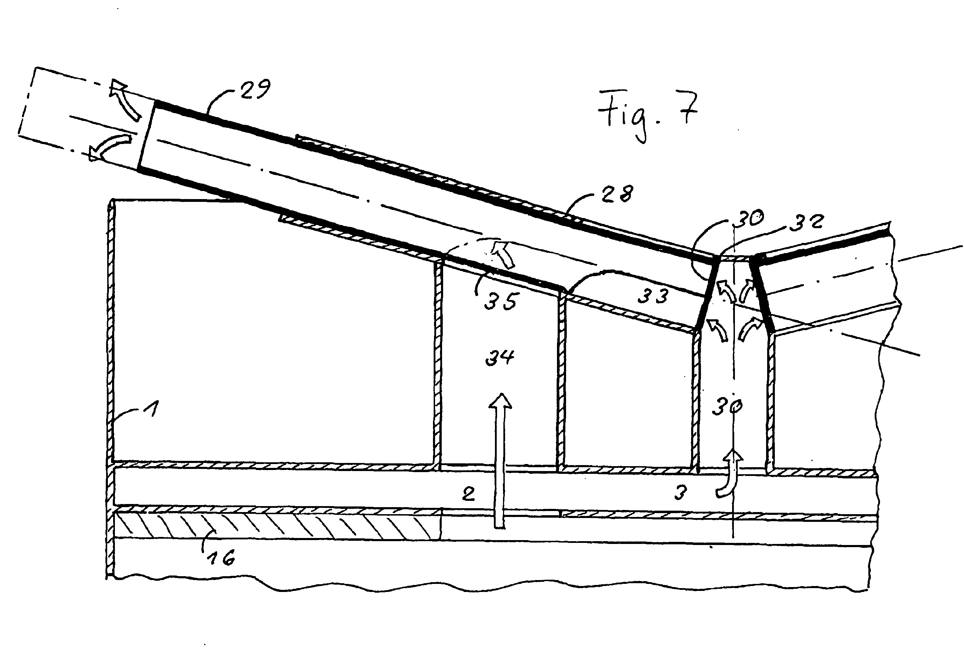

Die Fig. 7 stellt ein weiteres fünftes Ausführungsbeispiel inklusive der "Querausströmmechanik" dar. Hier ist ein Teleskoprohr 29 in einem Führungsrohr 28 gelagert. Das Teleskoprohr 29 ist am Ende verschlossen mit einem Deckel 30, der bei einem Crash mit Gasdruck beaufschlagt wird. Dieser schiebt das Teleskoprohr 29 nach vom und das Teleskoprohr 29 drückt das Airbaggewebe (nicht gezeigt) quer auf die Armaturentafel (nicht gezeigt). Das Gas wird dabei durch einen Kamin 30 geführt. Das Teleskoprohr wird eine bestimmte Wegstrecke in der Führung 31 geführt bis zum Anschlag der Anschlagnase 32. Dabei gleitet die Öffnung 33 des Teleskoprohres 29 in die Gasaustrittsöffnung 35 des 2. Kamines 34. Dieser lässt das Gas zur Füllung des Airbags (nicht gezeigt) durch das Teleskoprohr 29 blasen (Zweitaktmotorsystem). Der Airbag wird seitlich und unter der Querausströmmechanik gefaltet. Vorteil dieses Ausführungsbeispiels ist der einfache Aufbau.

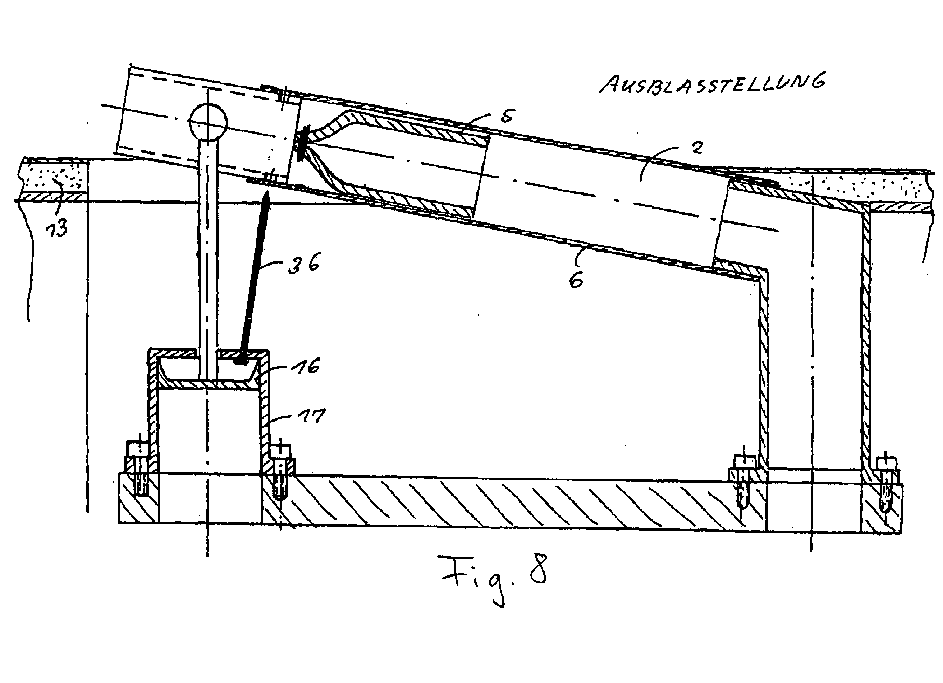

Die Fig. 8 stellt ein sechstes Ausführungsbeispiel inklusive der "Querausströmmechanik" dar. Hier blockiert ein Verriegelungsstift 36 den Austritt des Stopfens 20 so lange, bis der Kolben 16 im Zylinder 17 das Gasausblasrohr 24 oder den Schlauch 6 in die richtige Zielrichtung über die Armaturentafel 13 geschoben hat. Vorteil dieser Ausführung ist, dass nur der Airbag 9 entfaltet werden kann, wenn alles richtig in Position ist.

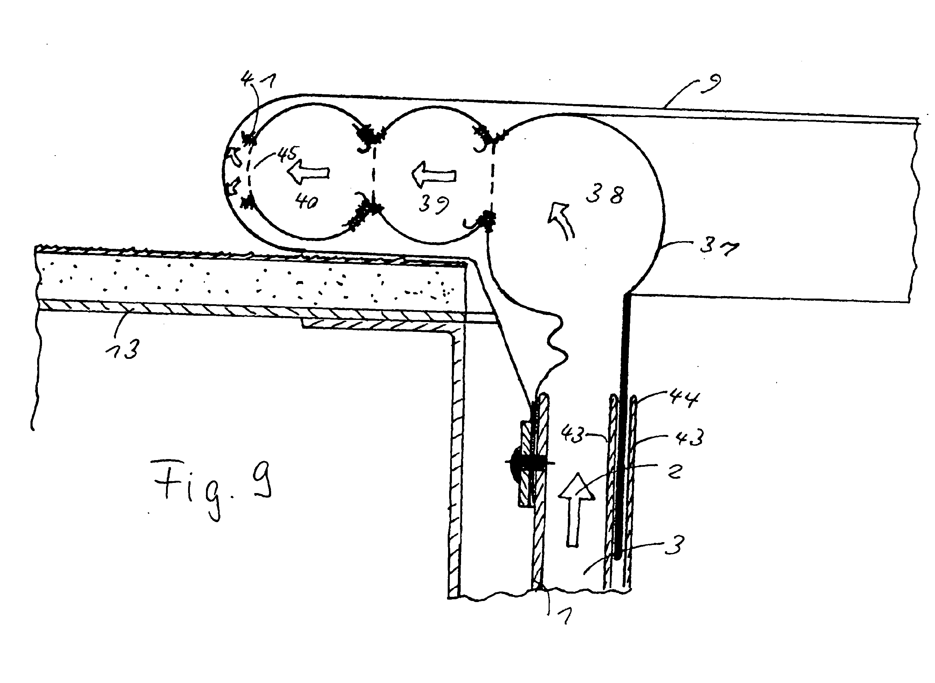

Die Fig. 9 zeigt ein siebtes Ausführungsbeispiel inklusive der "Querausströmmechanik" mittels einer Gasverteilungsmatratze 37. Dieses Teil ist in dem eigentlichen Airbag 9 platziert in einem Gaskanal 13, der stirnseitig oder alternativ rundum im Modulgehäuse 1 integriert ist.

Bei einem Crash bläst das ausströmende Gas die Gaskammer 1 (38) auf. Damit diese die vorgesehene Lage im Airbag 9 außen einnimmt, wird die Gasverteilungsmatratze 37 durch eine Abstützwand 43 gehalten, die mit der Gasverteilungsmatratze 37 aus der Führung 44 parallel zum Gaskanal 3 herausgezogen wird. Nachdem die Gaskammer 1 (38) mit einem vorbestimmten Gasdruck gefüllt ist, füllt sich eine Gaskammer 2 (39) durch Durchgänge in Form von Löchern 45 in einer stabil eingenähten Haltewand 42. Dieser Vorgang geht stufenweise weiter zu Gaskammer 3 (40) und evtl. weiteren Gaskammern, je nach Auslegung. Die Haltewände 42 werden benötigt, um eine "flache" Form der Gasverteilungsmatratze 37 zu gewährleisten. Beim Aufplatzen der Löcher 45 in der letzten Gaskammer, in der Fig. 9 die Gaskammer 3 (40), tritt das Gas in den eigentlichen Airbag ein. Damit ist gewährleistet, dass der eigentliche Airbag 9 in Querrichtung erst einmal "zwangsentfaltet" wird und auch an der Peripherie quer aufgeblasen wird.

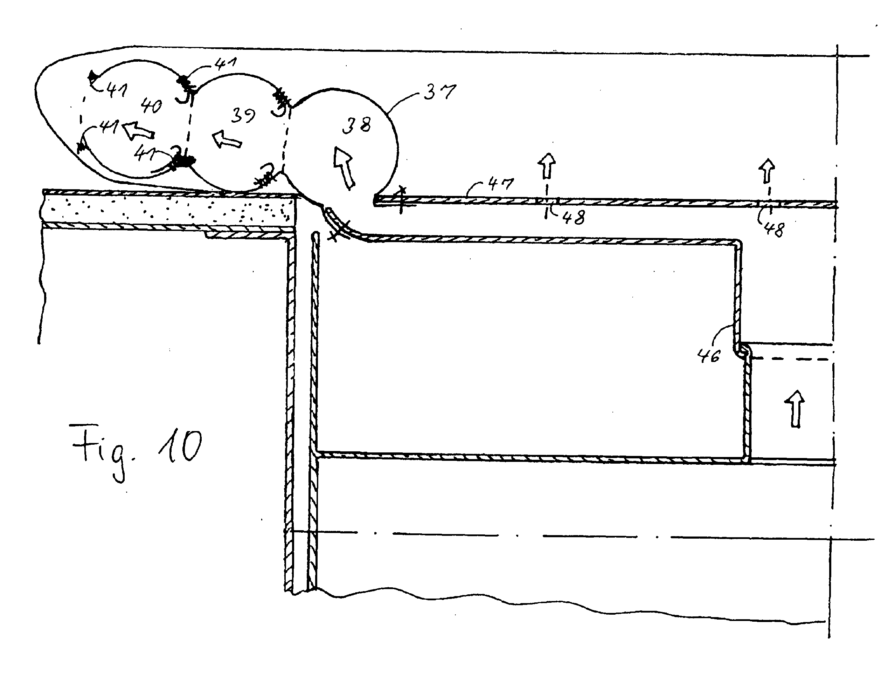

Die Fig. 10 zeigt ein achtes Ausführungsbeispiel ähnlich zu dem, das im Zusammenhang mit der Fig. 9 beschrieben ist. Hier geht die Gasversorgung der Gasverteilungsmatratze 37 von der Mitte des Modulgehäuses 1 aus mittels eines ausfahrbaren Kamines 46. Dieser Kamin 46 verteilt das Gas rundum in eine ringförmige Gasverteilungsmatratze 37. Der Deckel 47 des Kamines 46 ist mit abgestimmten Gasdurchgangslöchern 48 versehen, die in vorbestimmter Menge den Airbag 9 in der Mitte direkt derart aufblasen, dass Aggressivität und Schutzwirkung optimal aufeinander abgestimmt sind. Zum leichteren Öffnen der vernähten Löcher 45 kann die Vernähung 41 derart mit Reissfäden (nicht gezeigt) versehen werden, dass beim Aufblasen der Gaskammern (38 - 40) diese den Reissfaden derart unter Spannung setzen, dass dieser die Vernähung 41 laufmaschenartig schwächt.

Die bisher behandelten Ausführungsbeispiele haben im zusammenfassenden Überblick folgende Wirkungen und Vorteile:

Die Erfindung schafft Vorrichtungen und Verfahren für eine Aufblastechnik eines insbesondere Beifahrerairbags, womit die Aggressivität eines Airbags am Anfang des Aufblasens unter die Verletzungsgrenze gebracht wird. Hierzu blasen beispielsweise Schläuche parallel zur Armaturentafeloberfläche "Pfropfen" aus, die den Airbag "breit" entfalten und auch den Beginn des Aufblasens des Airbags in diese Außenzonen verlegen. Der OOP-Insasse kann also den Airbag nur partiell treffen und am Aufblasen hindern. Vorteilhaft ist diese Technik vor allem, aber nicht ausschließlich, mit vor dem Airbagaustritt geöffneter Airbagklappe nach dem System der "ACTIVE DOOR".

Soweit in den vorliegenden Unterlagen zur Erläuterung der Erfindung auf eine Beifahrer-Airbagvorrichtung Bezug genommen wird, die als Airbagmodul mit rückziehbarem Airbagdeckel ausgestaltet ist, dient dies nur der exemplarischen Darstellung. Die Erfindung ist nicht auf Anwendungen bei Beifahrer-Airbagvorrichtungen und solche mit rückziehbaren Klappen beschränkt, sondern kann auch bei anderen Airbagvorrichtungen als Beifahrer-Airbagvorrichtungen mit Vorteil eingesetzt werden.

Nachfolgend werden noch weitere Ausführungsbeispiele unter Bezugnahme auf die entsprechenden Figuren der Zeichnungen näher beschrieben.

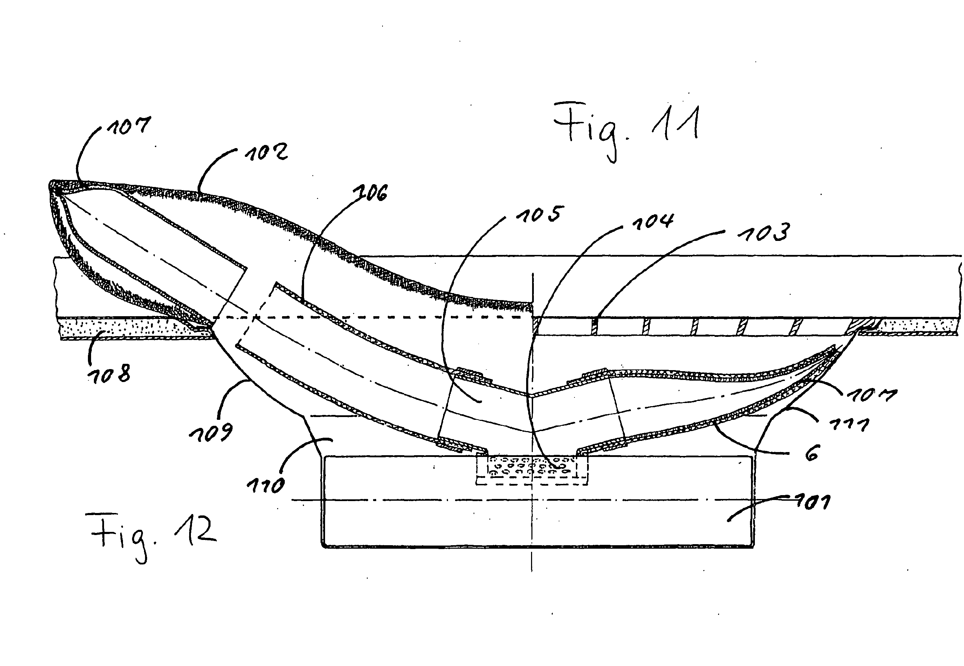

Die Fig. 11 zeigt als neuntes Ausführungsbeispiel eine Alternative, bei der ein Airbagmodul 110 unterhalb einer Belüftungsblende 103 einer Windschutzscheibenentfrostung beifahrerseitig untergebracht ist. Ein Generator 101 liegt mit einem Airbag 102 in einem Airbaggehäuse 109, das gleichzeitig Gehäuse für die Luft der Windschutzscheibenentfrostung ist. Weitere Besonderheit ist, dass der Generator 101 seinen Gasaustritt 104 in einem Gehäuse hat, das als Gasverteiler 105 in zwei Schläuche 106 mündet. In diesen Schläuchen 106 ist ein Geschoss 107 gelagert. Dieses Geschoss 107 kann ein am Ende zur Abdichtung zugenähter Schlauch oder ähnliche "weiche", als Geschoss verwendbare Teile sein. Die Fig. 11 zeigt auch einen Schlauch 106 und ein Geschoss 107 zusammengefaltet positioniert auf einer schrägen Ebene 111 des Airbaggehäuses 109 liegend vor einer Auslösung.

Die Fig. 12 zeigt bei der Ausführungsform gemäß der Fig. 11 den beim Crash entfalteten Schlauch 106 und das Geschoss 107 in Funktion. Der entfaltete Schlauch 106 rutscht über die schräge Ebene 111 des Airbaggehäuses 109 auf die Oberfläche der Armaturentafel 108 und nimmt dabei breitflächig den Airbag 102 mit. Die entfalteten Schläuche 106 blasen das Gas aus dem Airbagmodul 110 auf die Oberfläche der Armaturentafel 108.

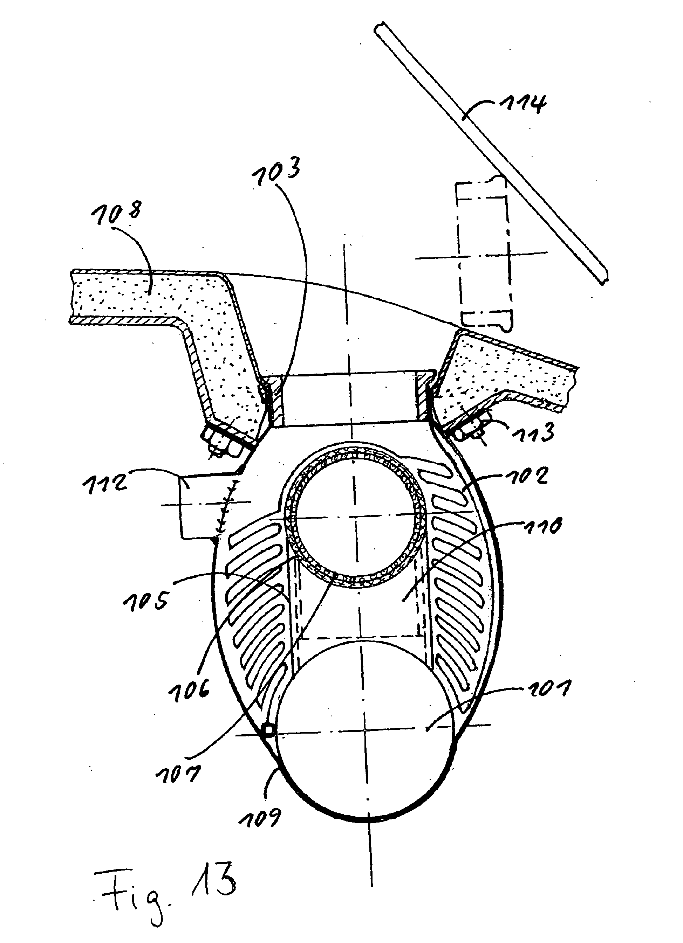

Die Fig. 13 zeigt für die Ausführungsform gemäß der Fig. 11 im Schnitt eine derartige Anordnung des Airbagmoduls 110 in um 90 ° gedrehter Ansicht. Die Kombination Airbaggehäuse 109 und Luftführung mit dem Luftanschluss 112 ist entsprechend an der Armaturentafel 108 unterhalb der Windschutzscheibe befestigt.

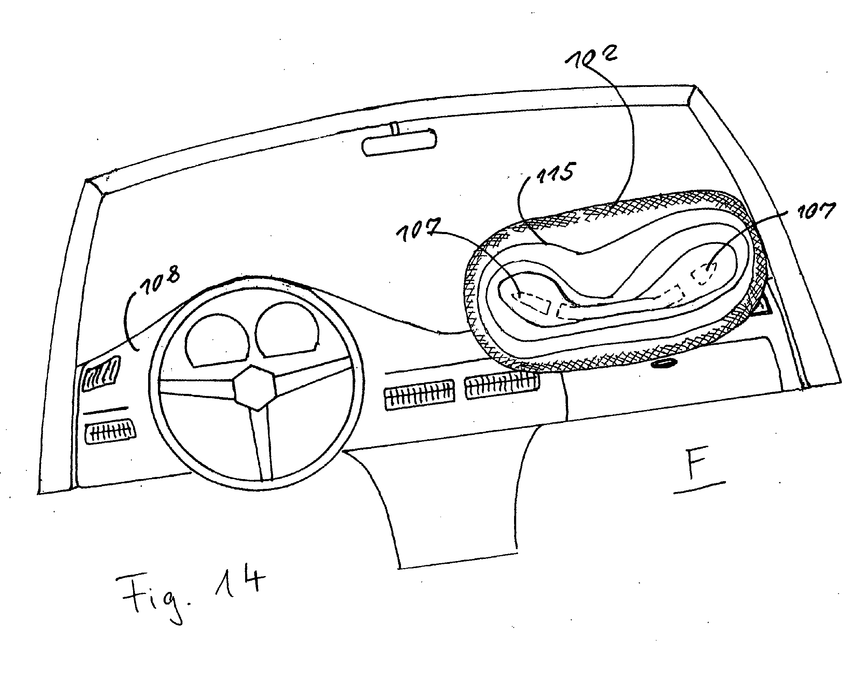

Die Fig. 14 zeigt die prinzipielle Anordnung der Airbagvorrichtung gemäß dem Ausführungsbeispiel nach den Fig. 11 bis 13 schematisch in einem Fahrzeug F. Dabei zeigen die "Linien" 115 die Entfaltungsschritte des Airbags 102. Nach dem Crash lässt sich das Airbagmodul 110 ohne zerstörtes Umfeld auswechseln.

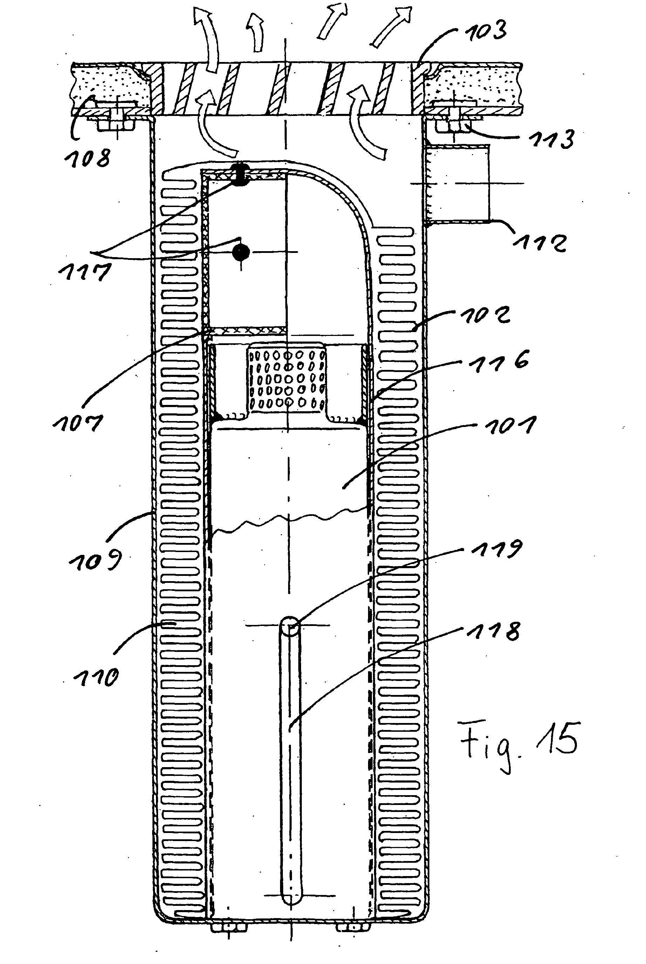

Die Fig. 15 zeigt als zehntes Ausführungsbeispiel die Unterbringung eines Beifahrerairbags in senkrechter Anordnung unterhalb einer Seitenscheiben-Belüftungsblende 103. Auch hier ist das Airbaggehäuse 109 gleichzeitig Luftführung mit dem gezeigten Luftanschluss 112. Die Airbagmodulabdeckung ist gleichzeitig die Belüftungsblende 103. Um den Generator 101 herum befindet sich ein bei Gasdruck ausfahrendes Ausblasgehäuse 116. Das Ausblasgehäuse 116 bewegt sich bei Gasdruck in den Grenzen, die durch einen Schlitz 118 und einen Anschlag 119 vorgegeben sind. Im "Kopf" des Ausblasgehäuses 116 befindet sich ein "Geschoss" 107 zum Ausbringen des Airbags 102 auf der Oberfläche der Armaturentafel 108. Damit das Ausblasgehäuse 116 beim Crash zuerst ausgefahren wird und erst in Endstellung das Geschoss 107 ausbläst, ist dieses, entsprechend abgestimmt, mit Schernieten 117 befestigt.

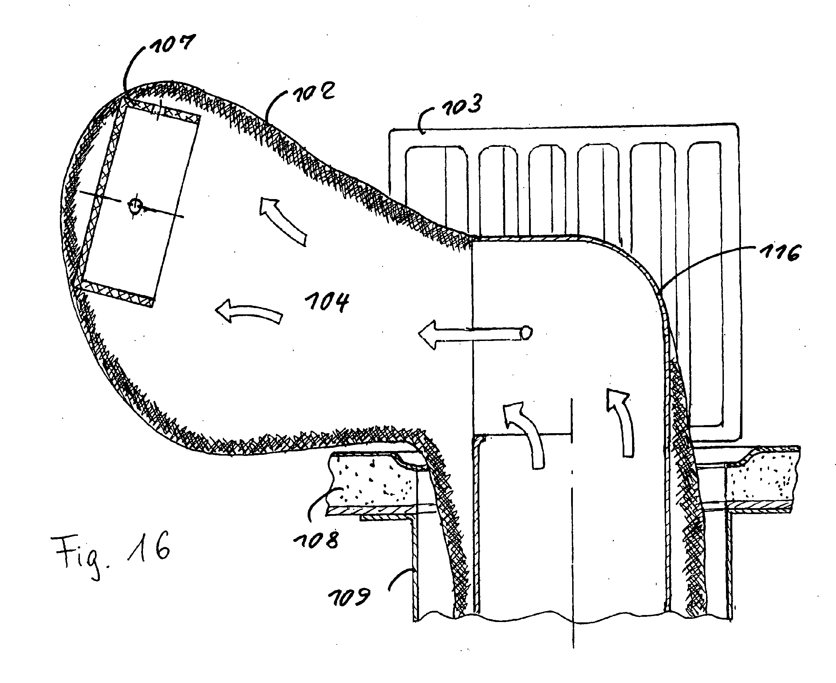

Die Fig. 16 zeigt bei der Ausführungsform gemäß der Fig. 15 den Zustand des ausgefahrenen Ausblasgehäuses 116 beim Crash. Das Ausblasgehäuse 116 hat dabei die Belüftungsblende 103 aufgestoßen. Der Gasdruck hat nach dem Ausfahren des Ausblasgehäuses 116 die Schernieten 117, mit denen das Geschoss 107 befestigt war, abgeschert. Das Geschoss 107 reißt den Airbag 101 aus seinem Airbaggehäuse 109 in horizontale Richtung auf die Armaturentafel.

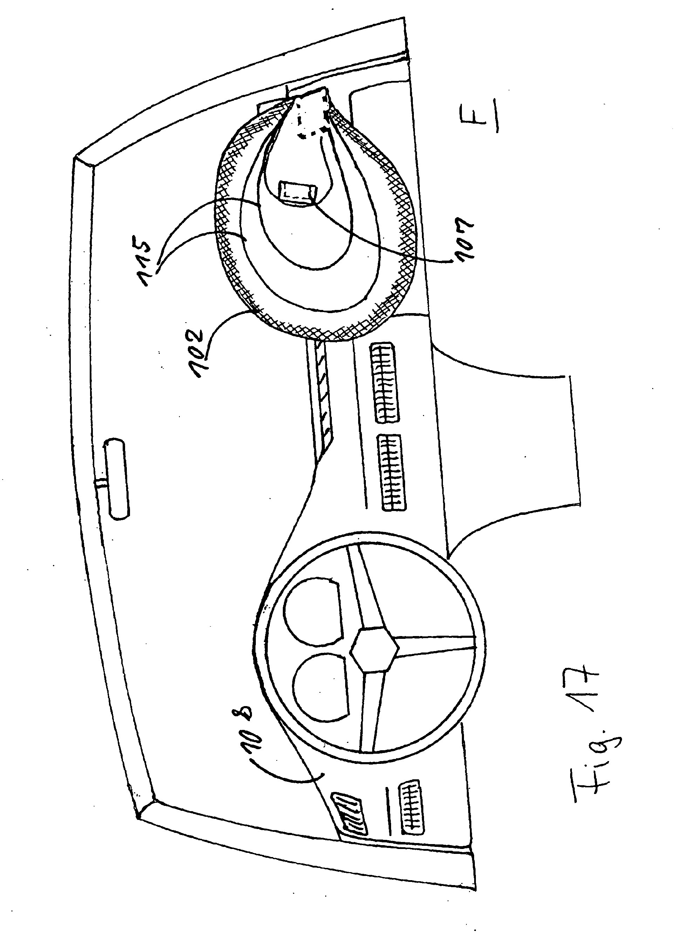

Die Fig. 17 zeigen zum Ausführungsbeispiel gemäß den Fig. 15 und 16 die Anordnung in der Armaturentafel 108. Die Linien 115 zeigen die Ausblasbewegung des Airbags 102. Selbstverständlich kann in Ausblasrichtung parallel zur Seitenscheibe auch dieser Bereich alternativ bzw. gleichzeitig beaufschlagt werden. Bei alternativer Anordnung dieses Airbagsystems in der Mitte der Armaturentafel 108 müsste und könnte der Airbag 102 selbstverständlich in 2 bzw. 3 Richtungen ausgeblasen werden mit einem entsprechend geänderten Ausblasgehäuse 116. Nach dem Crash ist das Airbagmodul 110 ohne Zerstörung des Umfeldes leicht auswechselbar.

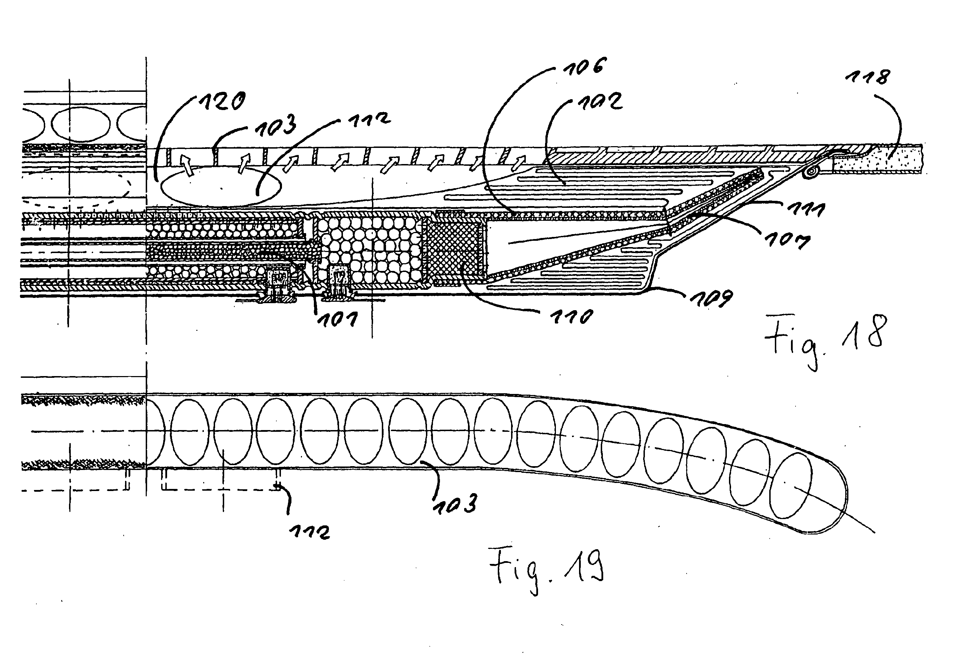

In der Fig. 18 ist eine weitere Alternative in Form des elften Ausführungsbeispieles gezeigt, bei dem ein großer Airbag 102, der Fahrer- und Beifahrerairbagbedarf simultan abdeckt, installiert ist. Dieser Airbag 102 liegt unter der Belüftungsblende 103 für die Windschutzscheibe. Auch hier ist das Airbaggehäuse 109 gleichzeitig Luftkanal 120, hier gezeigt mit seitlichem Luftanschluss 112, der mit dem Heizungsgehäuse (nicht gezeigt) verbunden ist. Die Fig. 18 zeigt den im Ausgangszustand gefalteten, im Airbagmodul 110 liegenden Schlauch 106 mit dem Geschoss 107. Der Schlauch 106 ist umgeben mit dem entsprechend gefalteten Airbag 102 für schnellen widerstandsarmen Austritt des Airbags. Vorteilhafterweise wird der Schlauch 106 stirnseitig an dem Gehäuse 121 der entsprechend langen, eventuell gekrümmt der Linie der Belüftungsblende 103 folgenden Generatorform angebracht.

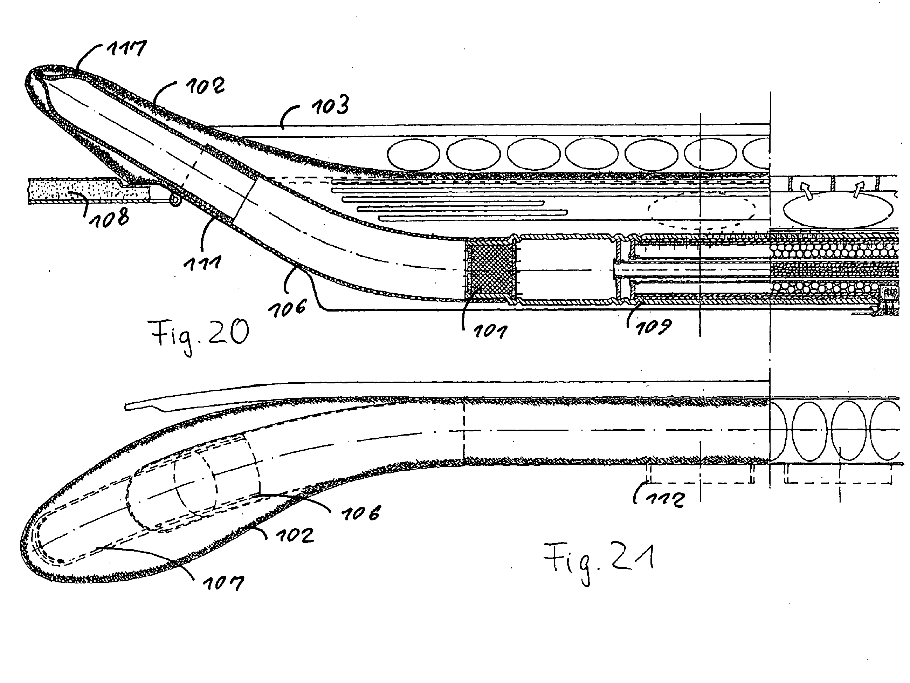

Die Fig. 19 zeigt die Draufsicht der Belüftungsblende 103 mit dem seitlichen Luftanschluss 112 des gemeinsamen Airbaggehäuses 109 für Airbag 102 und die Luftverteilung für die Windschutzscheibenbelüftung für die Version gemäß der Fig. 18. Die Fig. 20 zeigt die in der Fig. 18 gezeigte Anordnung im Crash. Der Schlauch 106 entfaltet sich durch den Gasdruck, und das Geschoss 107 nimmt den Airbag 103 auf die Oberfläche der Armaturentafel 108 mit, indem das Geschoss 107 gleichzeitig den Airbag 102 in Richtung A-Säulen des Fahrzeuges (nicht gezeigt) verbreitert. Die Fig. 21 zeigt die Anordnung der Fig. 20 von oben mit der aufgeklappten Belüftungsblende 103.

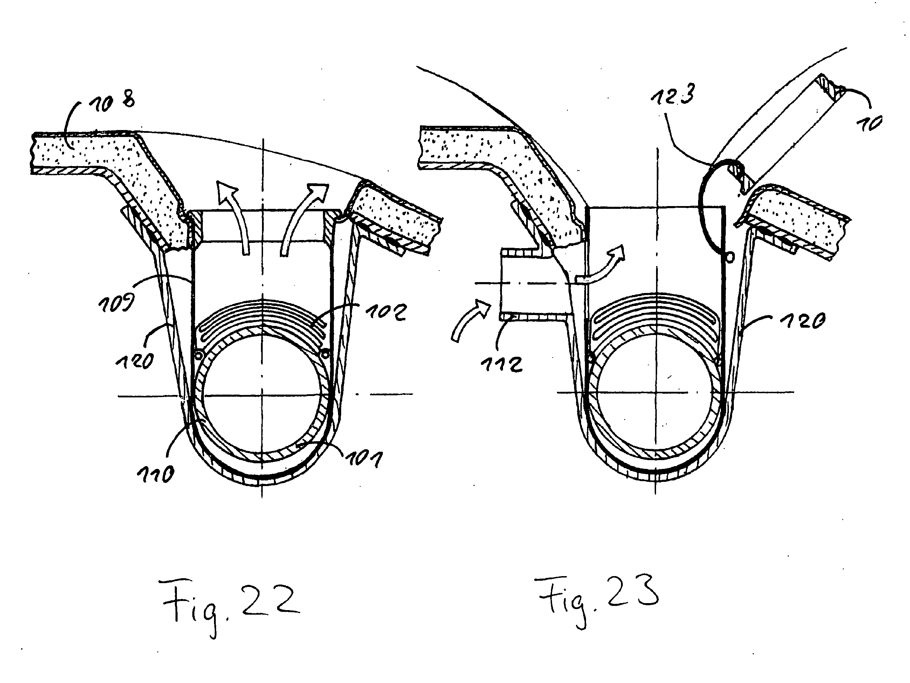

In der Fig. 22 ist im Schnitt das von oben in den Luftkanal 20 eingesetzte Airbagmodul 110 gemäß der Variante basierend auf der Fig. 18 gezeigt. Um die Armaturentafel 108 nicht demontieren zu müssen, ist es von besonderem Vorteil, bei diesem großen Airbag 102 das Airbagmodul 110 jedenfalls von oben bzw. von außen einzusetzten. Dazu braucht es einen zusätzlichen Luftkanal 120 als Verstärkung des Belüftungsschlitzes 122, in den die Belüftungsblende 103 und das Airbagmodul 110 eingesetzt werden. Die Fig. 23 zeigen dazu den Luftanschluss 112 und die durch den Airbag beim Crash hochgekippte Belüftungsblende 103, die gegen Wegfliegen durch Bänder 123 o.ä. gehalten wird.

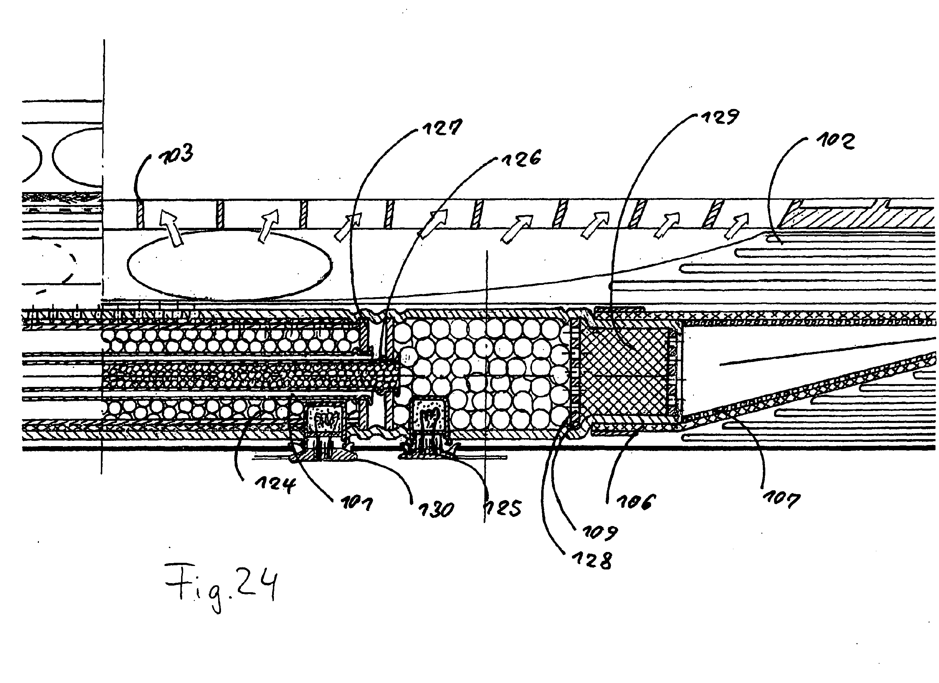

Die Fig. 24 zeigt für das vorstehend erläuterte Ausführungsbeispiel im Schnitt die Hälfte des beidseitig gleichen speziellen Generators 101 für schlankes, breites Package. Bei diesem Generator 101 ist die zweite Generatorstufe 124 in der Mitte angeordnet und bringt sein Gas direkt in den Airbag 102, da man davon ausgeht, dass bei Zündung der zweiten Generatorstufe 124 der Airbag 102 schon entsprechend groß durch die erste Generatorstufe 125 aufgeblasen ist. Die erste Generatorstufe 125 ist links und rechts der mittig platzierten zweiten Generatorstufe 124 angeordnet, damit das Gas direkt stirnseitig in die Schläuche 106 geblasen wird. Vorzugsweise wird eine Seite der geteilten ersten Generatorstufe 125 gezündet. Durch ein Verbindungsrohr 126, das mit Brennstoff gefüllt ist, wird die andere Seite mit gezündet. Da der Beifahrer kein Lenkrad vor sich hat, kann diese Seite sich etwas später aufblasen. Damit sich die zweite Generatorstufe 124 nicht durch die Hitze der ersten Generatorstufe 125 entzündet, sind die Zwischenwände 127 und das Zwischenrohr 126 doppelwandig ausgeführt. Wie technisch vorzuziehen, sind zwischen der Pyrotechnik des Generators Lochbleche 128 und Stahlwolle 129 angebracht. Beide Generatorstufen 124 und 125 werden so in direkter Nachbarschaft gezündet durch eine Zündung 130.

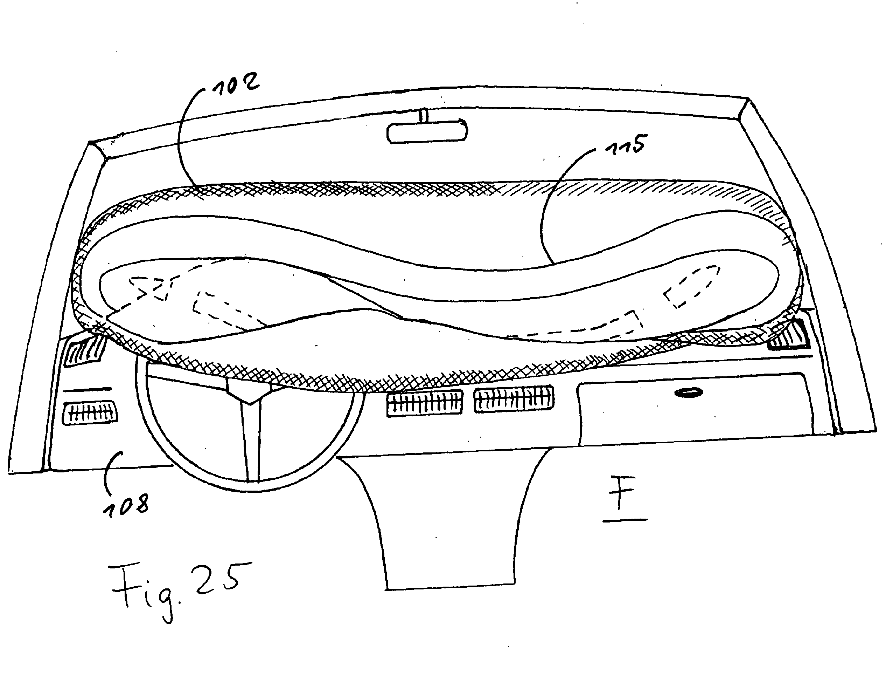

Die Fig. 25 zeigt die Anordnung des Airbags 102 über der kompletten Armaturentafel. Die Linien 115 zeigen die Entfaltungsstufen des Airbags 102.

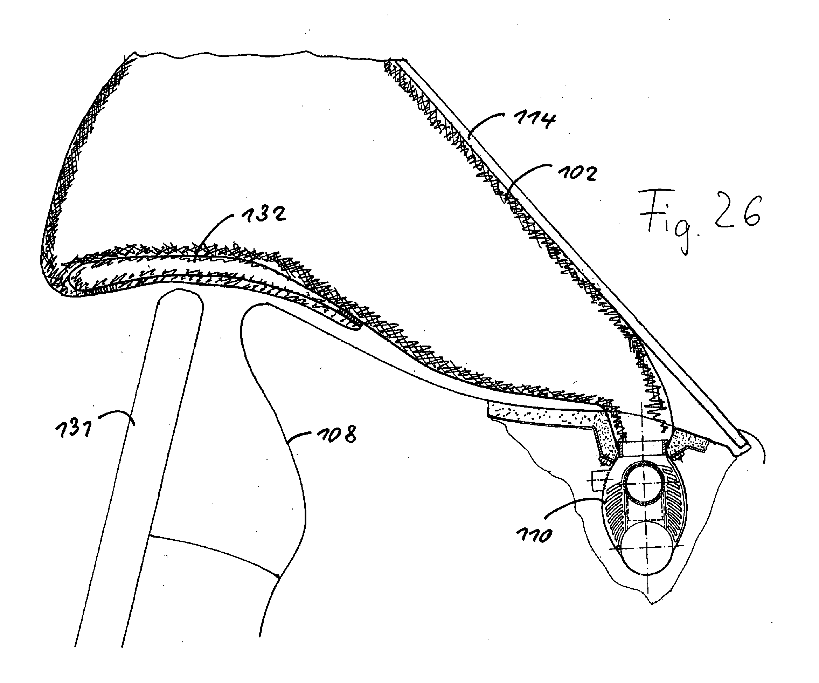

Da es fahrerseitig vor allem notwendig ist, dass sich der Airbag 102 sofort hinter dem Lenkrad 131 nach unten vor das Lenkrad 131 bewegt, ist hier erfindungsgemäß vorgeschlagen, den sich nach unten bewegenden Airbagteil zuerst parallel zum Airbaggewebe festzuklammern. Dies ist machbar, wie in der Fig. 26 gezeigt ist, mittels Klettbändern 132 oder einer entsprechend abgestimmten Vernähung (nicht gezeigt).

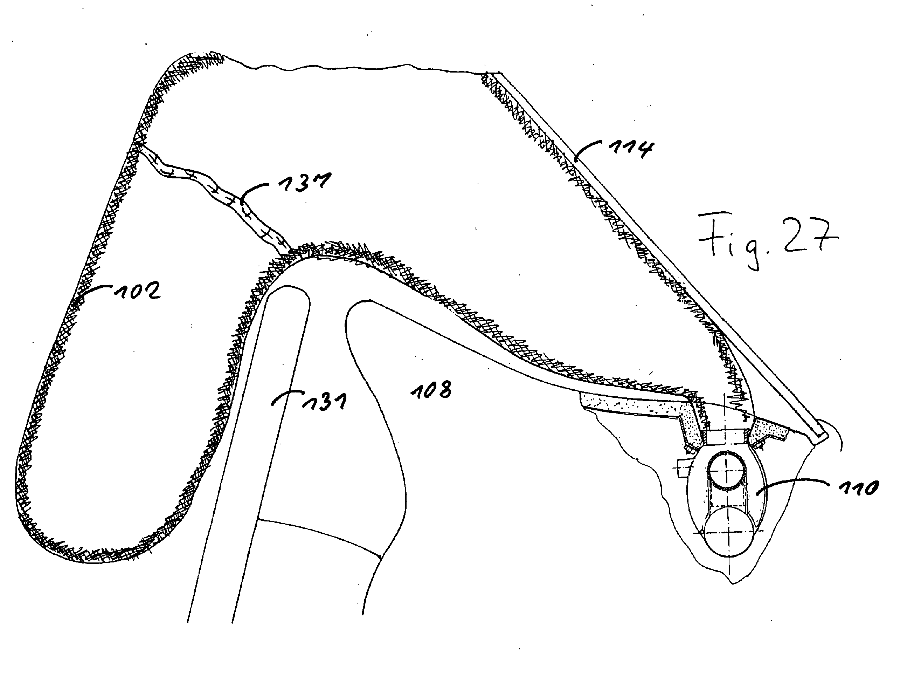

Die Fig. 27 zeigt den weiteren Fortschritt des Aufblasens des Airbags 102, wenn die Klettbänder 132 bzw. die Vernähung gelöst ist. In diesem Falle wird vorzugsweise der Airbag 102 zusätzlich durch Fangbänder 136 in eine entsprechende Form gebracht werden, wie technisch bevorzugt.

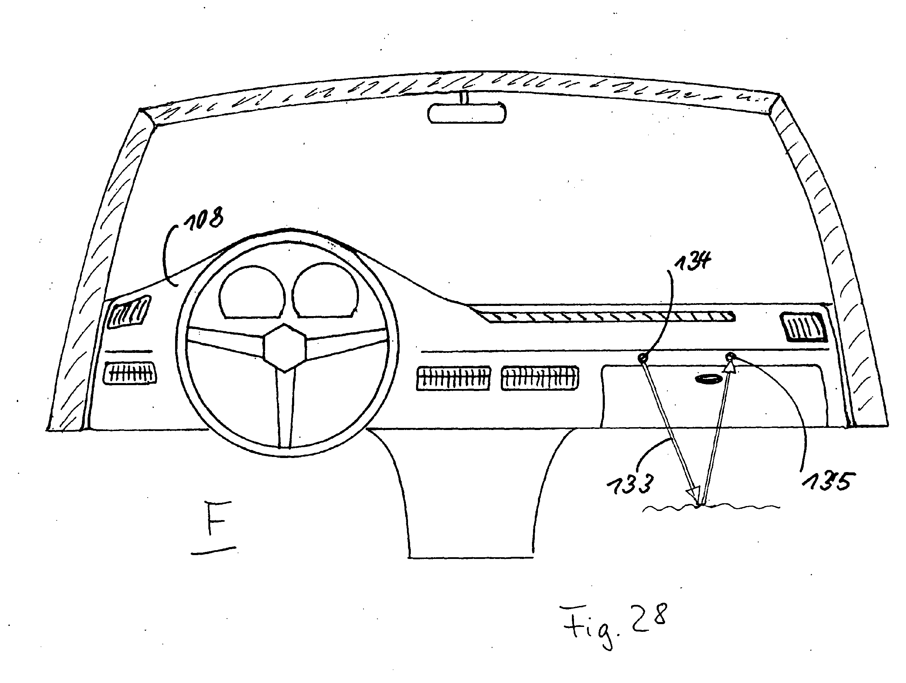

Bei allen Anstrengungen, einen nicht aggressiven Airbag 102 anzuwenden, bleibt ein Restrisiko, wenn man einen unbefestigten Kindersitz (nicht gezeigt) rückwärts gegen die Armaturentafel 108 stellt. Hierzu sind in der Fig. 28 Erkennungsalternativen gezeigt. Ein Laser-, Infrarot- oder Ultraschallstrahl 133 wird in Zeitabständen abgeschickt und bei keiner Abdeckung der Sendequelle 134 und Empfangsquelle 135 anders ausgewertet, wenn z.B. ein Kindersitz im Weg ist. Ein Rechner sammelt diese Information. Ist über eine gewisse Zeitdauer dem Strahlengang permanent etwas im Wege, wird der Beifahrerbag abgeschaltet und der Fahrer über Leuchtsignal informiert. Bei Verschmutzung der Linsen für Strahlenaus- oder -eingang, wird ebenfalls mittels Leuchtsignal auf die Nichtfunktion des Beifahrerbags hingewiesen. Auch kapazitive und andere Sender und Empfänger sind möglich.

Es folgen weitere Alternativen der Airbag-"Querentfaltung" für die Beifahrer- und Fahrerseite, ohne dass einzelne nachfoglende Ausführungen auf die eine oder andere Seite zwingend beschränkt sind.

Grundsätzlich geht es bei der Querentfaltung insbesondere der Beifahrerseite um die Bündelung der Gasenergie mit ihrem Druck von ca. 50 bar in einem Rohr oder Schlauch. In diesem Rohr, Schlauch oder sonstigem Kanal befindet sich erfindungsgemäß ein "Geschoss" z.B. in Form eines zugenähten Schlauches. Dieses Geschoss erhält durch Druck mal Fläche die nötige Kraft, das Gewebe "quer" zu seiner normalen Entfaltungsrichtung auszubreiten. Zweck der Erfindung ist es, damit die Ausbreitungsfläche des Airbags um ein Mehrfaches zu vergrößern, um so die u.U. tödliche Aggressivität des Airbags im Nahbereich zu eliminieren. Alternativ zum "Geschoss" kann auch der Schlauch nach innen gestülpt und mit einer Aufreißnaht zugenäht werden. Beim Crash verlängern sich hierdurch die Ausblasschläuche um das Doppelte und stoßen somit den Bag in der gewünschten Querrichtung.

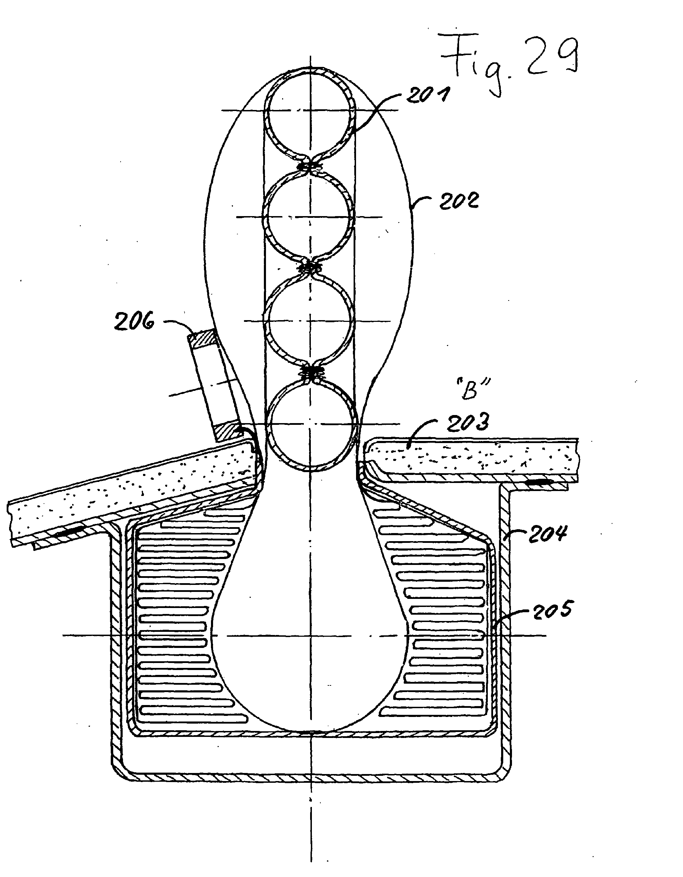

In dem "Schnitt" in der Fig. 29 ist gezeigt, wie man den "Ausblasschlauch" 201 abnähen kann, wenn die Defrosteröffnung 107 schmaler ist als der notwendige Schlauchquerschnitt, um den Gasfluss durchzubringen. Es ist vorteilhaft, dass der Ausblasschlauch 201 nicht das Modul 205 bzw. die Defrosteröffnung 207 aufweitet, da die Armaturentafel 203 nicht zerstört wird, und damit in der Schadensermittlung eine Einstufung um bis zwei Kaskoklassen günstiger erfolgen kann. Das Modul 205 wird hierzu von der Seite in einen Kanal 204 eingeschoben, der derart geformt ist, dass das Modul 205 passend in die Defrosteröffnung 207 unterhalb der Defrosterblende 206 richtig positioniert ist.

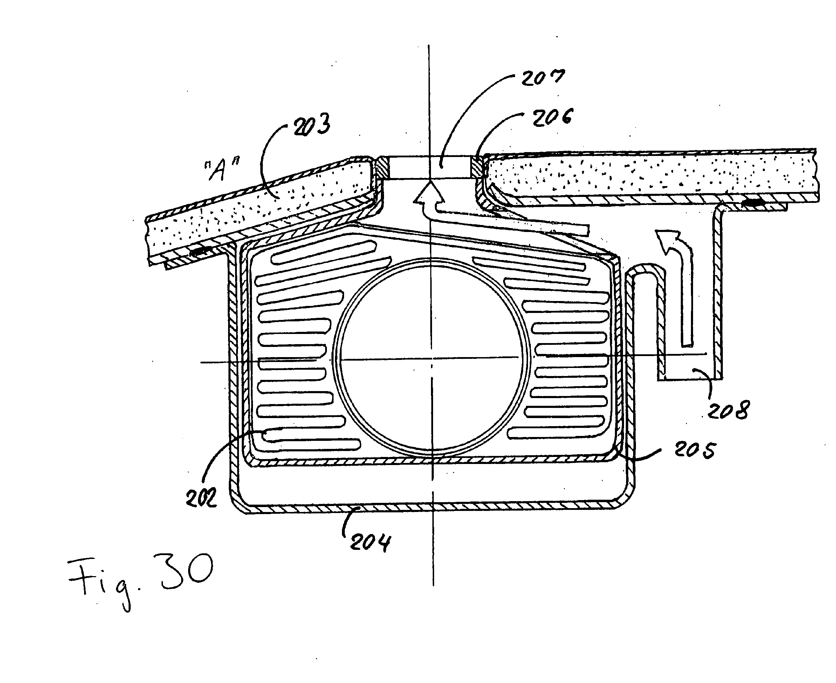

In der Fig. 30 ist im Schnitt gezeigt, wie an passender Stelle das Modul 205 im Kanal 204 derart platziert und gestaltet ist, dass die Defrosterluft über dem Airbag 202 in die Defrosteröffnung 207 gelangt. Hierzu ist der Kanal 204 derart gestaltet, dass das Modul 205 und der Luftdurchgang und Luftanschluss 208 praxisgerecht ausgelegt sind.

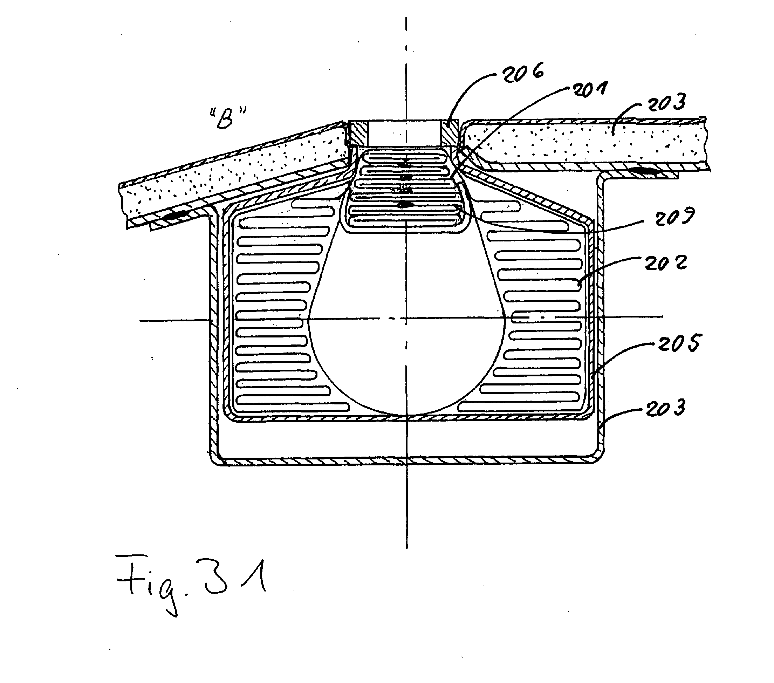

In der Fig. 31 ist im Schnitt "B" gemäß der Fig. 29 gezeigt, wie der Ausblasschlauch 201 mit seinen Ausblasgeschossen 209 direkt unter der Defrosterblende 206 gefaltet platziert ist. Beim Crash entfaltet sich der Ausblasschlauch 201, drückt die Defrosterblende 206 aus der Defrosteröffnung 207 und schiebt seine Schlauchmündung 210 in jedem Falle auf die Armaturentafel 203. Hierdurch wird garantiert, dass der Druck direkt in den Airbag 202 sich entspannt, ohne, wie heute üblich, auch das Modul 205 unter Druck zu setzen. Dies ist notwendig, damit sich das Modul 205 nicht verformt und damit ohne Schwierigkeiten durch ein neues ersetzt werden kann.

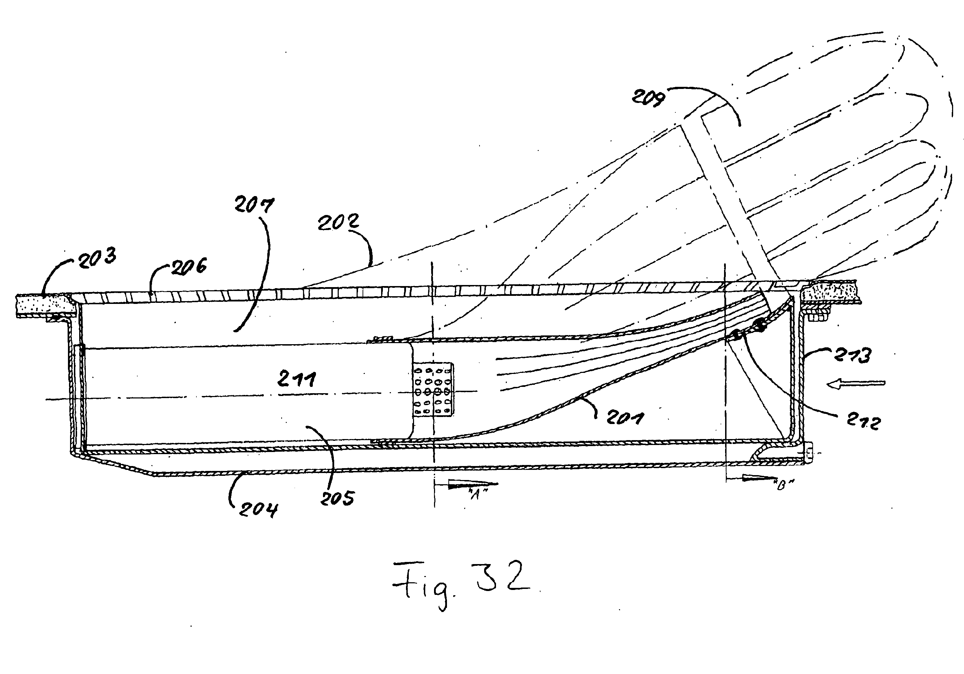

In der Fig. 32 ist der Querschnitt zu den Schnitten "A" und "B" in den Fig. 29 bis 31 zu sehen. Das Gas aus dem Generator 211 wird in den Ausblasschlauch 201 geleitet, der am Generator 211 befestigt ist. Der Ausblasschlauch 201 ist derart auf einer Auflagerampe 212 zusammengefaltet, direkt unter der Defrosterblende befestigt, dass er sich, sobald er Druck bekommt, auf die Armaturentafel 203 entfaltet. Strichpunktiert ist diese Position in der Fig. 32 gezeigt samt Ausblasgeschosse 209. Man erkennt auch die Formgestaltung des Kanals 204, der mitsamt seinem Deckel 213 so gestaltet ist, dass zwangsgeführt die richtige Position des Moduls 205 im Kanal 204 unter der Defrosterblende 206 erreicht wird.

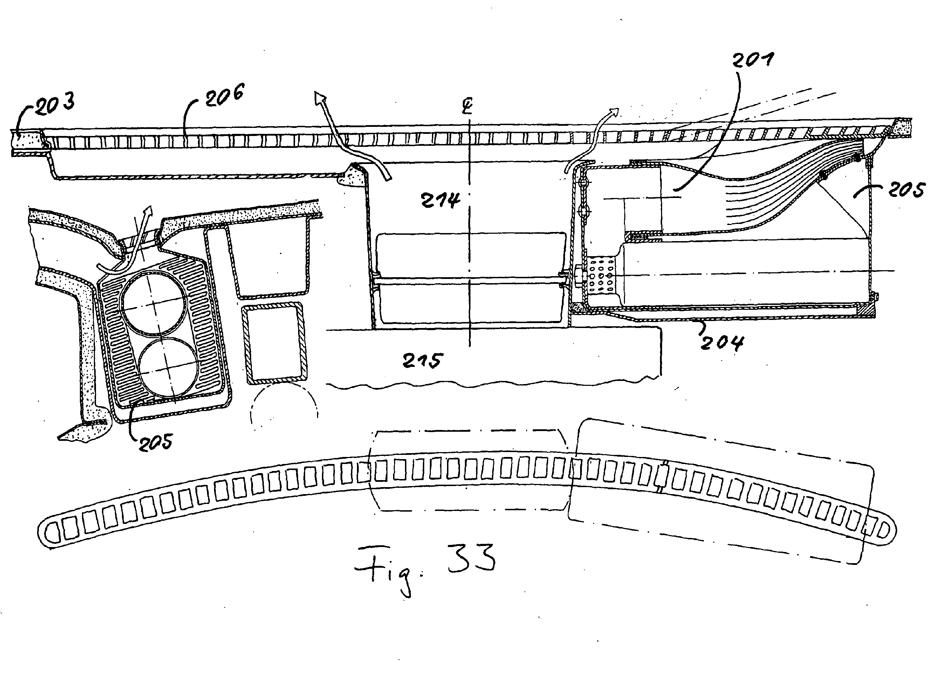

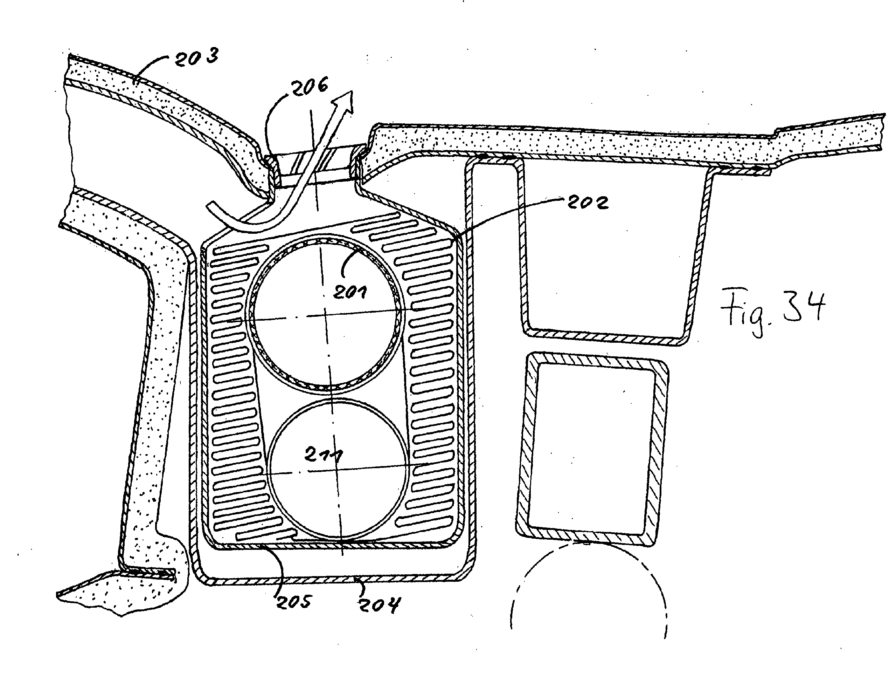

In der Fig. 33 ist eine Anordnung gezeigt, bei der der Luftkanal 214, wie heute üblich, aus der Heizung 215 mittig belassen wird. Das gesamte Modul 5 wird seitlich beigepackt, wie gezeigt ist. Um das Modul 205 zu verkürzen, werden Generator 211 und Ausblasschlauch 201 aufeinander gepackt und das Gas entsprechend "umgeleitet". Die Fig. 34 zeigt als Schnittbild um die

Fig. 33 eine typische Anordnung des seitlich "angedockten" Moduls. Der Kanal 204 ist hier gleichzeitig aus einem einzigen Formteil zuständig für die Luftführung der Front- und seitlichen Entfrostung und als Behälter für das eingeschobene Modul 205.

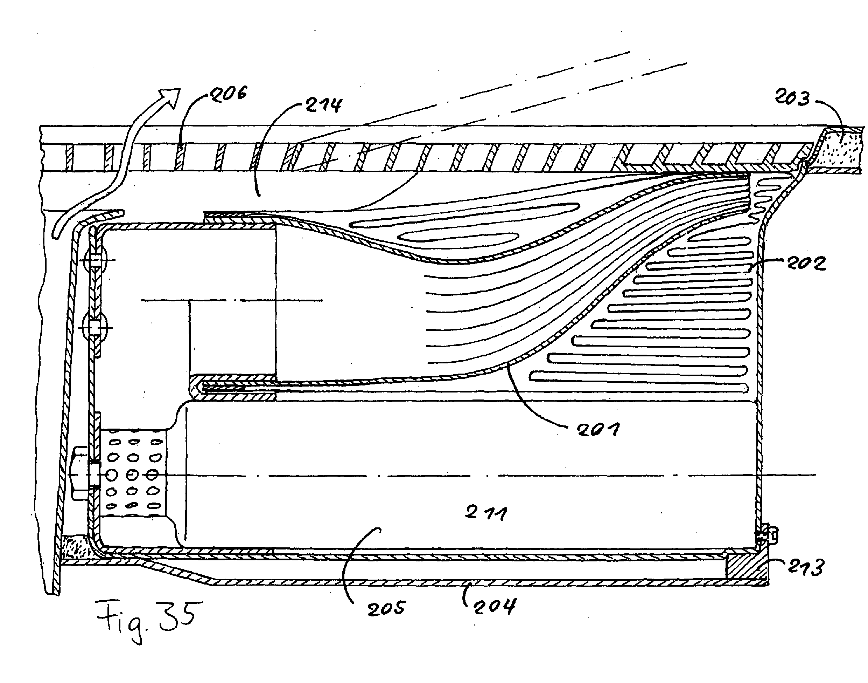

Die Fig. 35 zeigt den Querschnitt durch das Modul, ähnlich wie in der Fig. 33 gezeigt. Hier ist der Ausblasschlauch 201 derart im Airbag 202 eingepackt, dass er vom Ausblasschlauch 201 gezielt "quer" entfaltet wird beim Crash.

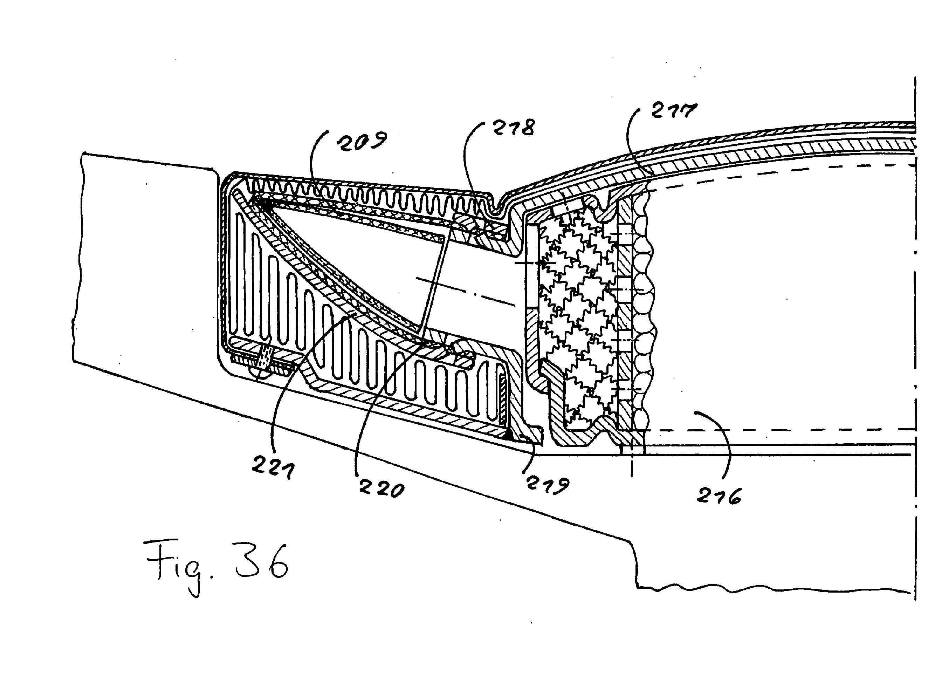

Auch für den Fahrerairbag sorgt die Technik des "Querentfaltens" ebenso wie beim Beifahrerbag für eine breite Verteilung der Airbagaggressivität im Nahbereich und sichert damit Überleben bei OOP (out of position). In der Fig. 36 ist im Schnitt eine derartige Anordnung gezeigt. Um den entsprechend, wie gezeigt, Fahrerbaggenerator 216 ist eine Schale 217 mit den Schlauchanschlüssen 218 "gestülpt" und mittels Bördelung 219 lagegesichert. An der Schale 217 werden 3 - 6 Schläuche 220 befestigt. Die verclinchte Befestigung der Schläuche 220 ist gleichzeitig Auflage und Führung 221 der Schläuche 220. Die Ausblasgeschosse 209 liegen gefaltet in den Schläuchen 220, umgeben von dem entsprechend um die Schläuche 220 gefalteten Airbag 202.

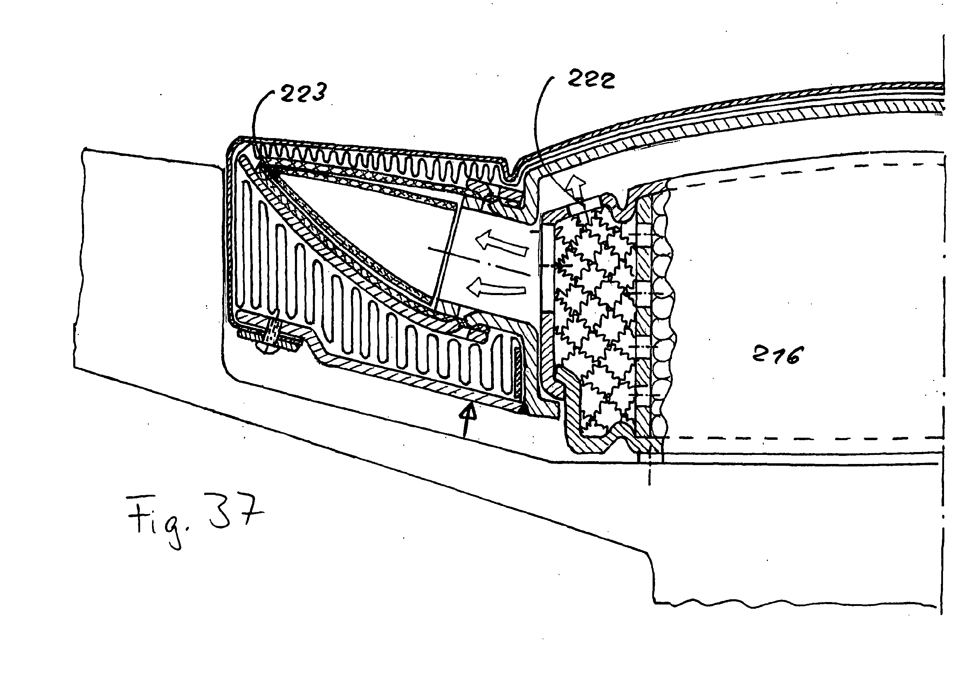

Beim Crash zeigt die Fig. 37 eine Anhebung der Schale 217 durch den Druck des Fahrerairbaggasgenerators 216 durch entsprechend angebrachte Gasaustrittslöcher 222. Das ist nur eine Alternative wenn es erforderlich ist, die Schläuche 220 mit ihrer Spitze 223 anzuheben.

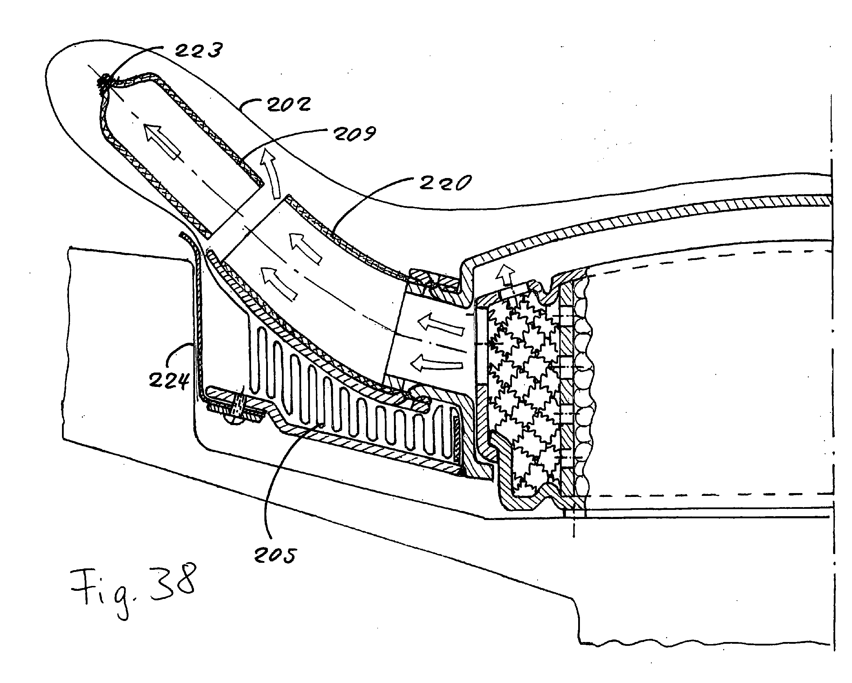

Die Fig. 38 zeigt die nächste Stufe im Crash. Die Schläuche 220 blasen sich auf und sprengen damit die Abdeckhaut 224 des Moduls 205. Die "Spitze" 223 des Ausblasgeschosses 209 schiebt das Textil des Airbags 202 quer nach außen. Die Ausblasgeschosse 209 ziehen den Airbag 202 nach außen, vergleichbar einem Papiertaschentuch aus der Schachtel. Die Abdeckhaut 224 ist jeweils mittig über den Schläuchen 220 derart vorgeschädigt, dass sie gezielt dort aufplatzt, wo die Schläuche 220 am dicksten werden.

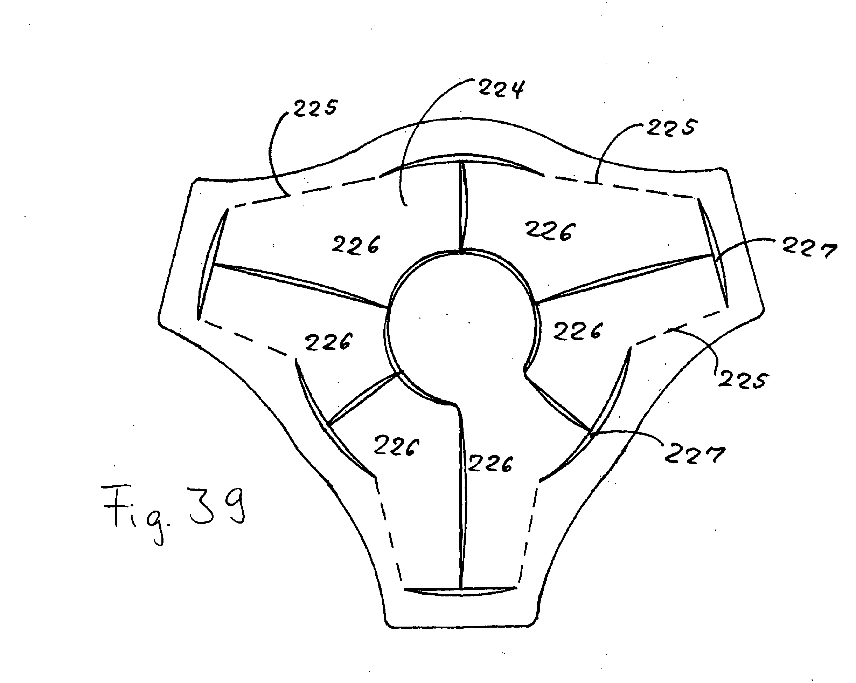

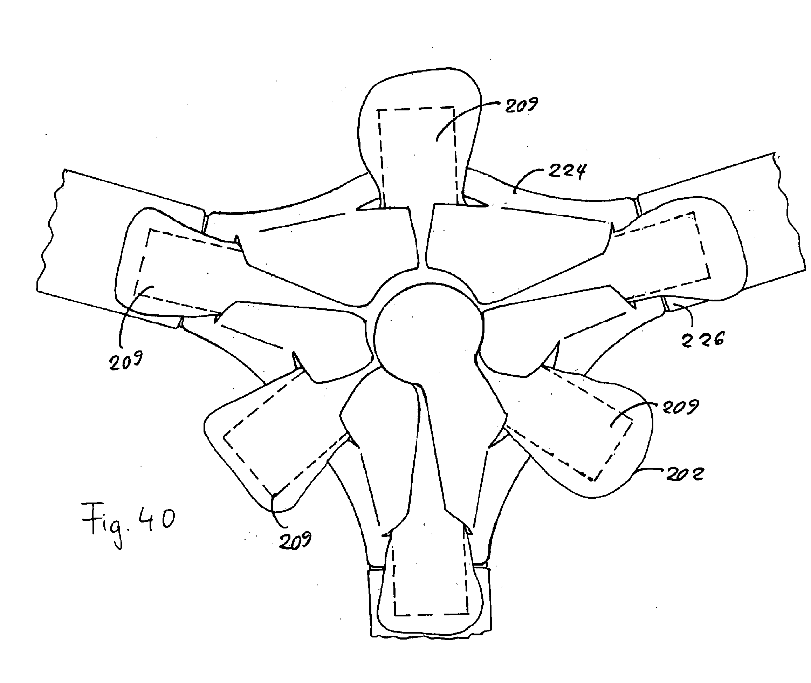

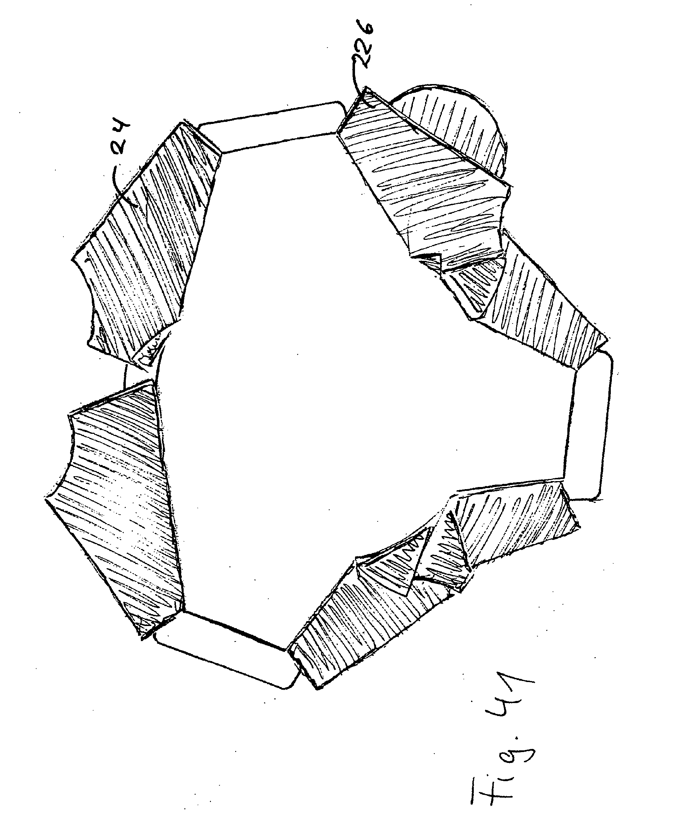

Die Fig. 39 zeigt ein Beispiel eines Fahrerairbagmoduls 205 passend für ein Dreispeichenlenkrad 226 mit "6" Schläuchen 220. Die gestrichelten Linien 225 stellen die Knickkanten der Segmente 226 der Abdeckhaut 224 dar. Die Fig. 40 zeigt die aufgerissene Abdeckhaut 224 und die austretenden Ausblasgeschosse 209, die das Textil des Airbags 202 mitnehmen. Die Fig. 41 zeigt die in Segmente 226 zerteilte und aufgerissene Abdeckhaut 224.

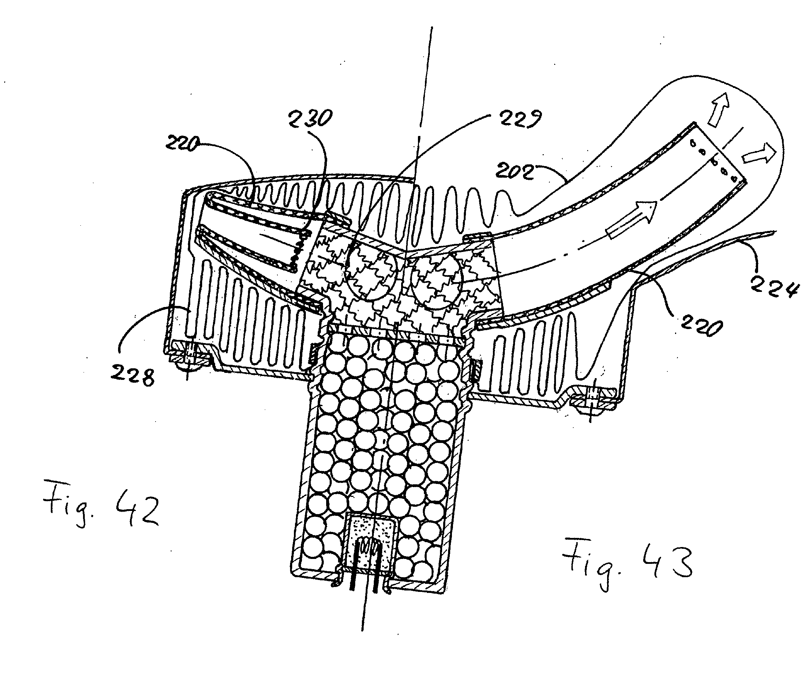

Die Fig. 42 zeigt eine weitere Alternative eines Fahrerairbags 28 im halben Schnitt als sechzehntes Ausführungsbeispiel. Der Gasverteiler 229 ist oben aufgesetzt für kleinst möglichen Durchmesser und der Fahrerbaggenerator 216 darunter gesetzt. In diesem Beispiel ist statt des "Ausblasgeschosses" 209 ein in den Schlauch 220 umgestülptes Schlauchende 230 des gleichen Schlauches 220 gesteckt und am Ende zugenäht. Der Gasdruck schießt das eingestülpte Schlauchende 230 nach außen und verlegt damit den Gasaustritt auf einen entsprechend großen Durchmesser zum Abbau der Aggressivität durch großflächigen Austritt des Fahrerairbags 228, wie in der Fig. 43 gezeigt ist. Auch hier zerreißen die sich aufblasenden und sich verlängernden Schläuche 220 die Abdeckhaut 224, wie in den Fig. 39 bis 41 gezeigt ist.

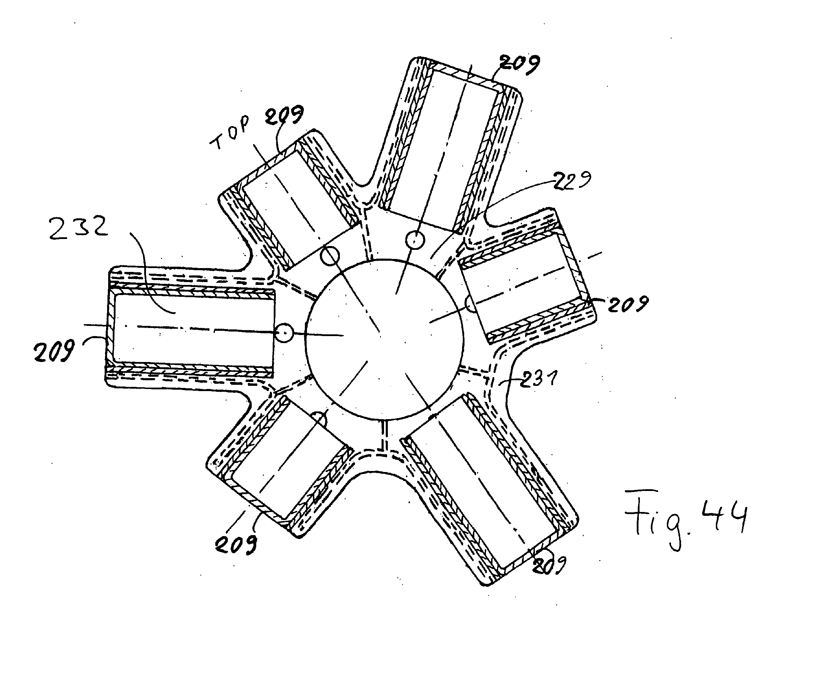

In der Fig. 44 ist statt der Schläuche 220 zur Gasverteilung eine Altenative gezeigt, bei der der Gasverteiler 229 aus zusammengenähten Gewebehälften 231 besteht, die das Gas sternförmig verteilen. In der Fig. 44 sind Ausblasgeschosse 209 jeweils in den Gasverteilungskanälen 232 untergebracht.

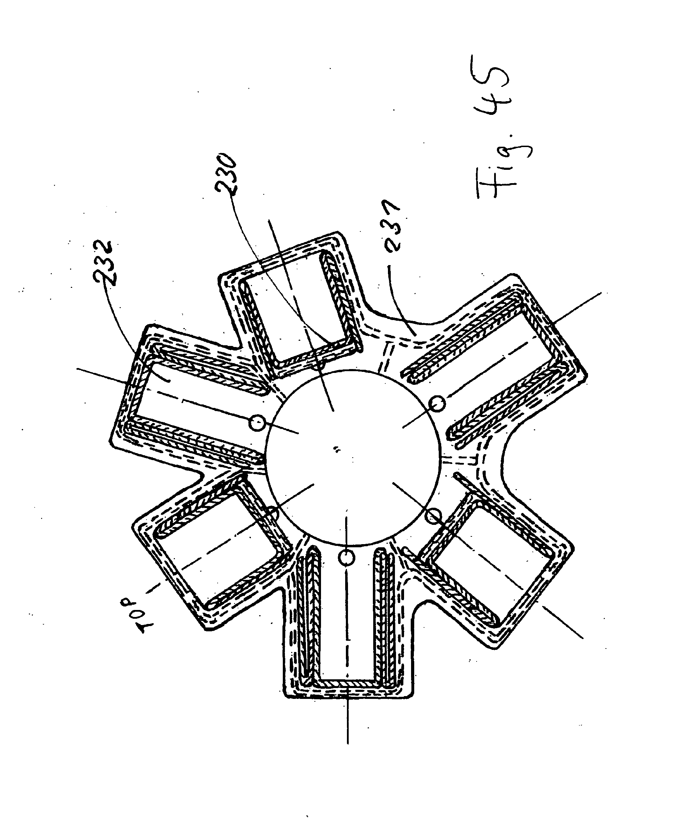

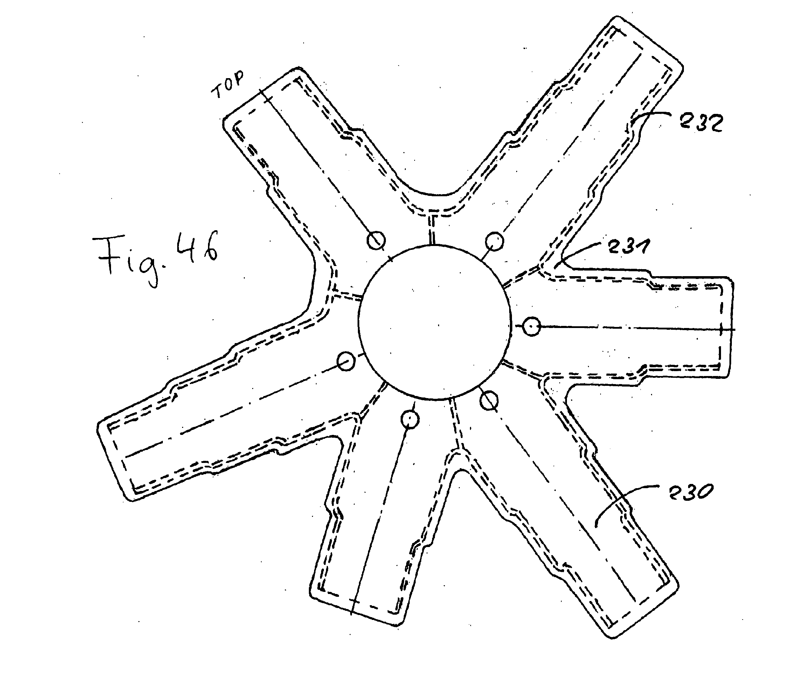

Die Fig. 45 zeigt eine Alternative, bei der die aus zwei Gewebehälften 231 zusammengenähten Gasverteilungskanäle 232 mit zugenähten Schlauchenden 230 versehen sind, die in die Gasverteilungkanäle 232 hineingestülpt sind. Die Fig. 46 zeigt schematisch die ausgestülpten Schlauchenden 230 bei Crashbeginn. Die zugenähten Enden platzen bei abgestimmtem Druck auf.

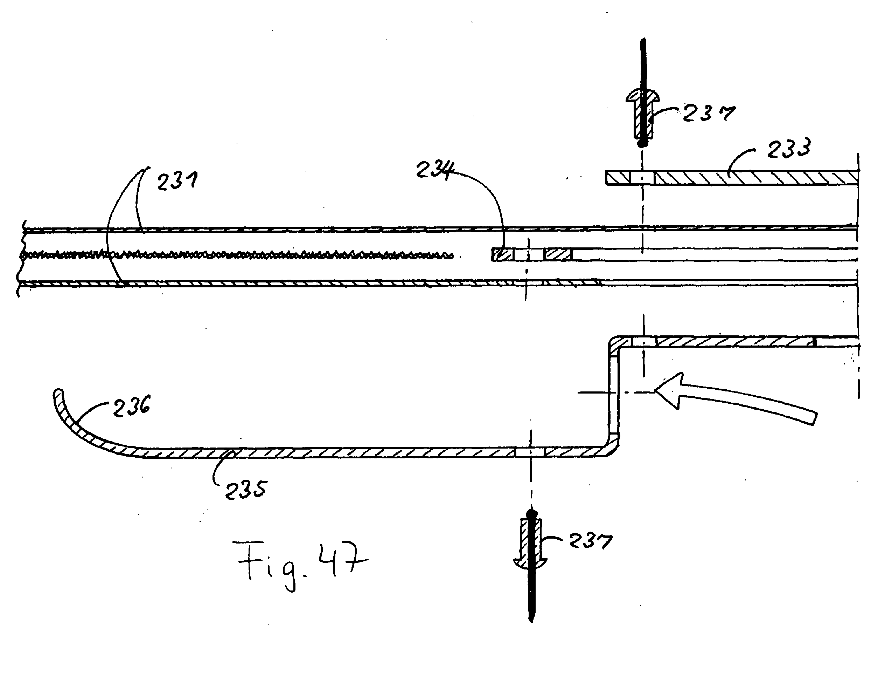

In der Fig. 47 ist die Montage der Gewebehälften 231 gezeigt. Sie werden zwischen eine Deckplatte 233, einem Klemmring 224 und eine Basisplatte 235 genietet bzw. verschraubt 237. Die Basisplatte 235 gibt mit ihrer äußeren Anschrägung 236 die Austrittsrichtung der Gasverteilungskanäle 232 vor.

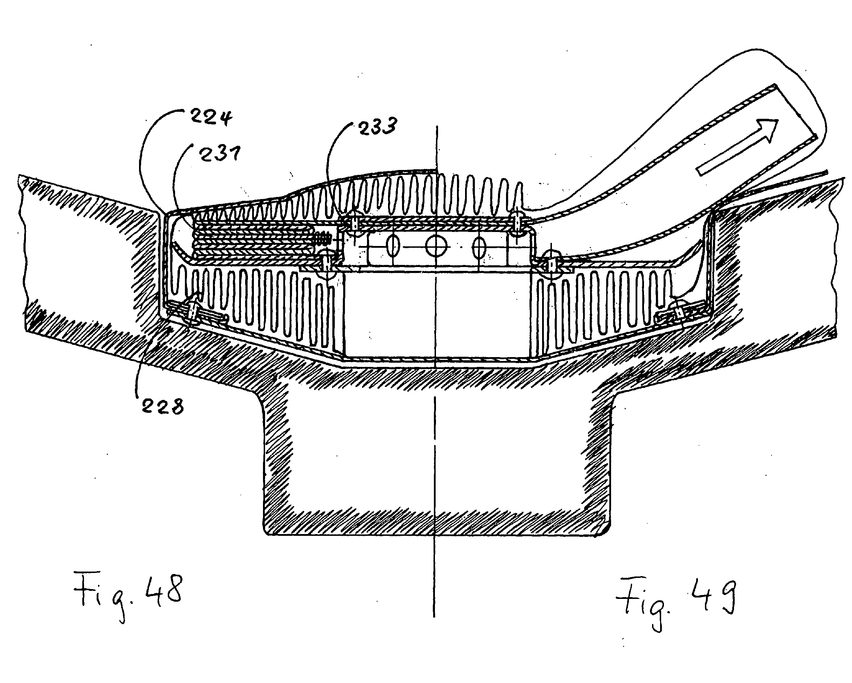

Die Fig. 48 zeigt eine derartige Anordnung im Zusammenbau als Fahrerairbag 228 im Halbschnitt. Die Fig. 49 zeigt beim Crash den "ausgestülpten" Schlauch 220, der den Airbag 202 herauszieht und die Abdeckhaut 224 gesprengt hat.

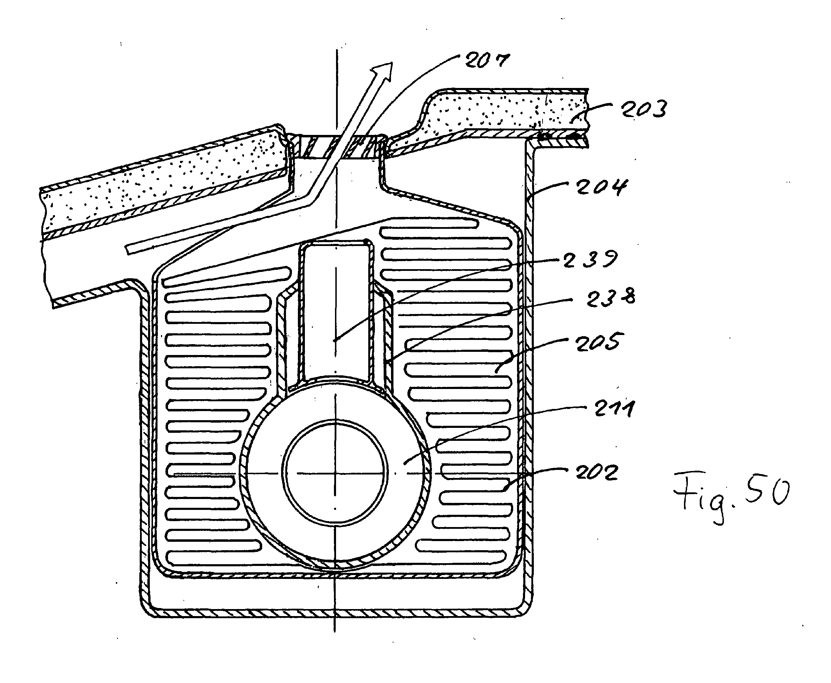

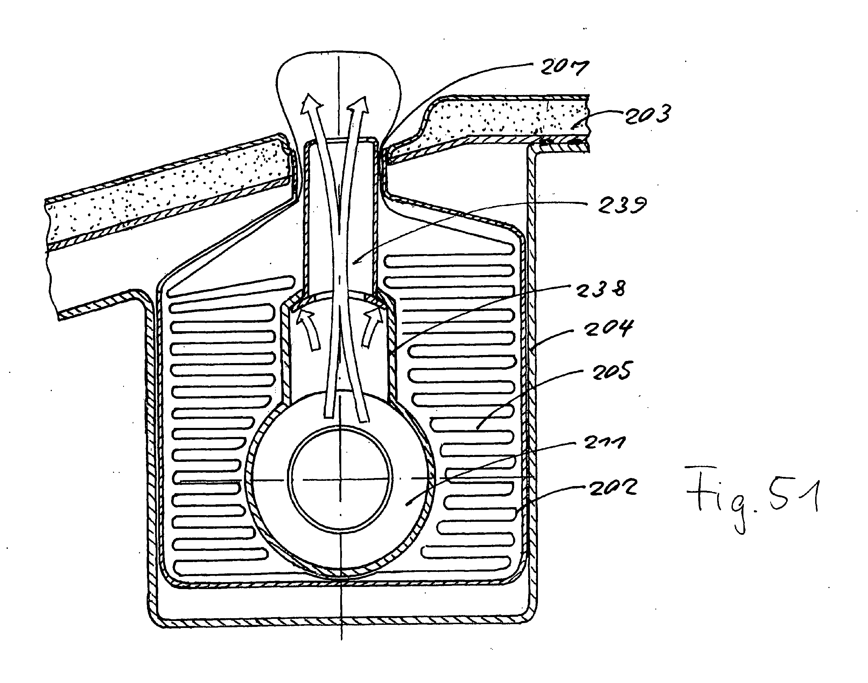

Die Fig. 50 zeigt ein Beifahrerairbagmodul, bei dem ein teleskopartig durch den Gasdruck ausfahrbarer Gaskanal 239 in einem Gasführungsgehäuse 238, das den Generator 211 umschließt, gelagert ist. Wie in der Fig. 51 gezeigt ist, wird beim Crash der Gaskanal 239 angehoben durch den Gasdruck. Dieser stößt die Defrosterblende 206 hoch und nimmt den Airbag in die Defrosteröffnung mit (Beispiel Papiertaschentuch/Kasten). Vorteilhaft ist, dass sich damit der Gasdruck auf der Armaturentafel 203 entspannt und nicht im Modul 205. Das Modul 205 bleibt damit unverformt, damit es nach dem Crash problemlos getauscht werden kann.

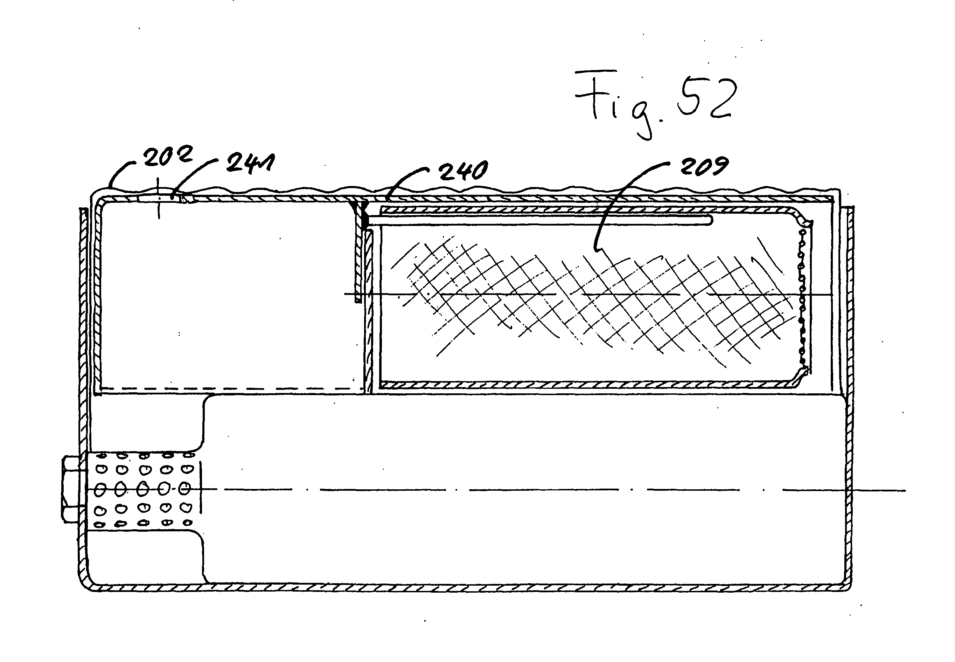

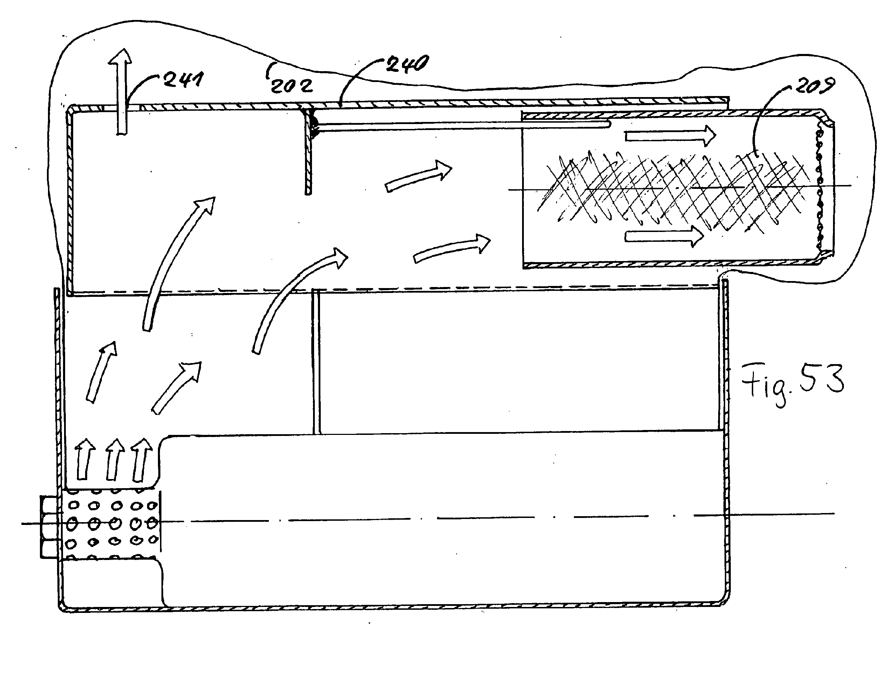

Die Fig. 52 zeigt eine Anpassung des Moduls 205 an die Gegebenheiten der Armaturentafel 203. Das aus dem Generator austretende Gas gelangt in einen Gasverteiler 240. Aus diesem Gasverteiler 240 strömt das Gas zu einem kleinen Teil direkt in den Airbag, indem es durch ein kleines Loch 241 an geeigneter Stelle austritt. Der Gasdruck hebt dabei den Gasverteiler an (Fig. 53) und gibt den Weg frei für das Gas zu einem Ausblasgeschoss 209, das auf der Armaturentafel den Airbag 202 seitlich zwangsweise entfaltet. Beim Hebevorgang des Gasverteilers 240 tritt dieser durch die Defrosteröffnung auf die Armaturentafel aus und entfaltet dort den Airbag.

Nachfolgend werden noch einige vorteilhafte und bevorzugte Ausgestaltungen der vorliegenden Erfindung insbesondere, aber nicht ausschließlich im Zusammenhang mit den zuletzt behandelten Ausführungsbeispielen angegeben.

Die Erfindung schafft insbesondere eine Airbagvorrichtung oder ein Airbagsystem, bei dem das austretende Gas zuerst in einem Schlauch, Rohr oder Kanal benutzt wird, mittels verschiedener Kolben als Bestandteile von Entfaltungssteuereinrichtungen Druck auf das Airbagtextil auszuüben. Dabei kann das Airbagsystem so gestaltet sein, dass diese Schiebemittel das Textil in einer Richtung quer zur normalen Ausblasrichtung schieben, um die Basis des Airbags bei Austritt zu vergrößern, um damit die tödliche Aggressivität zu vermindern.

Beispielsweise können Schläuche o.ä. so gestaltet sein, dass diese unter einer Defrosterblende oder Deckel so gefaltet liegen, dass sie bei Gasbeaufschlagung die Defrosterblende oder den Deckel zerstörungsfrei abheben. Gasdurchgangsschläuche können so gestaltet sein, dass bei Gasdurchgang keine Verformung der Öffnung entsteht. Dazu sind bei schmaleren Öffnungen die Schläuche vorzugsweise in Segmenten abgenäht.

Ein Einschiebekanal für das Modul kann so gestaltet sein, dass er gleichzeitig Luftführungskanal zur Defrostung ist.

Ein Gasdurchgangsschlauch kann als gradlinige Verlängerung am Airbaggenerator angeflanscht oder als "Doppelpack" oberhalb des Generators angebunden sein mittels Gasumlenkung an den Generator. Ein Gasdurchgangsschlauchsystem kann rund um den Gasgenerator, sternförmig angeordnet und im Airbag zusammengefaltet sein. Gasdurchgangsschläuche können mit "Geschossen" zur Airbagausbringung gefüllt sein. Gasdurchgangsschläuche können am Ende zugenäht sein zum Aufplatzen unter Druck und eingestülpt sein zur Verkürzung derselben. Gasdurchgangsschläuche können derart auf Auflagen positioniert sein, dass sie sich beim Crash in der Richtung bewegen, dass sie die Abdeckfolie sprengen und den Airbag "quer" mitnehmen. Statt Gasdurchgangsschläuchen kann ein zusammengenähter "Stern" aus zwei Textilhälften zum Einsatz kommen, wobei Querentfaltungsgeschosse eingenäht sein können oder Schlauchspitzen eingefaltetet sein können, die zum Druckaufbau vom zugenäht sind.

Es kann ein teleskopartig beweglicher Gaskanal verwendet werden, der derart ausgeführt ist, dass bei Gasaustritt dieses auf die Armaturentafel gebracht wird, um erst dort auszutreten und nicht das Modul durch Gasdruck zu verformen. Ein solcher Gaskanal kann insbesondere so ausgeführt sein, dass er das Airbagtextil derart auf die Armaturentafel bringt, dass der Rest des Airbags wie ein Papiertaschentuch aus der Schachtel gezogen wird. Weiterhin kann der Gasverteiler so ausgeführt sein, dass er direkt durch ein Loch einen Teil des Airbags mit Gas versorgt. Alternativ oder zusätzlich kann der Gasverteiler derart ausgeführt sein, dass nach Austritt des Gasverteilers auf die Armaturentafel diese Ausblasgeschosse in Bewegung bringt, die in gewünschter Richtung, z.B. seitlich den Airbag zwangsweise entfalten. eine weitere Alternative besteht darin, dass der Gasverteiler derart ausgeführt ist, dass entsprechend den Anforderungen der Armaturentafel bzw. der Lage des Airbags auch eine teilweise Direktausströmung fes Airbags möglich ist.

Es kann mindest eine solche Naht verwendet werden, die beim Crash aufplatzt, nachdem der Schlauch aufgeblasen ist, sich in Position gebracht und die Abdeckfolie gesprengt hat.

Die behandelten Querentfaltungssysteme sind nicht nur bei Beifahrerairbags, sondern auch bei Fahrerairbags anwendbar. Insbesondere ein Fahrerairbag kann mit aufgesetztem kompakten Gasverteiler auf dem Gasgenerator versehen sein.

Eine Schale mit den Gasverteilungsschläuchen unter Druck kann derart beweglich sein, dass die Schläuche in die richtige "Schussposition" gebracht werden und die Abdeckfolie unter dieser Bewegung einreißt.

Eine Airbagabdeckung kann derart vorgeschädigt sein, dass sie von bei Gasfüllung "dick" werdenden Gasausblasschläuche aufgerissen wird. Knickkanten der Aufreißlappen können derart geplant und gestaltet sein, dass eine große Öffnung und etwa gleich große Aufreißlappen entstehen.

Bevor beim Crash das Gas in den Airbag strömen kann, kann es durch Kanäle geleitet werden und darin enthaltene Schiebeelemente bewegen. Diese Schiebeelemente sind etwa quer zur normalen Entfaltungsrichtung derart positioniert und vom Airbagtextil umgeben, dass beim Crash der Airbag in seiner Basis vergrößert wird. Diese Vergrößerung der Airbagausgangsbasis verteilt die Aggressivität auf Werte, die bei 0oP (out of position) im Nahbereich nicht mehr tödlich sind.

Geringer Aufwand zur Vergrößerung der Airbagausgangsfläche erspart aufwendige OOP-Elektronik, Airbagabschaltung, regelbare Gasgeneratoren, Gewichtserkennung und ähnliches.

Weitere Alternativen der "aktiven Querentfaltung" beinhaltet das "Package" unterschiedlicher Armaturentafeln, wenn man möchte, dass man eine vorhandene Öffnung für den Austritt des Bags verwendet, um beim Crash keine Armaturentafel zu zerstören.

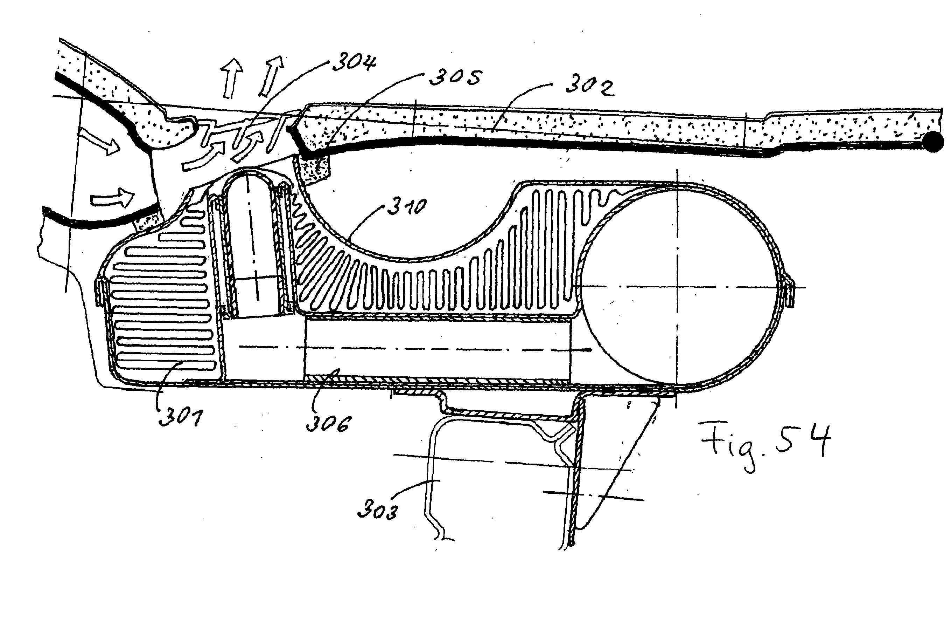

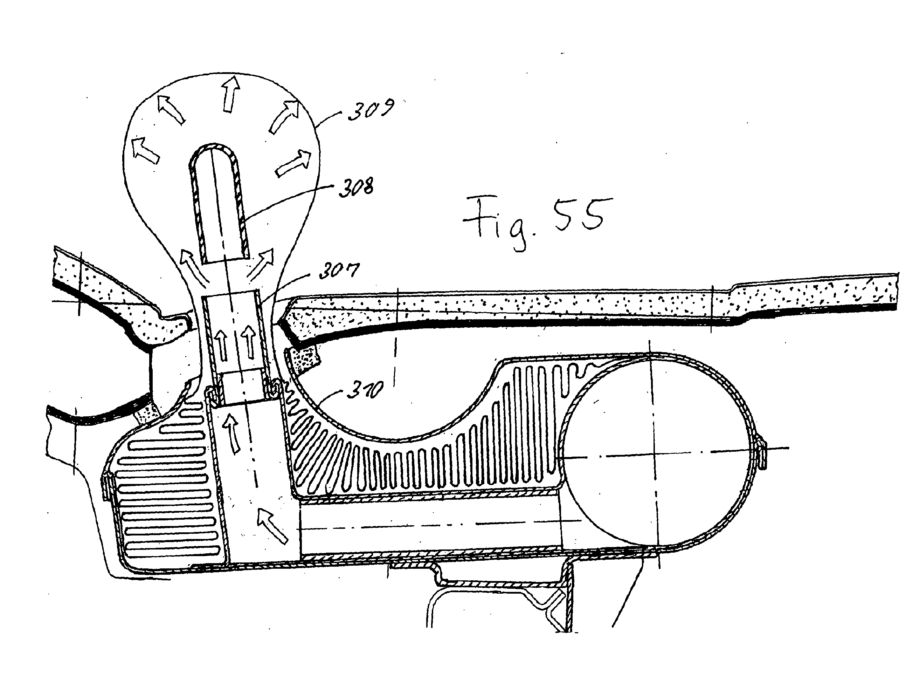

Die Fig. 54 zeigt den Einbau eines Modules 301 zwischen einer Armaturentafel 302 und einem Armaturentafelträger 303. Das Modul 301 wird gegen die Armaturentafel 302 gedrückt und durch die Defrosterdüse 304 verschraubt und mit einer Dichtung 305 versehen. Der abgewinkelte Druckkanal 306 verhindert Druckaufbau im Modul 301. Die Fig. 55 zeigt das Modul 301 beim Crash. Das teleskopartig bewegbare Druckkanalstück bewegt sich durch den Gasdruck durch die Defrosterdüse 304 nach außen. Das Geschoss 308 unterstützt das Ausziehen des Airbags 309 wie ein Papiertaschentuch aus einer Schachtel.

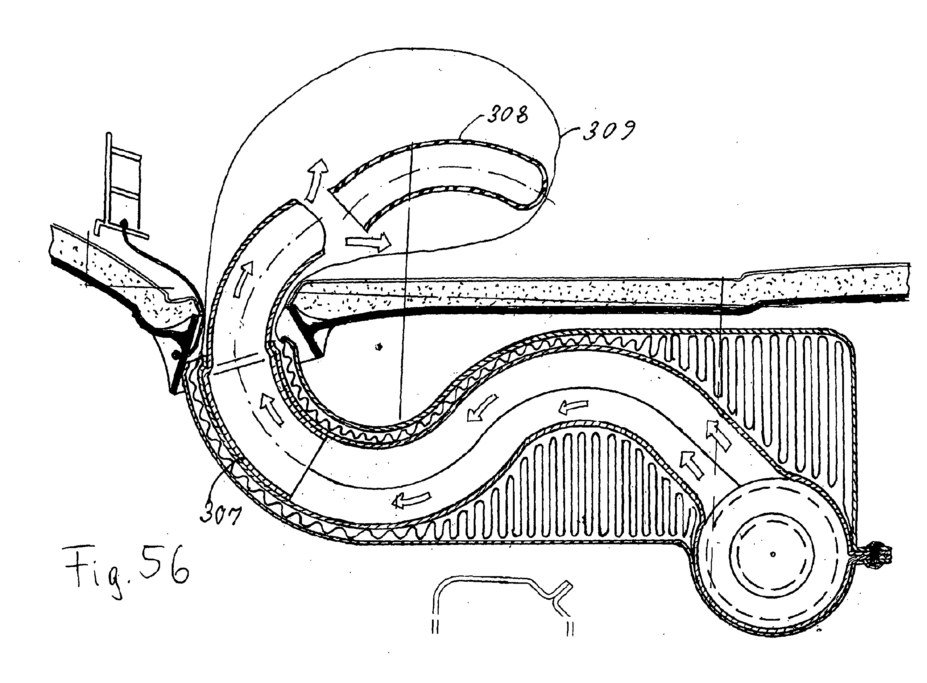

Eine weitere geschickte Ausgestaltung ist, dass der Airbag 309 um ein kreisförmiges Leitblech 310 gezogen bzw. gerissen wird, andernfalls würde er zerstört. Möchte man bei eingeschränkten Raumverhältnissen oder/und bei gefordertem Austritt des Airbags 309 schräg nach hinten das Lastenheft erfüllen, ist eine Anordnung, wie in der Fig. 56 gezeigt ist, erforderlich. Das teleskopartig sich bewegende Druckkanalendstück 307 ist dementsprechend als Kreissegment ausgeführt.

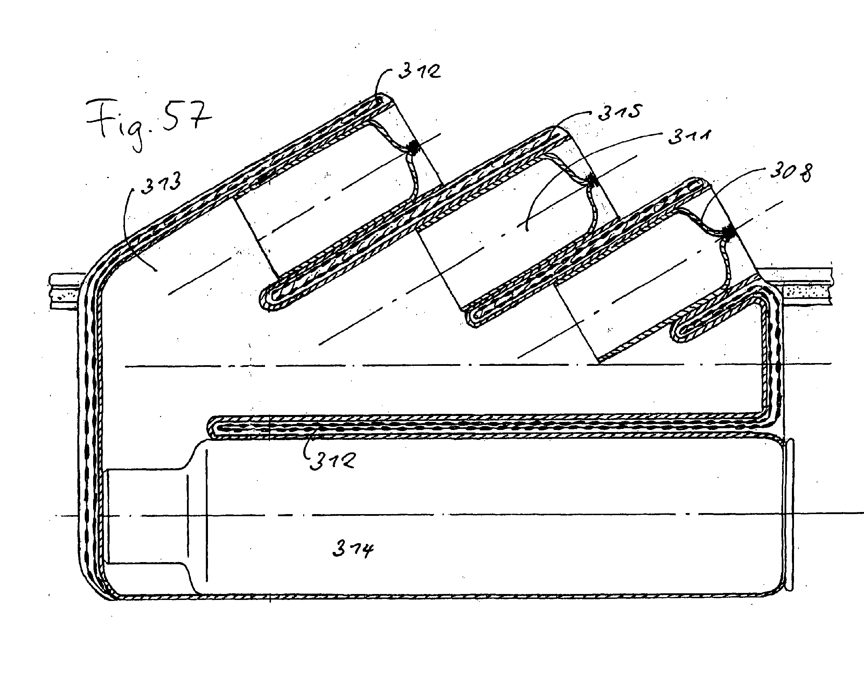

Eine weitere Möglichkeit das Gas aus dem Modul 301 auf die Annaturentafel 302 zu bringen, sind Schläuche 311, die als Abnäher 312 eines Textils 313 hergestellt werden, wie in der Fig. 57 gezeigt ist. Auch der Generator 314 wird mit dem Textil 313 umnäht. Die so hergestellten Schläuche 311 können "Geschosse" 308 enthalten oder, wie in den vorigen Beispielen gezeigt, eingestülpt und vernäht sein. Vor dem Crash ist der Zusammenbau des Textils 313 zusammengefaltet unter dem Austritt. Beim Crash entfaltet der Druck des Gases das Textil 313. Das Textil wird zwischen den Schläuchen 311 mit Aussteifungen 315 versehen, damit diese nicht vom Druck des Gases zurückgedrückt werden.

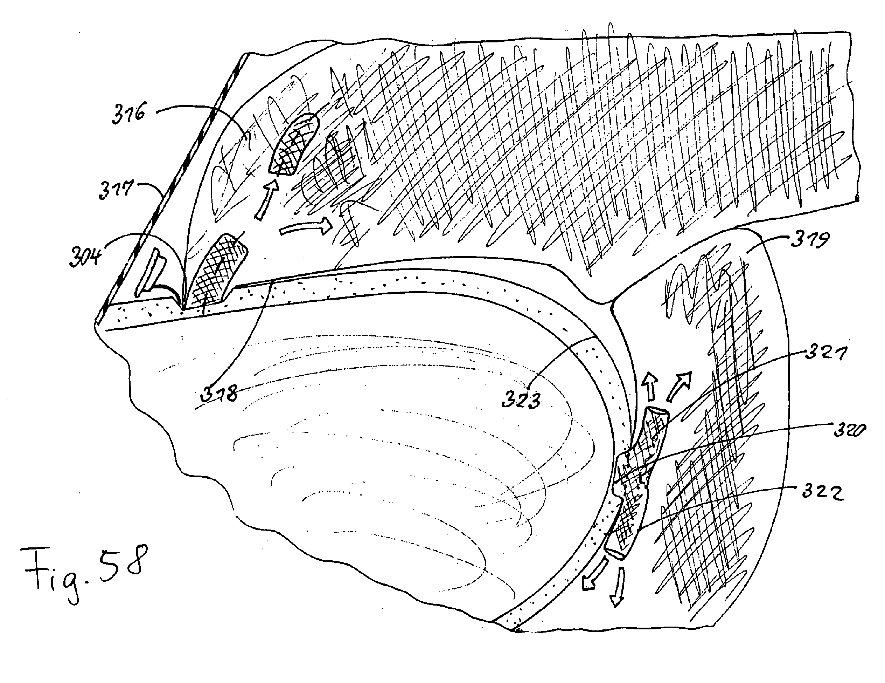

Eine weitere Optimierung der passiven Sicherheit im Beifahrerbereich ist die Kombination von z.B. 2 Airbags mit aktiver Querentfaltung. Im Beispiel in der Fig. 58 wird das gezeigt. Das besondere dabei ist, dass auch hier die Armaturentafel 302 nicht zerstört wird. Der obere Airbag 316 breitet sich zwischen Windschutzscheibe 317 und Armaturentafeloberfläche 318 wie eine "Wand" aus. Er erfüllt die Funktion eines heutigen Airbags 316. Ein zweiter unterer Airbag 319 kommt in diesem Beispiel aus dem Loch hinter der Zierleiste 320. Der Hilfsbag 321 mit seinen Schlauchabnähem 322 ist derart ausgeführt, dass er einen kleineren Teil dieses unteren Airbags 319 nach oben bläst, um die hintere Armaturentafelkante 323 zu polstern. Der größere Teil des unteren Airbags 319 wird nach unten gezogen zur Knieabstützung.

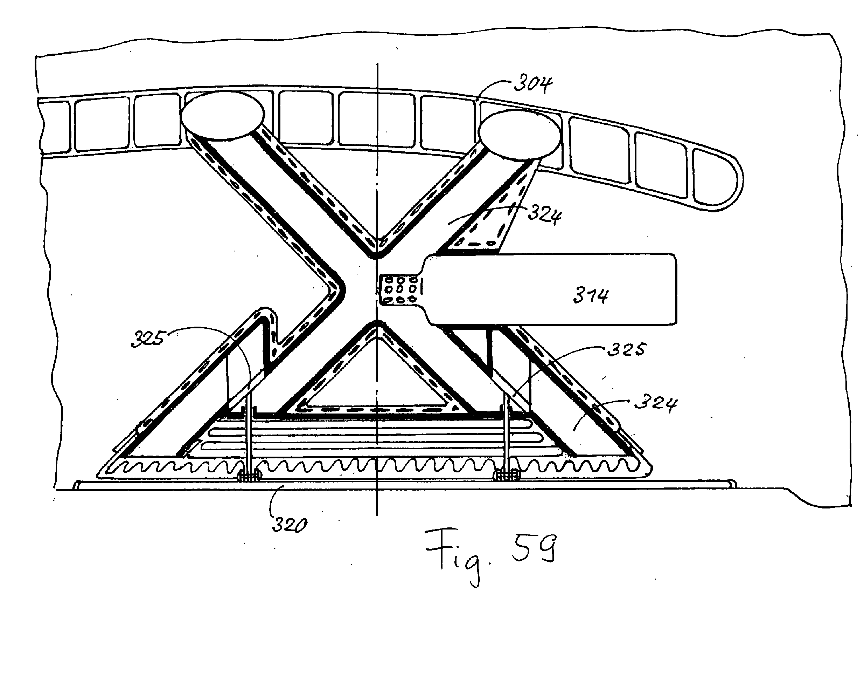

Die Fig. 59 zeigt eine Alternative als Schemabild, wobei beide Airbags 316 und 319 von einem einzigen Generator 314 beaufschlagt werden. Der Generator 314 ist mit Kanälen 324 mit den jeweiligen Gaseingängen 325 der Airbags 316 und 319 verbunden. Eine Besonderheit dieses Beispieles ist, dass die Kanäle 324 zum Loch hinter der Zierleiste 324 mit einem Kolbenventil 325 verschlossen sind, das zuerst vom Gasdruck geöffnet wird, um Gasdurchgang zum unteren Airbag 319 zu erreichen. Dabei sind die beiden Kolbenventile 325 gelenkig verbunden und ziehen diese zurück, um das Loch für den unteren Airbag 319 zu öffnen.

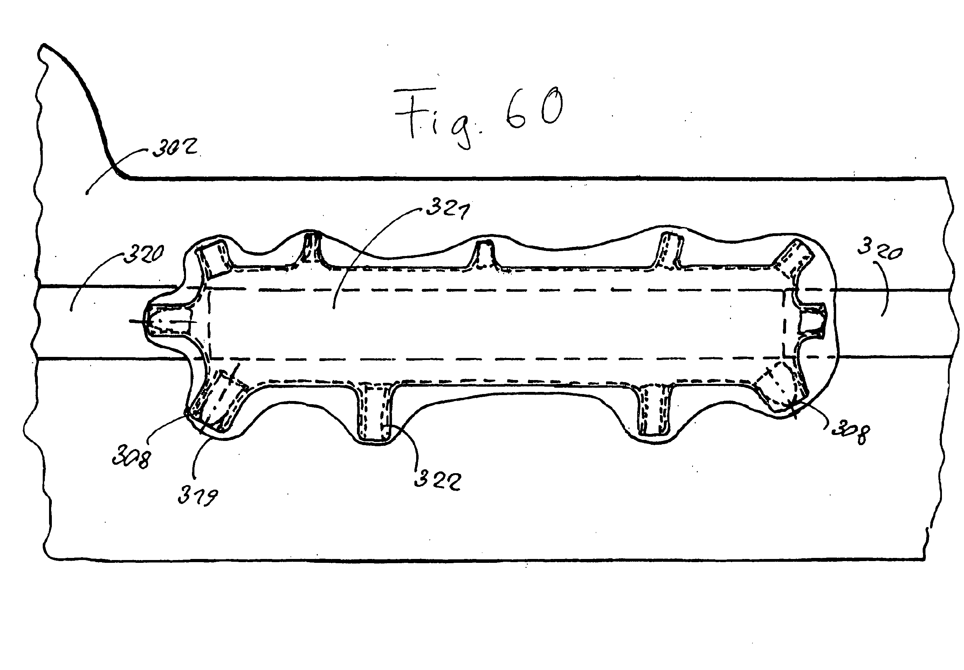

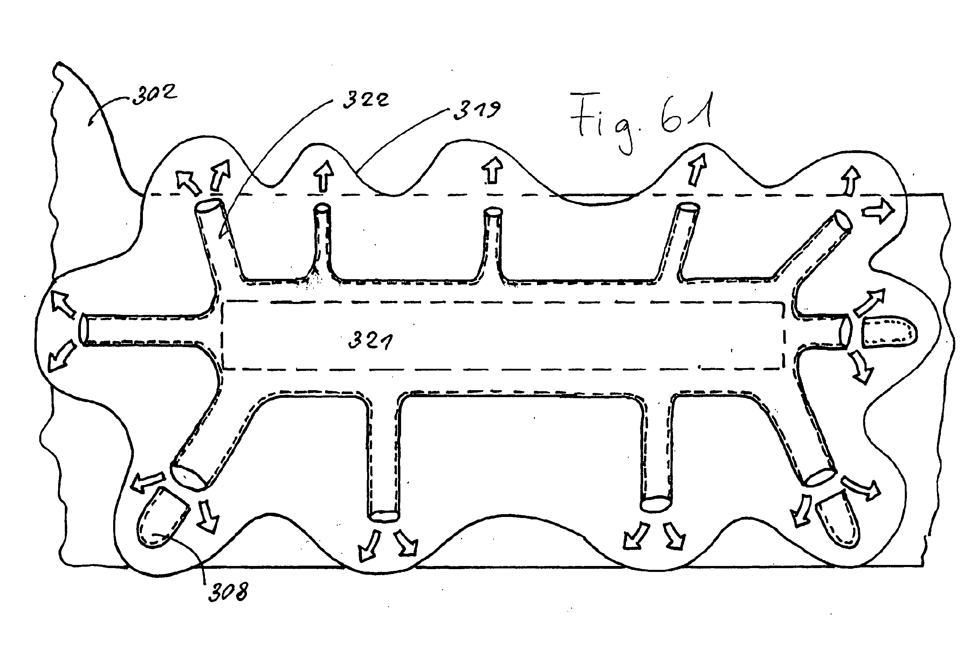

Die Fig. 60 zeigt in Draufsicht einen Hilfsbag 321 mit seinen Schlauchabnähem 322 und eingelegten Geschossen 302 noch eingestülpt, wie er gerade aus der Öffnung hinter der Zierleiste 320 hervorkommt und den eigentlichen unteren Airbag 319 anfängt mit herauszuziehen. Die Fig. 61 zeigt die weitere Entfaltung des Hilfsbags 321 mit seinen sich ausstülpenden Schlauchabnähem 322 und die Geschosse 308. Der untere Airbag 319 ist jetzt gerichtet und die Einblasung des Gases abgestimmt.

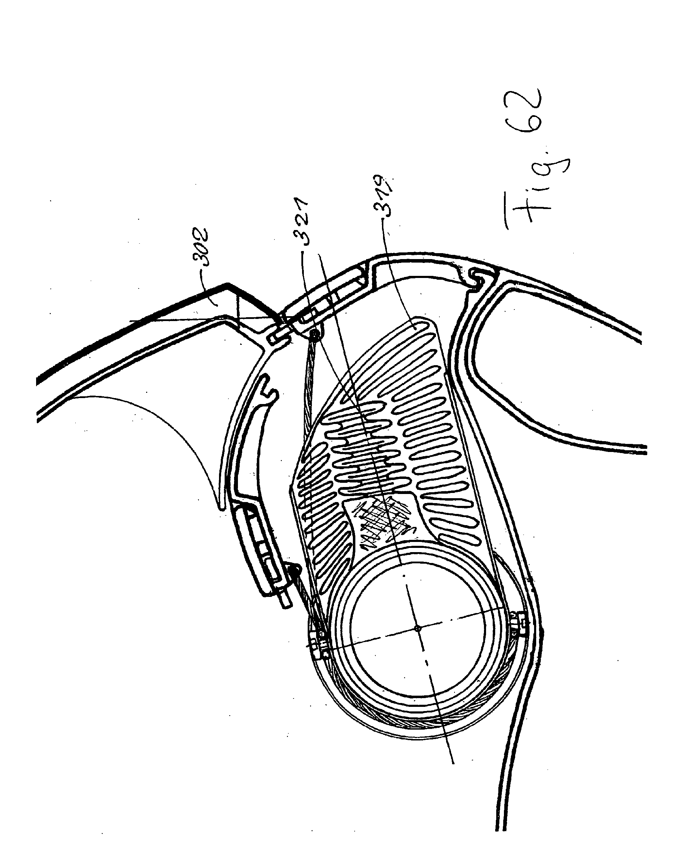

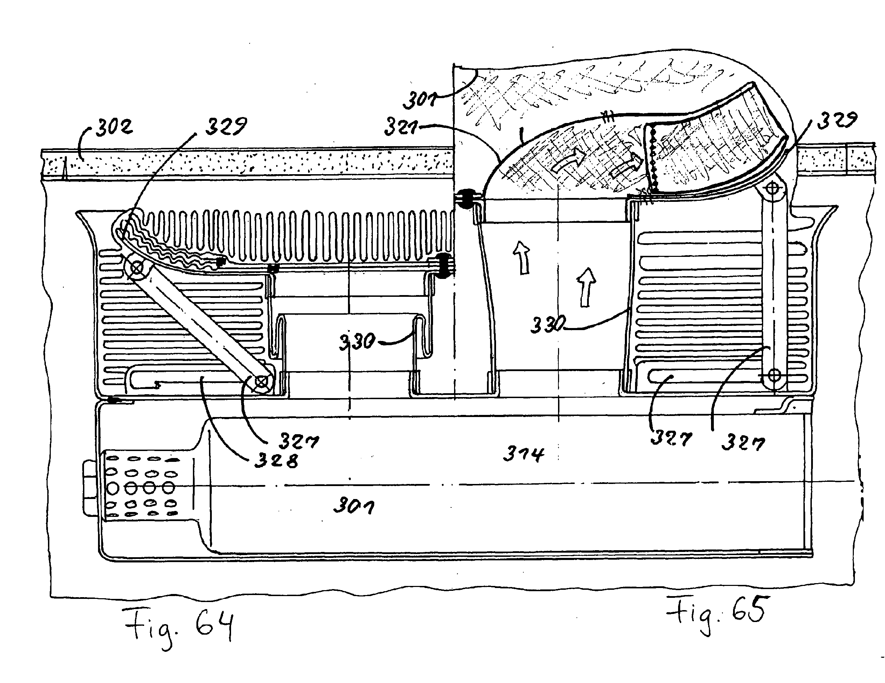

Die Fig. 62 zeigt die Anordnung eines unteren Airbags 319 an einem realistischen Beispiel hinter einer Zierleiste 320. Hier wird die Zierleiste 320 nach dem Prinzip der ACTIVE DOOR zurückgezogen (vom gleichen Erfinder in zahlreichen Schutzrechten und Schutzrechtsansprüchen beschrieben). Die Darstellung zeigt den im eigentlichen unteren Airbag 319 eingefalteten Hilfsbag 321. Die Fig. 65 zeigt die Crashsituation. Der Hilfsbag 321 ist entfaltet, die Schlauchabnäher 322 ausgestülpt. Natürlich können auch gezielt angebrachte Löcher 326 im Hilfsbag 321 zur Optimierung der Bagentfaltung beitragen.

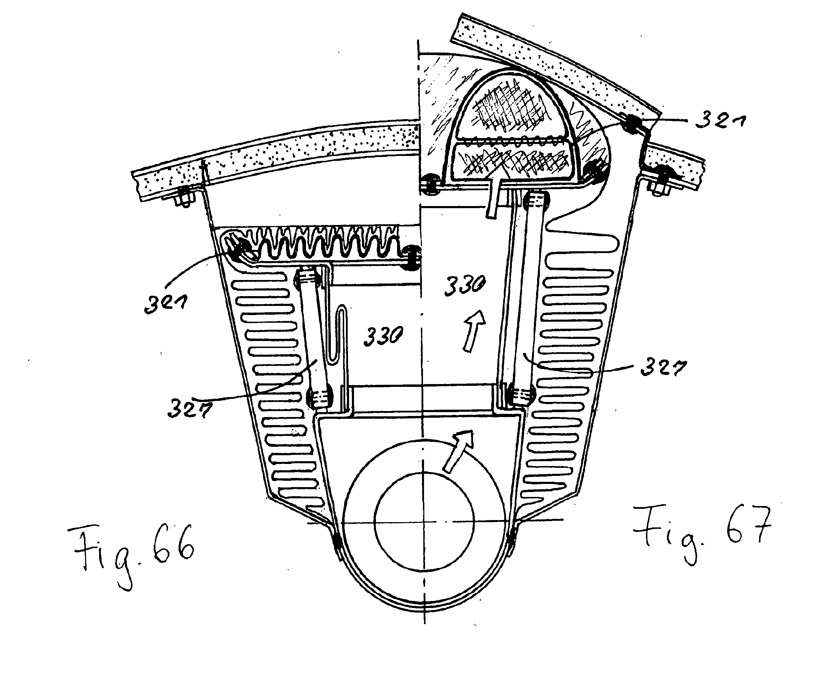

Mit der Darstellung in der Fig. 64 wird gezeigt, wie man im Modul 301 eine Druckplatte 329 anhebt durch den Gasdruck, der zuerst über zwei eingefaltete Druckschläuche 330 unter die Druckplatte 329 strömt. An allen 4 Ecken der Druckplatte 329 sind gelenkig gelagerte Rasthebel 327 in Kulissen 328 in eine Raststellung gezogen. Diese Rasthebel sichern die Lage der Druckplatte 329 dicht unter dem Körper der Armaturentafel 302. In der Fig. 65 ist diese obere Raststellung der Druckplatte 329 gezeigt. Der Gasdruck hat den Eingang in den Hilfsbag 321 geöffnet durch Zerreißen einer Naht. Der Hilfsbag 329 stülpt sich aus auf die Armaturentafel 302 und verteilt damit den Gaseintritt sehr flach quer in den eigentlichen Airbag. In der Fig. 66 und der Fig. 67 ist das Modul 301 im Querschnitt gezeigt. Die Rasthebel 327 werden unter der Druckplatte 329 gezeigt. Auf der Druckplatte 329 wird links der gefaltete und rechts der aufgeblasene Hilfsbag 321 gezeigt.

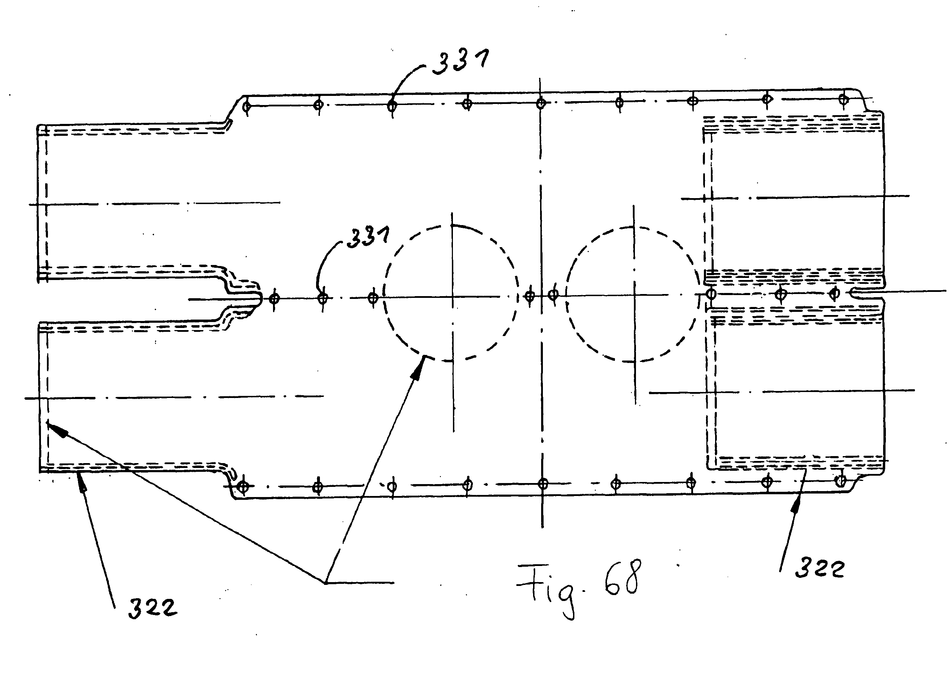

Die Fig. 68 zeigt das Beispiel eines Hilfsbags 321. Er wird mit Leisten 331 derart befestigt, dass der Hilfsbag 321 sich nur so weit bewegen kann, dass die Armaturentafel 302 gerade geöffnet wird und die eingestülpten Schlauchabnäher 322 sich, wie gesagt, auf der Armaturentafel 30 ausstülpen können.

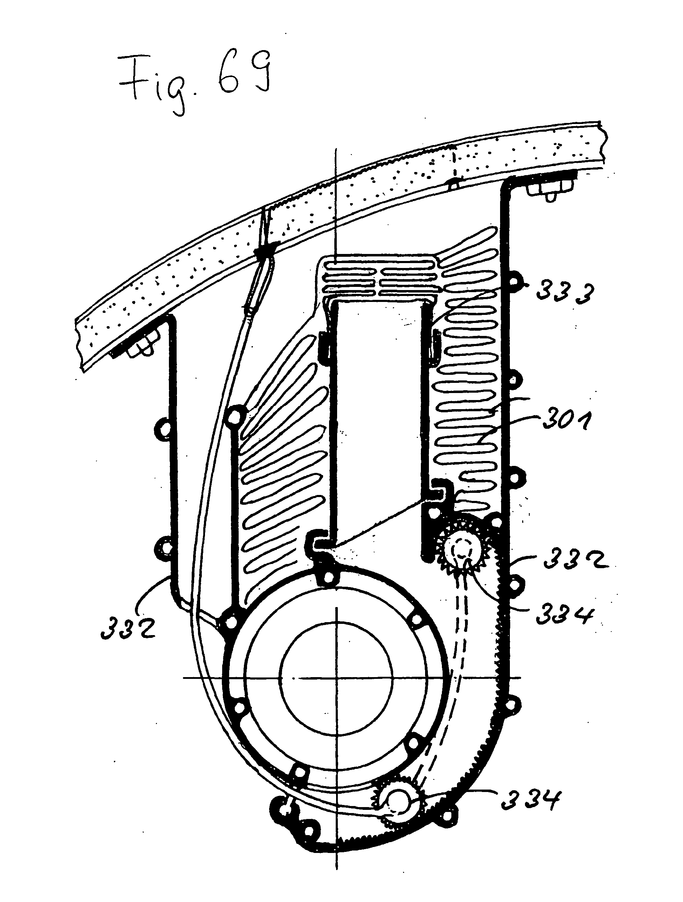

In der Fig. 69 ist ein Modul 301 gezeigt, das nach dem Rollkolbenprinzip (offenbart in einer der eingangs angegebenen früheren Anmeldungen) aufgebaut ist aus zwei, aus Strangpressprofilen hergestellten Aluminiumelementen 332. Für die aktive Querentfaltung wird ein Druckkamin 333 mit aufgesetztem Hilfsbag 321 eingeschoben. Die aktive Querentfaltung benötigt nur eine schmale Öffnung und deshalb ist hier die Alternative ACTIVE DOOR mit Rollkolben 334 von besonderem Vorteil.

Weitere Beispiele zur Anwendung der aktiven Entfaltung finden sich bei Dachairbags. Heutige Entfaltungen zeigen ein sehr großes Problem. Die Airbags müssen ihre Abdeckungen wegdrücken bevor sie austreten können. Das schafft der Airbag normalerweise an der einen Stelle schneller als an einer anderen. An der Stelle des besten Wegdrückens tritt er dann auch bevorzugt aus, das bedeutet, dass der Airbag erst am Ende seines Aufblasens in der richtigen Position ist. Während der Zeit des Aufblasens in der wichtigsten Zeitspanne kann er zufällig, da wo der Kopfaufschlag erfolgt, nicht vorhanden sein. Die aktive Entfaltung mit einem Hilfsbag 401 (siehe nachfolgend beschriebene Figuren der Zeichnungen) löst dieses Problem. Der zuerst vollkommen geschlossene kleine Bag bläst sich auf und sprengt damit die Verkleidungen 402 (siehe nachfolgend beschriebene Figuren der Zeichnungen) weg, und zwar automatisch entsprechend der gleichen Druckverteilung überall gleichzeitig. Dann stülpen sich Schlauchsegmente 403 (siehe nachfolgend beschriebene Figuren der Zeichnungen) nach unten und reißen an ihrer zugenähten oder geklebten Spitze auf. Sie nehmen damit den eigentlichen Dachbag 405 (siehe nachfolgend beschriebene Figuren der Zeichnungen) simultan mit.

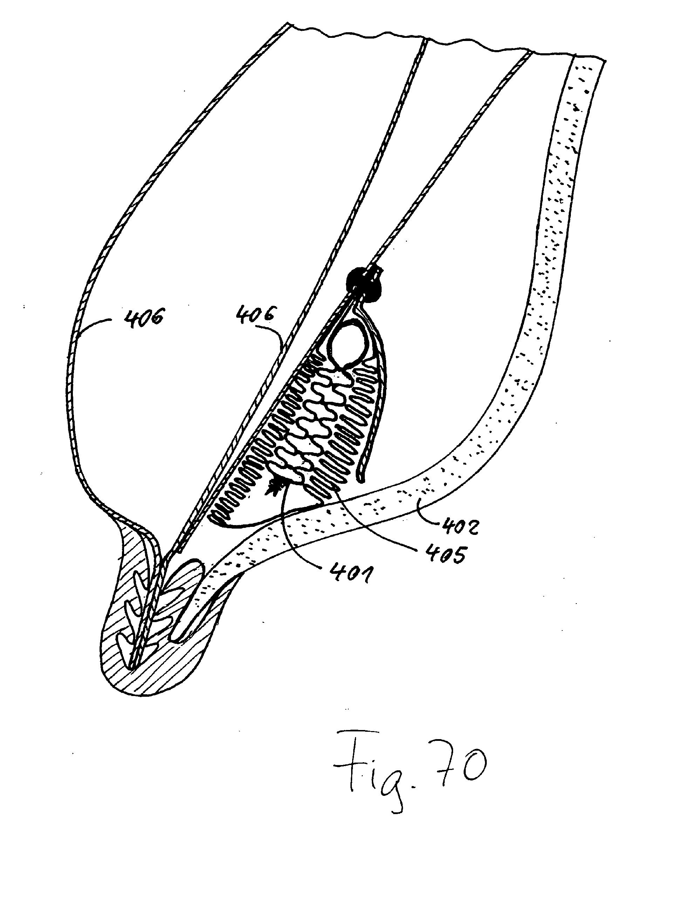

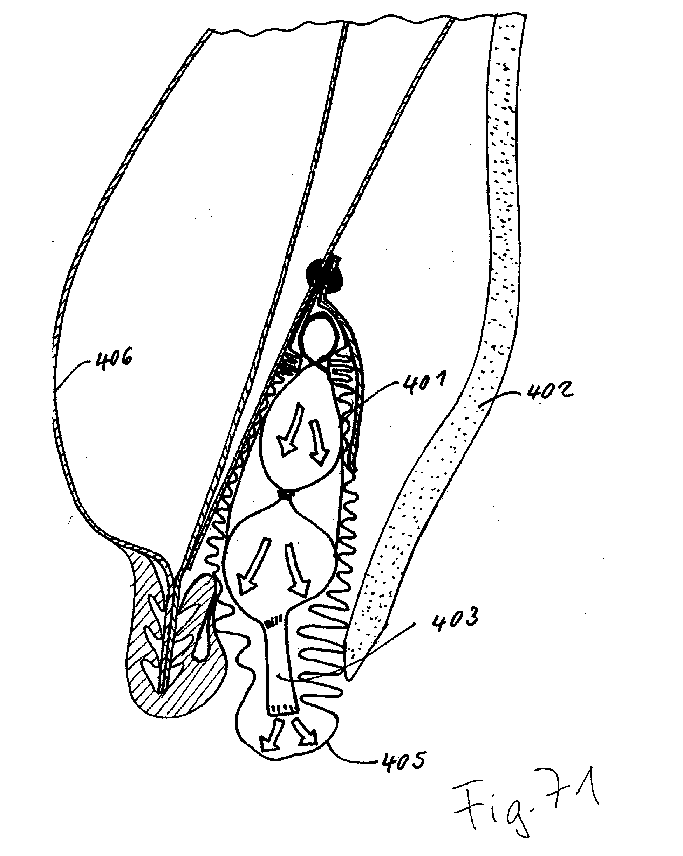

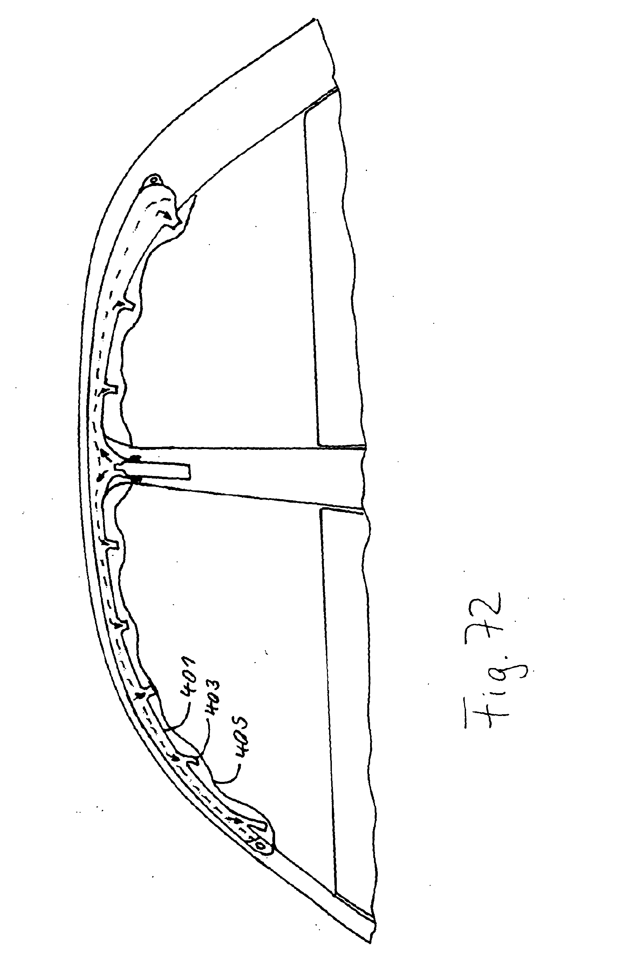

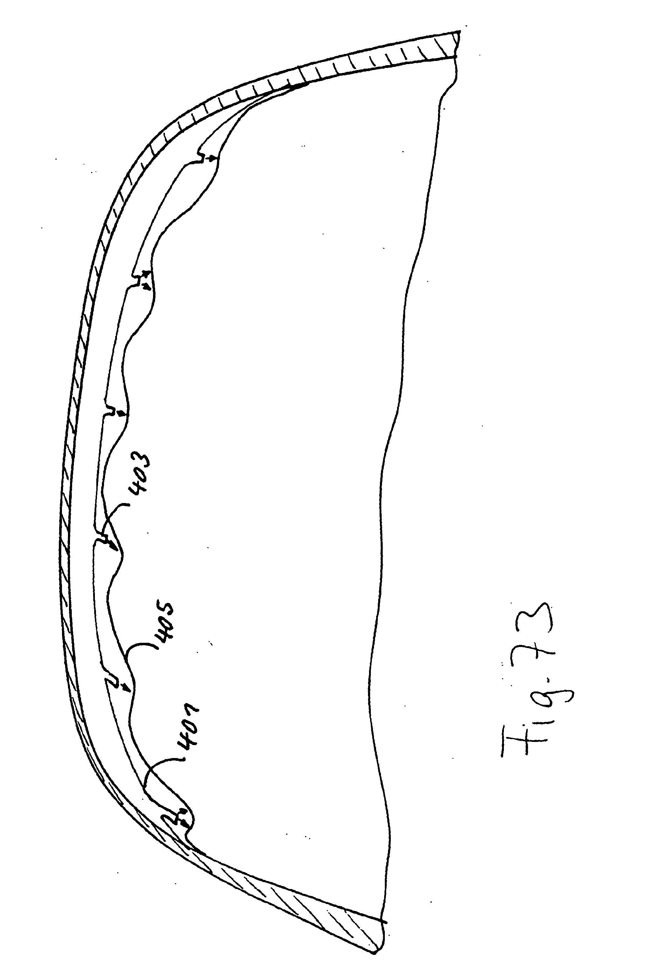

Die Fig. 70 zeigt im Schnitt einen Dachrahmen 406 und die Unterbringung eines Dachairbags 405 mit dem darin enthaltenen Hilfsbag 401. Die Fig. 71 zeigt den Zustand zu Beginn des Crashs. Der Schlauch- oder Matratzenartig ausgeführte Hilfsbag 401 sprengt die Verkleidung 402 ab und nimmt beim Ausstülpen der Schläuche 407 den Dachairbag 405 mit. Die Fig. 72 zeigt die Prinzipanordnung am äußeren Dachrahmen. Die Fig. 73 zeigt die Prinzipanordnung bei einem Airbag aus dem Fertighimmel zwischen vorderen und hinteren Passagieren. Hierbei ist der Hilfsbag 401 besonders wichtig, weil der Dachairbag 405 aus dem Fertighimmel herauskommen muss.

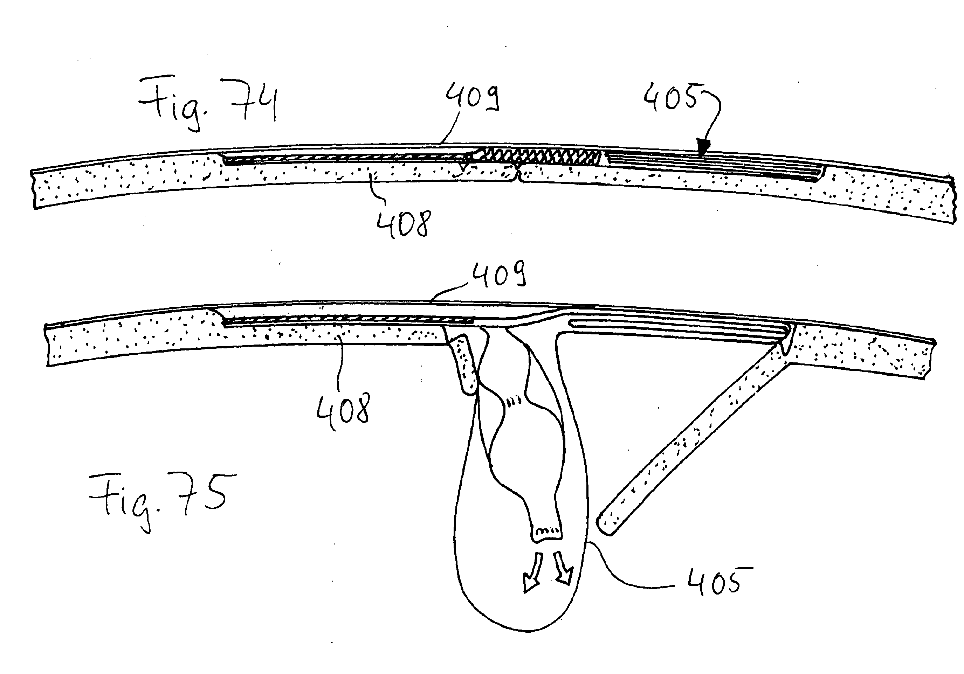

Die Fig. 74 zeigt die Unterbringung eines solchen Dachairbags 405 unter dem Fertighimmel 408. Der Dachairbag 405 ist am verspannten Dachspriegel 409 angebunden. Letzterer ist verklebt als Baueinheit mit dem Fertighimmel 408. Die Fig. 75 zeigt die Crashsituation.

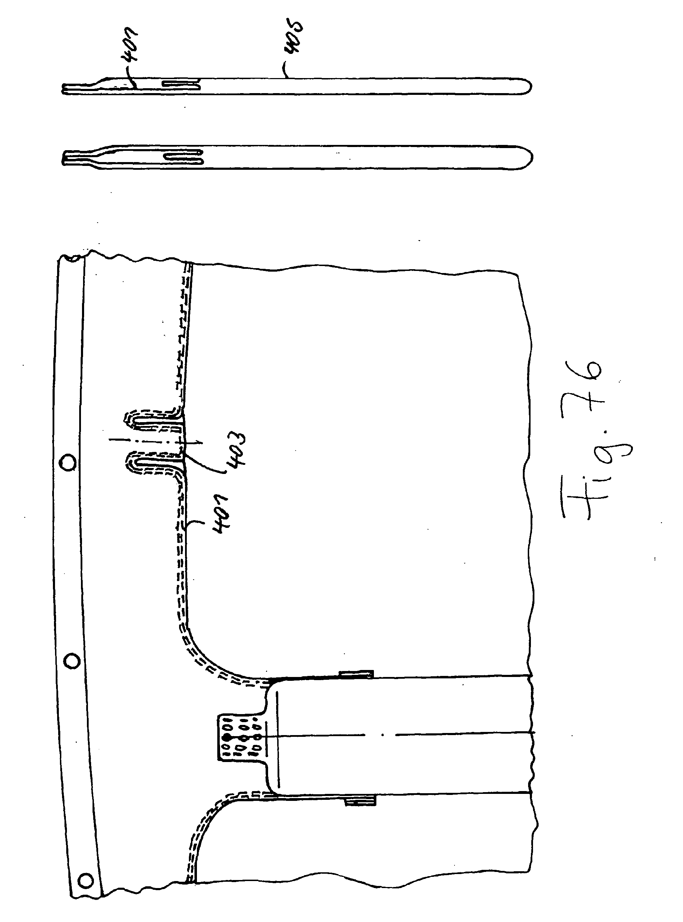

Die Fig. 76 zeigt die prinzipielle Anordnung als Ausschnitt. Die Schnittbilder zeigen einmal einen eingepackten Hilfsbag 401 im Dachairbag 405 bzw. daneben ein einseitig angenähter/geklebter/geschweißter Zusammenbau Hilfsbag 401 und Dachairbag 405.

Im Zusammenhang mit Dachairbags sind folgende grundsätzlichen Merkmale von besonderer Bedeutung:
1. In einem Dachbag eingelegter Hilfsbag, der zuerst geschlossen ist.
2. Ein Hilfsbag, in dem sich ein Druck aufbaut, der die Verkleidungen gleichmäßig entsprechend des Druckaufbaus absprengt.
3. Ein Hilfsbag, der derart gestaltet ist, dass er nach Erreichen eines vorbestimmten Druckpegels an vorspezifizierten Punkten aufreißt und das Gas in den Dachbag entlässt.
4. Alternativ können diese Gasöffnungen auch eingestülpte Schlauchsegmente sein.
5. Verbindungen und aufreißende Verbindungen sind angepasst, vernäht, verklebt bzw. verschweißt.
6. Hilfsbag kann alternativ auch einseitig Teil des Dachbags sein.

Von besonderem Vorteil ist durch die Erfindung speziell im Zusammenhang mit Dachairbags ein gezieltes gleichmäßiges Aufsprengen von Verkleidungen zum Austritt des Dachairbags. Dabei ist die Erfindung so zu verstehen, dass die entsprechenden Ausgestaltungen und allgemeinen Merkmale für alle verdeckt untergebrachten Airbags gilt, d.h. ebenso für Airbags, die sich zielgerichtet in bestimmten Richtungen entfalten sollen.

Ein weiteres Beispiel zum "aktiven" Entfalten findet sich bei Dachairbags, die vorteilhafterweise im Schiebedachrahmen untergebracht sind. Heutige Schiebedachrahmen werden aus Aluminiumstranpreßprofilen zusammengesetzt. Es liegt im Rahmen der Erfindung, die Alustrangpreßprofile 501/502 (siehe nachfolgend beschriebene Figuren der Zeichnungen) so zu verändern, dass man darin die verschiedensten Dachairbags 503/505 (siehe nachfolgend beschriebene Figuren der Zeichnungen) unterbringen kann. Zusätzlich ist es jedoch dabei notwendig, beim Crash mit dem Hilfsbag 506 (siehe nachfolgend beschriebene Figuren der Zeichnungen) die eigentlichen Dachairbags 503/505 (siehe nachfolgend beschriebene Figuren der Zeichnungen) aus ihrem Gehäuse zu schieben und die Verkleidung 507 (siehe nachfolgend beschriebene Figuren der Zeichnungen) wegzudrücken. Damit ist sichergest6ellt, dass die Dachbags 503/505 (siehe nachfolgend beschriebene Figuren der Zeichnungen) erst einmal in Position gebracht werden mit den Hilfsbags 506 (siehe nachfolgend beschriebene Figuren der Zeichnungen), deren Reißnähte 508 (siehe nachfolgend beschriebene Figuren der Zeichnungen) dann aufplatzen, wenn die eigentlichen Dachairbags 503/505 (siehe nachfolgend beschriebene Figuren der Zeichnungen) außen sind.

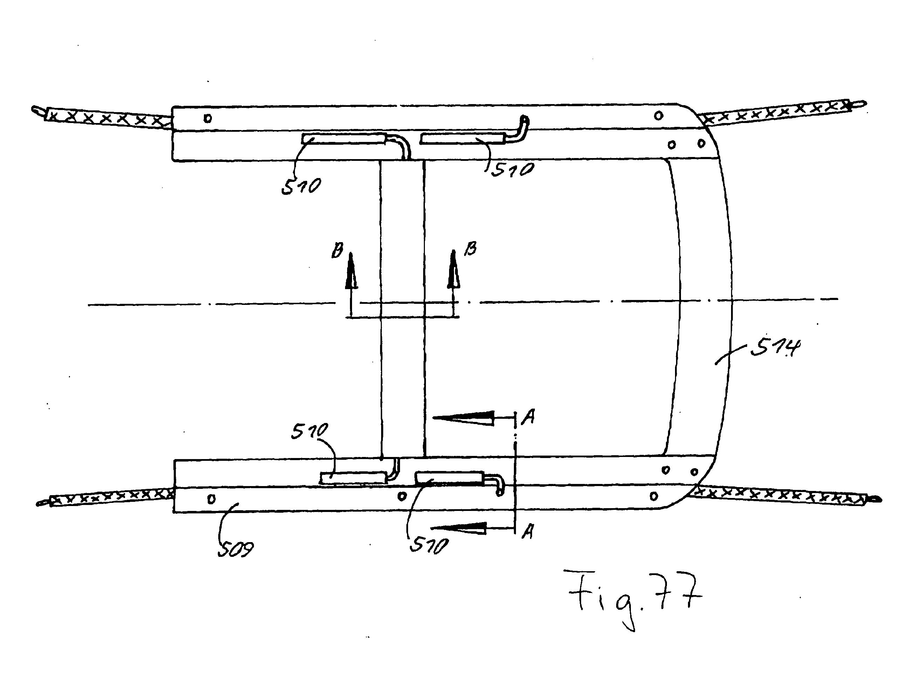

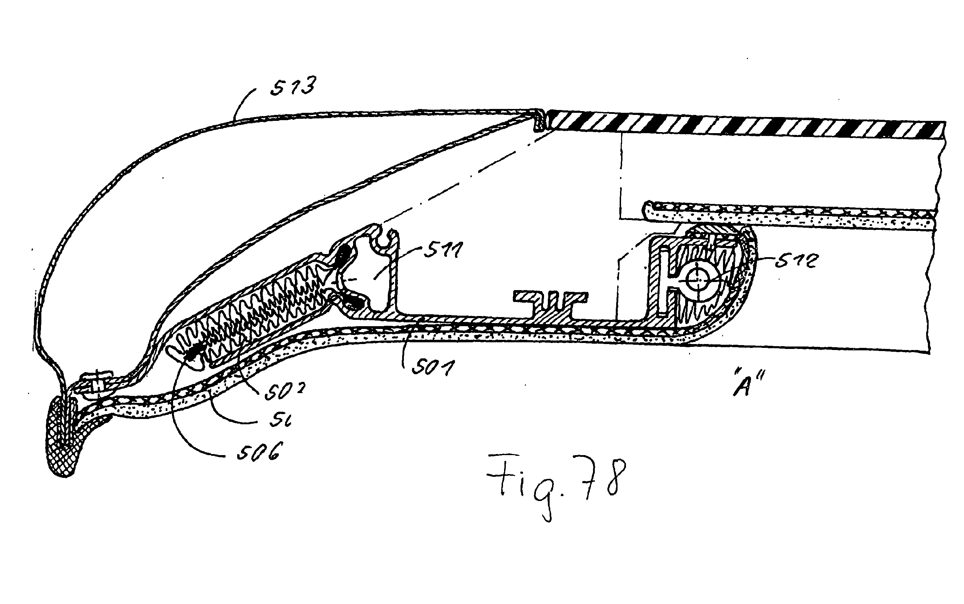

Die Fig. 77 zeigt einen derartigen Schiebedachrahmen 509. Gasgeneratoren 510 werden jeweils vormontiert und an Gaskanäle 511 angeschlossen. Die Fig. 78 zeigt im Schnitt A das Alustrangpreßprofil "längs" mit dem Dachairbag am Dachrahmen 513. Hilfsbag 506 und Dachairbag am Dachrahmen 503 werden an ihrem Fuß in das Alustrangpreßprofil "längs" eingeschoben. Dahinter ist der integrierte Gaskanal 511. Rechts im Bild wird die Führung 512 des Schiebedachairbags sichtbar gemacht.

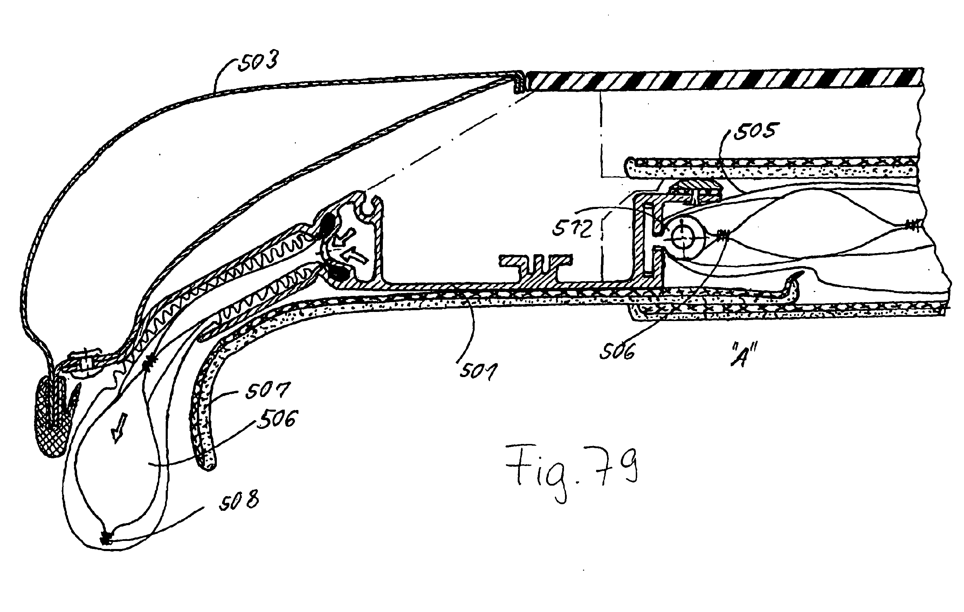

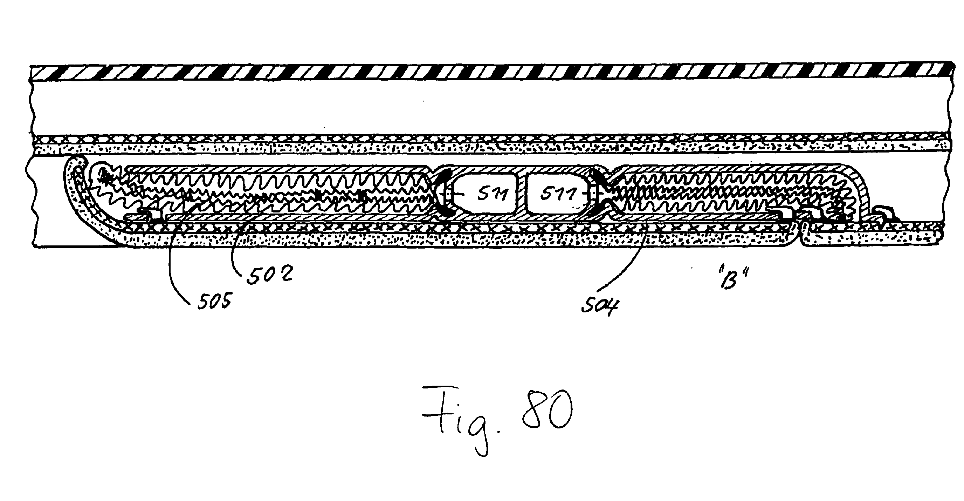

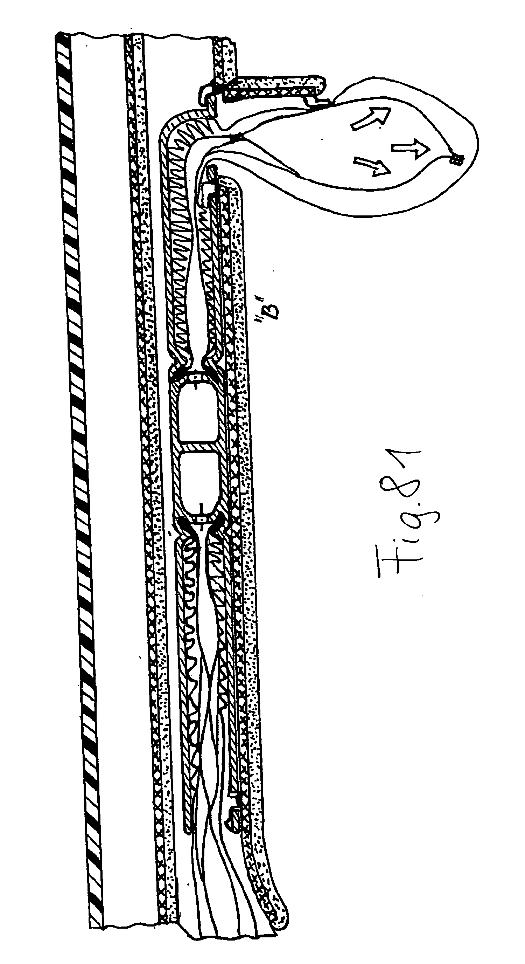

Die Fig. 79 zeigt die Situation beim Crash. Der Hilfsbag 506 öffnet die Verkleidung 507, lässt seine Reißnaht 508 aufplatzen und füllt damit das Gas außerhalb des Alustrangpreßprofils "längs" 501 in den Dachairbag am Dachrahmen 503. Der rechts gezeigte Dachairbag als Schiebedachairbag 505 wird ebenfalls in der Führung 512 zuerst in Position gebracht, bevor der eigentliche Schiebedachairbag 505 den Schiebedachbereich abpolstert und eine Wand zwischen linkem und rechtem Frontpassagier bildet (nicht gezeigt). Die Fig. 80 zeigt im Schnitt B das Alustrangpreßprofil "quer" 502. Hier ist alternativ zum Strangpreßprofil "vom" 514 (nicht gezeigt) links der Schiebedachairbag 505 untergebracht, rechts der Dachairbag zwischen Front- und Heckpassagieren 504. Dazwischen liegen Gaskanäle 511. Die Fig. 81 zeigt im Schnitt B die Crashsituation.

Von besonderem Vorteil im Zusammenhang mit dem zuletzt beschriebenen Ausführungsbeispiel ist die ideale Nutzung des Schiebedachrahmens für weitere Funktionen, wie die Unterbringung für die heutigen und die zukünftigen Airbags. Die "aktive" Entfaltung führt zu einwandfreiem Durchtritt von Airbags durch die Verkleidungen.

Zusammenfassend schafft die vorliegende Erfindung eine neue und vorteilhafte Airbagvorrichtung sowie Betriebsverfahren dafür. Die zukünftigen Anforderungen an ausreichend niedrige Aggressivität des Beifahrerbags erzwingen einen "TOP MOUNTED" Airbagaustritt im Beifahrerbereich. Eine Technik gemäß der vorliegenden Erfindung lässt in besonders vorteilhafter Weise einen zusätzlich breiten Airbagaustritt entstehen durch das Querausschießen des Airbags mit der daraus resultierenden niedrigeren Aggressivität. Weiter lassen sich die Module durch Integration in das Belüftungssytem der Armaturentafel ohne Ausbau der Armaturentafel auswechseln. Das spart bis zu zwei Kaskoklassen bei der Einstufung nach der tatsächlichen Schadenshöhe.

Die Erfindung ist anhand der Ausführungsbeispiele in der Beschreibung und in den Zeichnungen lediglich exemplarisch dargestellt und nicht darauf beschränkt. Sie wird durch die folgenden Ansprüche definiert.

### Bezeichnungen

- 1: Modulgehäuse
- 2: Gasausströmung
- 3: Gaskanal
- 4: Ansschlussstutzen
- 5: Schlauchpfropfen
- 6: Schlauch
- 7: spezielle Faltung
- 8: Abdeckung
- 9: Airbag
- 10: Gasweg
- 11: Generator
- 12: Kolben von der "ACTIVE DOOR"
- 13: Armaturentafel
- 14: Haltebänder
- 15: Airbaggewebe
- 16: Kolben
- 17: Zylinder
- 18: Gasdruckraum
- 19: Teleskopverlängerungsrohr
- 20: Stopfen
- 21: Verriegelung
- 22: Entriegelungsseil
- 23: Flexgelenk
- 24: Gasausblasrohr
- 25: Splint
- 26: Loch Gasaustritt
- 27: Teleskop-Gasleitbock
- 28: Führungsrohr
- 29: Teleskoprohr
- 30: Kamin
- 31: Führung
- 32: Anschlagnase
- 33: Öffnung
- 34: 2. Kamin
- 35: Gasaustritt
- 37: Gasverteilungsmatratze
- 38: Gaskammer 1
- 39: Gaskammer 2
- 40: Gaskammer 3
- 41: Vernähung
- 42: Haltewand
- 43: Abstützwand
- 44: Führung
- 45: Löcher
- 46: ausfahrbarer Kamin
- 47: Deckel
- 48: Gasdurchgangslöcher
- 101: Generator
- 102: Airbag
- 103: Belüftungsblende
- 104: Gasaustritt
- 105: Gasverteiler
- 106: Schlauch
- 107: Geschoss
- 108: Armaturentafel
- 109: Airbaggehäuse
- 110: Airbagmodul
- 111: schräge Ebene
- 112: Luftanschluss
- 113: Befestigung
- 114: Windschutzscheibe
- 115: Linien
- 116: Ausblasgehäuse
- 117: Scherniete
- 118: Schlitz
- 119: Anschlag
- 120: Luftkanal
- 121: Gehäuse
- 122: Belüftungsschlitz
- 123: Bänder
- 124: Zweite Generatorstufe
- 125: Erste Generatorstufe
- 126: Zwischenrohr
- 127: Zwischenwände
- 128: Lochbleche
- 129: Stahlwolle
- 130: Zündung
- 131: Lenkrad
- 132: Klettbänder
- 133: Messstrahl
- 134: Sendequelle
- 135: Messquelle
- 136: Fangbänder
- 201: Ausblasschläuche
- 202: Airbag
- 203: Armaturentafel
- 204: Kanal
- 205: Modul
- 206: Defrosterblende
- 207: Defrosteröffnung
- 208: Luftanschluss
- 209: Ausblasgeschosse
- 210: Schlauchmündung
- 211: Generator
- 212: Auflagerampe
- 213: Deckel
- 214: Luftkanal
- 215: Heizung
- 216: Fahrerbaggenerator
- 217: Schale
- 218: Schlauchanschlüsse
- 219: Bördelung
- 220: Schläuche
- 221: Auflage und Führung
- 222: Gasaustrittslöcher
- 223: Spitze
- 224: Abdeckhaut
- 225: Linien
- 226: Segmente
- 227: Vorschädigung
- 228: Fahrerairbag
- 229: Gasverteiler
- 230: Schlauchende
- 231: Gewebehälften
- 232: Gasverteilungskanäle
- 233: Deckplatte
- 234: Klemmring
- 235: Basisplatte
- 236: Anschrägung
- 237: Niet oder Schraube
- 238: Gasführungsgehäuse
- 239: Gaskanal
- 240: Gasverteiler
- 241: Loch
- 301: Modul
- 302: Armaturentafel
- 303: Armaturentafelträger
- 304: Defrosterdüse
- 305: Dichtung
- 306: Druckkanal
- 307: Druckkanalendstück
- 308: Geschoss
- 309: Airbag
- 310: Leitblech
- 311: Schläuche
- 312: Abnäher
- 313: Textil
- 314: Generator
- 315: Aussteifungen
- 316: oberer Airbag
- 317: Windschutzscheibe
- 318: Armaturentafeloberfläche
- 319: unterer Airbag
- 320: Zierleiste
- 321: Hilfsbag
- 322: Schlauchabnäher
- 323: Armaturentafelkante
- 324: Kanäle
- 325: Kolbenventil
- 326: Löcher
- 327: Rasthebel
- 328: Kulisse
- 329: Druckplatte
- 330: Druckschläuche
- 331: Leisten
- 332: Aluminiumelemente
- 333: Druckkamin
- 334: Rollkolben
- 401: Hilfsbag
- 402: Verkleidung
- 403: Schlauchsegmente
- 405: Dachbag
- 406: Dachrahmen
- 407: Schläuche
- 408: Fertighimmel
- 409: Dachspriegel
- 501: Alustrangpreßprofil "längs"
- 502: Alustrangpreßprofil "quer"
- 503: Dachairbag am Dachrahmen
- 504: Dachairbag zwischen Front- und Heckpassagieren
- 505: Schiebedachairbag
- 506: Hilfsbag
- 507: Verkleidung
- 508: Reißnaht
- 509: Schiebedachrahmen
- 510: Geeneratoren
- 511: Gaskanal
- 512: Führung
- 513: Dachrahmen
- 514: Strangpreßprofil vom
- F: Fahrzeug

## Patentansprüche

1. Airbagvorrichtung mit einem Airbag und Gaserzeugungseinrichtungen, **dadurch gekennzeichnet, dass** Entfaltungssteuereinrichtungen vorgesehen sind, die ein Entfalten des Airbags zumindest teilweise vorgeben, bevor der Airbag mit Gas aus den Gaserzeugungseinrichtungen aufgeblasen wird.

2. Airbagvorrichtung nach Anspruch 1, **dadurch gekennzeichnet, dass** die Entfaltungssteuereinrichtungen ausgelegt sind, um eine oder mehrere der folgenden Funktionen zu erfüllen:
- Vorgeben einer Querentfaltung des Airbags;
- Schaffen einer größeren Airbagbasis beim späteren Aufblasen des Airbags insbesondere in der Querrichtung;
- Vorgeben des Austrittsweges eines Airbags von seiner Unterbringung hinter einer Fahrzeuginnenverkleidung; und
- Öffnen des Austrittsweges eines Airbags von seiner Unterbringung hinter einer Fahrzeuginnenverkleidung.

3. Airbagvorrichtung nach Anspruch 1 oder 2, **dadurch gekennzeichnet, dass** Gaseinstromführungen vorgesehen sind, die einen Airbag tangential oder quer zur Bewegungsrichtung des sich füllenden Airbags zu einem Insassen hin aufblasen.

4. Airbagvorrichtung nach einem der vorhergehenden Ansprüche, **dadurch gekennzeichnet, dass** ein Gasverteilergehäuse vorgesehen ist, das Öffnungen aufweist, durch die ein Airbag tangential oder quer zur Bewegungsrichtung des sich füllenden Airbags zu einem Insassen hin aufgeblasen wird.

5. Airbagvorrichtung nach einem der vorhergehenden Ansprüche, **dadurch gekennzeichnet, dass** ein Gasausblassystem für den Airbag, insbesondere Beifahrerairbag, vorgesehen ist, welches Gasausblassystem zeitlich vor dem Aufblasen ein Gewebe des Airbags über eine Airbagaustrittsöffnung in einer Fahrzeuginnenverkleidung hebt.

6. Airbagvorrichtung nach Anspruch 5, **dadurch gekennzeichnet, dass** das angehobene Gewebe quer und damit nicht aggressiv zur Schutzrichtung des sich füllenden Airbags zu einem Insassen hin mechanisch ausgebreitet wird, wobei vorzugsweise der Antrieb für die Querausbreitung der Gasdruck zum Aufblasen des Airbags ist.

7. Airbagvorrichtung nach Anspruch 6, **dadurch gekennzeichnet, dass** der Airbag an den Stellen des angehobenen und/oder ausgebreiteten Gewebes zuerst unter Verteilung der Aggressivität zur örtlichen Aufteilung aufgeblasen wird.

8. Airbagvorrichtung nach einem der Ansprüche 5 bis 7, **dadurch gekennzeichnet, dass** die Entfaltungssteuereinrichtungen gegenläufig angeordnete Schläuche mit schlauchartigen Stopfen zur Entfaltung bzw. zum Abschießen mittels Gasdruck vorzugsweise aus den Gaserzeugungseinrichtungen enthalten, um den Airbag zu entfalten.

9. Airbagvorrichtung nach Anspruch 8, **dadurch gekennzeichnet, dass** die Entfaltungssteuereinrichtungen Kolben enthalten, die in Zylindern auch mit dem Gasdruck vorzugsweise aus den Gaserzeugungseinrichtungen beaufschlagt werden und die Schläuche in Schussrichtung anheben, um den Airbag zu entfalten.

10. Airbagvorrichtung nach einem der Ansprüche 5 bis 9, **dadurch gekennzeichnet, dass** die Entfaltungssteuereinrichtungen Gasausblasrohre enthalten, die mit einem Gelenk versehen sind, um ein Hochschwenken bzw. eine Nachgiebigkeit der Rohre beim Kopfaufschlag zu erzeugen, welche Rohre mittels Gasdruck vorzugsweise aus den Gaserzeugungseinrichtungen beaufschlagt werden, um den Airbag zu entfalten.

11. Airbagvorrichtung nach Anspruch 10, **dadurch gekennzeichnet, dass** das Gasausblasrohr teleskopartig derartig gestaltet ist, dass das vom geschlossene teleskopartig Gasausblasrohr das Gewebe des Airbags auf der Armaturentafel nach außen schiebt.

12. Airbagvorrichtung nach Anspruch 11, **dadurch gekennzeichnet, dass** die teleskopartigen Gasausblasrohre in Alternativen derart ausgeführt sind, dass nach einer bestimmten Wegstrecke das Gas an der richtigen Stelle in das Gewebe austreten kann, und alternative Techniken mit entriegelbarem Stopfen und Querlöchern vorgesehen sind.

13. Airbagvorrichtung nach einem der Ansprüche 6 bis 12, **dadurch gekennzeichnet, dass** vorzugsweise die Entfaltungssteuereinrichtungen Kolben in Zylindern enthalten, um damit den Airbag in Position zu bringen.

14. Airbagvorrichtung nach einem der Ansprüche 6 bis 13, **dadurch gekennzeichnet, dass** ein Teleskopgasleitbock ein Rohrsystem in Position hebt, um damit den Airbag in Position zu bringen.

15. Airbagvorrichtung nach einem der Ansprüche 6 bis 14, **dadurch gekennzeichnet, dass** ein Stift oder Ähnliches das Ausblasen von Stopfen in oder über den Enden von Gaseinstromführungen, Öffnungen des Gasverteilergehäuses, Gasausblassystem, Schläuchen und/oder Gasausblasrohren solange verhindert, bis die Ausblasmechanik in Position gebracht ist, wobei insbesondere eine Wegesteuerung der Mechanik vorgesehen ist, welche Wegsteuerung eine Haltefunktion eines Sperrgliedes, wie z.B. eines Stiftes, entrastet.

16. Airbagvorrichtung nach einem der vorhergehenden Ansprüche, **dadurch gekennzeichnet, dass** die Entfaltungssteuereinrichtungen zur Erzeugung jedenfalls zunächst einer Querausströmung von Gas in dem Airbag ein matratzenartiges Gewebe enthalten.

17. Airbagvorrichtung nach Anspruch 16, **dadurch gekennzeichnet, dass** das matratzenartige Gewebe durch eine Matratze mit einer Mehrzahl von Wülsten gebildet ist, welche Matratze derart gestaltet ist, dass Wulst nach Wulst aufgeblasen wird, so dass sich der Airbag weggesteuert entfaltet.

18. Airbagvorrichtung nach Anspruch 16 oder 17, **dadurch gekennzeichnet, dass** das matratzenartige Gewebe durch eine Matratze mit einer Mehrzahl von Wülsten gebildet ist, bei welcher Matratze die Matratzenwülste derart untereinander vernäht sind, dass nach Füllung mit Gasdruck eines jeweiligen Wulstes Verbindungslöcher von diesem Wulst zum nächsten Wulst aufplatzen, so dass wiederum letzterer gefüllt wird.

19. Airbagvorrichtung nach einem der Ansprüche 16 bis 18, **dadurch gekennzeichnet, dass** das matratzenartige Gewebe durch eine Matratze mit einer Mehrzahl von Wülsten gebildet ist, welche Matratze derart gestaltet ist, dass der letzte Wulst Löcher enthält, bei deren Aufplatzen Gas in den eigentlichen Airbag geblasen wird.

20. Airbagvorrichtung nach einem der Ansprüche 16 bis 19, **dadurch gekennzeichnet, dass** das matratzenartige Gewebe durch eine Matratze mit einer Mehrzahl von Wülsten gebildet ist, welche Matratze von einem teleskopartig ausfahrenden Kamin aus von der Mitte aus mit Gas gefüllt wird, wobei insbesondere eine Deckelplatte des Kamines derart mit Löchern versehen ist, dass auch die Mitte des Bags angemessen direkt mit Gas gefüllt wird.

21. Airbagvorrichtung nach einem der vorhergehenden Ansprüche, **dadurch gekennzeichnet, dass** die Entfaltungssteuereinrichtungen eine oder mehrere der folgenden Ausgestaltungen aufweisen:
- die Entfaltungssteuereinrichtungen sind Bestandteil der modular aufgebauten Airbagvorrichtung;
- die Entfaltungssteuereinrichtungen enthalten wenigstens einen Druckkanal, der insbesondere in einem abgewinkelten Bereich eine teleskopartig herausfahrbare Verlängerung hat, um den Airbag **dadurch** zu entfalten und dann zu füllen;
- die Entfaltungssteuereinrichtungen enthalten ein gerundetes Leitblech, um das der Airbag beim Auszug herum gezogen wird;
- die Entfaltungssteuereinrichtungen enthalten Schläuche, durch die Gasstrom auf die Armaturentafel geleitet wird, so dass sich der größte Druck direkt in den Airbag entspannt;
- die Entfaltungssteuereinrichtungen sind derart ausgelegt und wirken, dass die modular aufgebaute Airbagvorrichtung bei Ihrer Auslösung nicht mit Druck verformt wird, so dass das Modul unbeschadet nach einem Crash ausgewechselt werden kann;
- die Entfaltungssteuereinrichtungen enthalten Defroster-Lüftungsöffnungen für den Austritt des Airbags, derart, dass im normalen Gebrauch des Fahrzeuges ohne Auslösung der Airbagvorrichtung die Defrosterluft ungehindert oberhalb des Airbags passieren kann, wobei vorzugsweise im Crashfall die Schläuche, Rohre, Hilfsbags o.ä. durch die Defrosterdüse austreten können;
- die Entfaltungssteuereinrichtungen enthalten Austrittshilfsmittel, die derart gestaltet sind, dass das Gas, das an ihrem Ende austritt, den Airbag wie ein Papiertaschentuch durch einen Schlitz im Armaturenkasten zieht;
- die Entfaltungssteuereinrichtungen befördern den Airbag mit Geschossen aus einer gestalterisch im Fahrzeuginnenraum ohnehin gegebenen Öffnung an die sicherheitsrelevante Stelle im Fahrzeug;
- die Entfaltungssteuereinrichtungen enthalten wenigstens einen Gaskanal, der ausgelegt ist, um in einer Sektion kreisförmige Gasströmung zu bewirken, wobei vorzugsweise der Gaskanal derart aus Kreissegmenten gestaltet ist, dass sich ein teleskopischer Einsatz darin kreisförmig bewegen kann, oder wobei bevorzugt die kreisförmige Ausbildung derart ist, dass der Airbag über diese Rundungen problemlos ausgezogen werden kann; und
- die Entfaltungssteuereinrichtungen enthalten zum Entfalten des Airbags wenigstens einen Hilfsbag, in dem der Generator eingenäht ist, wobei vorzugsweise das Textil des Hilfsbags zu Schläuchen abgenäht ist, die dann eingestülpt oder mit Geschossen versehen werden können.

22. Airbagvorrichtung nach einem der vorhergehenden Ansprüche, **dadurch gekennzeichnet, dass** die Gaserzeugungseinrichtungen, wie insbesondere ein Gasgenerator, derart gestaltet ist, dass sie/er in eine Defrosteröffnung passen/passt und vorzugsweise beidseitig ausbläst.

23. Airbagvorrichtung nach einem der vorhergehenden Ansprüche, **dadurch gekennzeichnet, dass** Einrichtungen zum Rückziehen von Zierleisten insbesondere mit Kolben vorgesehen sind, die den Gasstrom für den Airbag als Energiequelle nutzen.

24. Airbagvorrichtung nach einem der vorhergehenden Ansprüche, **dadurch gekennzeichnet, dass** wenigstens ein Hilfsbag so ausgelegt ist, dass er im Auslösungsfall eine integrierte Klappe in einer Armaturentafel öffnet, um einen Austritt des sich entfaltenden und/oder aufblasenden Airbags durch die so in der Armaturentafel entstandene Öffnung zu ermöglichen, wobei vorzugsweise zum Öffnen der Klappe eine Druckplatte vorgesehen ist, auf der der Hilfsbag befestigt ist, wobei weiter bevorzugt Rasthebel in Kulissen vorgesehen sind, die eine stabile obere Lage der Druckplatte direkt unter dem Armaturentafelkörper sicherstellen.

25. Airbagvorrichtung nach einem der vorhergehenden Ansprüche, **dadurch gekennzeichnet, dass** die Airbagvorrichtung als ein Rollkolbenmodul für eine Airbagklappen Öffnung mittels Rollkolben ausgelegt ist, und dass das Rollkolbenmodul zwei vorzugsweise Alu-Halbschalen-Strangpressprofile mit insbesondere eingeschobenem Druckkanal und mit oben aufgesetzten Hilfsbags enthält.

26. Airbagvorrichtung nach einem der vorhergehenden Ansprüche, **dadurch gekennzeichnet, dass** die Airbagvorrichtung einen Dachairbag betreibt und im Dachrahmen des Schiebedachs aus Strangpreßprofil untergebracht ist, wobei bevorzugt Gaskanäle in die Alustrangpreßprofile des Dachrahmens integriert sind, und wobei noch weiter bevorzugt in dem eigentlichen Airbag ein Hilfsbag integriert ist, um den eigentlichen Airbag zuerst aus dem Strangpreßprofilgehäuse auszuschieben, so dass der eigentliche Airbag im Freien gleichmäßig aufgeblasen wird.

27. Airbagvorrichtung nach einem der vorhergehenden Ansprüche, **dadurch gekennzeichnet, dass** die Airbagvorrichtung modular ist, und dass das Airbagmodul an Innenraum-Belüftungsöffnungen eines Fahrzeuges so angeschlossen oder anschließbar ist, dass im Fall einer Auslösung der Airbagvorrichtung der Airbag durch die Innenraum-Belüftungsöffnungen austritt oder austreten kann.

28. Betriebsverfahren für eine Airbagvorrichtung, **dadurch gekennzeichnet, dass** eine Airbagvorrichtung nach einem der vorhergehenden Ansrüche bestimmungs- und gestaltungsgemäß eingesetzt und betrieben wird.

29. Betriebsverfahren für eine Airbagvorrichtung nach Anspruch 28, **dadurch gekennzeichnet, dass** ein Gasfluss durch ein Gasverteilergehäuse und/oder Gasverteilungsschlauch geleitet wird.

30. Betriebsverfahren für eine Airbagvorrichtung nach Anspruch 28 oder 29, **dadurch gekennzeichnet, dass** ein Gasfluss von beiden oder allen Seiten des Airbags tangential oder quer zum Aufblasen des Airbags eingeleitet wird.

31. Airbagvorrichtung nach einem der Ansprüche 28 bis 30, **dadurch gekennzeichnet, dass** eine Airbagabdeckung den Airbag über Ausströmöffnung hält, wobei Sollbruchstellen der Airbagabdeckung durch den Gasstrom aufgebrochen werden, so dass obere Textilschichten des Airbags ungehindert durch den Gasstrom angehoben werden.

## Claims

1. An airbag device comprising an airbag and gas generation means, **characterized in that** deployment control means are provided, which at least partially predetermine the deployment of the airbag, before the airbag is inflated with gas from the gas generation means.

2. An airbag device according to claim 1, **characterized in that** the deployment control means are configured to provide any or several of the following functions:
- predetermining a lateral deployment of the airbag;
- providing for a larger airbag base during subsequent inflation of the airbag, in particular in lateral direction;
- predetermining the exit path of an airbag from its storage behind an inner lining of the vehicle; and
- opening the exit path of an airbag from its storage behind an inner lining of the vehicle.

3. An airbag device according to claim 1 or 2, **characterized in that** gas inflow guides are provided, which inflate an airbag tangentially or transversally to the movement direction of the filling up airbag towards a passenger.

4. An airbag device according to any of the preceding claims, **characterized in that** a gas distribution housing is provided, which has openings, through which an air bag is inflated tangentially or transversally to the direction of movement of the filling up airbag towards a passenger.

5. An airbag device according to any of the preceding claims, **characterized in that** a gas blowout system for the airbag, in particular the passenger airbag is provided, said gas blowout system raising a fabric of the airbag over an airbag exit opening in an vehicle inner lining prior to the inflation.

6. An airbag device according to claim 5, **characterized in that** the raised fabric is mechanically spread in transverse direction, and thus not in an aggressive manner relative to the direction of protection of the filling up airbag towards a passenger, wherein preferably the actuation for the transverse spreading is the gas pressure for inflating the airbag.

7. An airbag device according to claim 6, **characterized in that** the airbag is initially inflated at the locations of the raised and/or spread fabric, while distributing the agressivity for local distribution.

8. An airbag device according to any of claims 5 to 7, **characterized in that** the deployment control means comprise hoses, disposed in opposite directions, with tubular plugs for deployment, or for shooting away by means of gas pressure, preferably from the gas generation means, in order to deploy the airbag.

9. An airbag device according to claim 8, **characterized in that** the deployment control means comprise pistons, which are also loaded in the cylinders by the gas pressure, preferably from the gas generation means, and which raise the hoses in shooting directions in order to deploy the airbag.

10. An airbag device according to any of claims 5 to 9, **characterized in that** the deployment control means comprise gas blowout tubes, which are provided with a hinge in order to create a pivoting upwards or a resiliency of the tubes during a head impact, said tubes being loaded by the gas pressure, preferably from the gas generation means in order to deploy the airbag.

11. An airbag device according to claim 10, **characterized in that** the gas blowout tube is telescopically designed in such a manner that the frontal closed telescopic gas blowout tube, pushes the fabric of the airbag on the dash board towards the outside.

12. An airbag device according to claim 11, **characterized in that** the telescopic gas blowout tubes are designed in alternatives in such a manner that after a certain distance, the gas can exit into the fabric at the right location, and alternative techniques with an unlockable plug and transversal holes are provided.

13. An airbag device according to any of claims 6 to 12, **characterized in that** preferably the deployment control means include pistons in cylinders in order to bring the airbag into position therewith.

14. An airbag device according to any of claims 6 to 13, **characterized in that** a telescopic gas guide support raises a tube system into position in order to bring the airbag into position therewith.

15. An airbag device according to any of claims 6 to 14, **characterized in that** a pin or similar prevents the blowing out of plugs into or over the ends of gas inflow guides, openings of the gas distributor housing, gas blowout system, hoses and/or gas blowout tubes until the blowout mechanism is brought into position, wherein in particular a travel control of the mechanism is provided, said travel control unlocking a holding function of a locking member, as e.g. a pin.

16. An airbag device according to any of the preceding claims, **characterized in that** the deployment control means comprise a mattress type fabric for generating at least initially a lateral flow of gas into the airbag.

17. An airbag device according to claim 16, **characterized in that** the mattress type fabric is formed by a mattress with a plurality of beads, said mattress being designed so that any bead after another bead being inflated, such that the airbag deploys in a travel controlled manner.

18. An airbag device according to claim 16 or 17, **characterized in that** the mattress type fabric is formed by a mattress with a plurality of beads, in which mattress the mattress beads are sewn among any another, so that after filling of a corresponding bead with gas, pressure connecting openings from said bead to the next bead burst such that in turn the latter is being filled.

19. An airbag device according to any of claims 16 to 18, **characterized in that** the mattress type fabric is formed by a mattress with a plurality of beads, said mattress being designed so that the last bead comprising holes through the bursting of which gas being blown into the real airbag.

20. An airbag device according to any claims 16 to 19, **characterized in that** the mattress type fabric is formed by a mattress with a plurality of beads, said mattress being filled with gas from a telescopically extending stack from the center, wherein in particular a cover plate of the stack being provided with holes in such a manner that also the center of the bag is sufficiently direct filled with gas.

21. An airbag device according to any of the preceding claims, **characterized in that** the deployment control means have one or several of the following arrangements:
- the deployment control means are part of the modular configured air bag device;
- the deployment control means comprise at least a pressure channel, which in particular comprises in an angled portion a telescopically extendable extension in order to deploy the airbag therewith and to fill it thereafter;
- the deployment control means include a rounded guiding sheet around which the airbag is pulled during pullout;
- the deployment control means include hoses through which gas flow is routed onto the dash board, so that the largest pressure expands directly into the airbag;
- the deployment control devices are configured and act so that the modular configured airbag device is not deformed by pressure when triggered, so that the module can be exchanged unscathed after a crash;
- the deployment control means comprise defroster ventilation openings for the exit of the airbag, such that during normal use of the vehicle without triggering the airbag device, the defroster air can pass above the airbag without restriction, wherein preferably in the case of a crash the hoses, tubes, auxiliary bags, or similar can exit through the defroster nozzle;
- the deployment control means comprise auxiliary exit means, which are configured such that the gas, which exits at the their end pulls the airbag through a slot in the dash board box like a paper handkerchief;
- the deployment control means move the airbag with projectiles from an opening already existing in the vehicle interior from a design point of view, to the safety relevant position in the vehicle;
- the deployment control means comprise at least one gas channel, which is configured to cause a circular gas flow in a section, wherein preferably the gas channel being formed by circular segments in such a manner that a telescopic insert can move circularly therein, or wherein preferably the circular form is configured in such a manner that the airbag can be pulled out over these curvature without problems; and
- the deployment control means, for deployment of the airbag, include at least any auxiliary airbag in which the generator is sewn in, wherein preferably the textile of the auxiliary airbag is sewn into hoses, which then can be invaginated, or provided with projectiles.

22. An airbag device according to any of the preceding claims, **characterized in that** the gas generation means, like especially a gas generator, are configured in such a manner that they/it fit(s) into a defroster opening and preferably blow(s) out on both sides.

23. An airbag device according to any of the preceding claims, **characterized in that** means for retracting trim bars, in particular with pistons, are provided, which use the gas flow for the airbag as an energy source.

24. An airbag device according to any of the preceding claims, **characterized in that** at least one auxiliary bag is configured, so that it opens an integral lid in a dashboard in the case of being triggered, in order to allow an exit of the deploying and/or inflating airbag through the opening thus created in the dashboard, wherein preferably for opening the lid a pressure plate is provided, on which the auxiliary airbag is mounted, wherein furthermore preferably engagement levers are provided in coulisses, which assure a stable upper position of the pressure plate directly below the body of the dashboard.

25. An airbag device according to any of the preceding claims, **characterized in that** the airbag device is configured as a rolling piston module for an airbag lid opening by means of rolling pistons, and **in that** the rolling piston module preferably includes two extruded aluminum half shell profiles, in particular with an inserted pressure channel and with an auxiliary airbag placed on top.

26. An airbag device according to any of the preceding claims, **characterized in that** the airbag device operates a roof airbag, and is accommodated in the roof frame of the sunroof, made from extruded profile, wherein preferably gas channels are integrated in the extruded aluminum profile of the roof frame, and wherein furthermore preferred in the actual airbag an auxiliary air bag is integrated in order to expel the actual airbag from the extruded profile first, so that the actual airbag is evenly inflated when freed.

27. An airbag device according to any of the preceding claims, **characterized in that** the airbag device is modular and the airbag module is connected or connectable to interior vent openings of a vehicle, so that in case of a triggering of the airbag device the airbag exits, or can exit through the interior vent openings.

28. An operating method for an airbag device, **characterized in that** an airbag device according to any of the preceding claims is used and operated as intended and as designed.

29. An operating method for an airbag device according to claim 28, **characterized in that** a gas flow is conducted through a gas distribution housing and/or a gas distribution hose.

30. An operating method for an airbag device according to claim 28 or 29, **characterized in that** a gas flow is inducted from both or all sides of the airbag tangentially or transversally for inflating the airbag.

31. An airbag device according to any of claims 28 through 30, **characterized in that** an airbag cover holds the airbag over the exhaust opening, wherein pull links of the airbag cover are broken open by the gas flow, so that upper textile layers of the airbag are raised by the gas flow without hindering.

## Revendications

1. Système d'airbag comprenant un airbag et des moyens de production de gaz, **caractérisé en ce qu'**il est prévu des moyens de commande de déploiement, qui imposent au moins partiellement un déploiement de l'airbag avant que l'airbag soit gonflé avec du gaz provenant des moyens de production de gaz.

2. Système d'airbag selon la revendication 1, **caractérisé en ce que** les moyens de commande de déploiement sont conçus pour remplir une ou plusieurs des fonctions suivantes :
- imposition d'un dépbiement transversal de l'airbag ;
- réalisation d'une base agrandie pour l'airbag lors du gonflage ultérieur de l'airbag, en particulier en direction transversale ;
- imposition du trajet de sortie d'un airbag depuis son logement derrière un habillage intérieur du véhicule ; et
- ouverture du trajet de sortie d'un airbag depuis son logement derrière un habillage intérieur du véhicule.

3. Système d'airbag selon la revendication 1 ou 2, **caractérisé en ce qu'**il est prévu des guidages d'entrée de gaz qui gonflent un airbag tangentiellement ou perpendiculairement à la direction de déplacement de l'airbag qui se remplit vers un occupant.

4. Système d'airbag selon l'une des revendications précédentes, **caractérisé en ce qu'**il est prévu un boîtier répartiteur de gaz qui présente des ouvertures à travers lesquelles un airbag est gonflé tangentiellement ou perpendiculairement à la direction de déplacement de l'airbag qui se remplit vers un occupant.

5. Système d'airbag selon l'une des revendications précédentes, **caractérisé en ce qu'**il est prévu un système de soufflage de gaz pour l'airbag, en particulier un airbag depassager, ledit système de soufflage de gaz soulevant à temps avant le soufflage un tissu de l'airbag au dessus d'une ouverture de sortie d'airbag dansun habillage intérieur du véhicule.

6. Système d'airbag selon la revendication 5, **caractérisé en ce que** le tissu soulevé est étalé mécaniquement transversalement et donc de manière non agressive vis-à-vis de la direction de protection de l'airbag qui se remplit vers un occupant, l'entraînement pour l'étalement transversal étant la pression du gaz pour le gonflage de l'airbag.

7. Système d'airbag selon la revendication 6, **caractérisé en ce que** l'airbag est gonflé aux emplacements du tissu soulevé et/ouétalé tout d'abord avec répartition de l'agressivitépour une répartition locale.

8. Système d'airbag selon l'une des revendications 5 à 7, **caractérisé en ce que** les moyens de commande de déploiement comprennent des tuyaux agencés en sens opposés avec des bouchons semblables à des tuyaux pour le déploiement ou pour l'éjectionau moyen de la pression du gaz provenant de préférence des moyens de production de gaz, afin de déployer l'airbag.

9. Système d'airbag selon la revendication 8, **caractérisé en ce que** le moyens de commande de déploiement contiennent des pistons qui sont sollicités dans des cylindres également par la pression du gaz provenant de préférence des moyens de production de gaz et qui soulèvent les tuyaux dans la direction d'éjection afin de déployer l'airbag.

10. Système d'airbag selon l'une des revendications 5 à 9, **caractérisé en ce que** les moyens de commande de déploiement contiennent des tubes de soufflage de gaz qui sont pourvus d'une articulation pour engendrer un pivotement vers le haut ou respectivement une flexibilité des tubes lors de l'impact d'une tête, lesdits tubes étant alimentés au moyen de la pression du gaz provenant de préférence des moyens de production de gaz, afin de déployer l'airbag.

11. Système d'airbag selon la revendication 10, **caractérisé en ce que** le tube de soufflage de gaz est réalisé de manière télescopique de telle façon que le tube de soufflage de gaz télescopique fermé à l'avant pousse le tissu de l'airbag vers l'extérieur sur le panneau de tableau de bord.

12. Système d'airbag selon la revendication 11, **caractérisé en ce que** les tubes de soufflage de gaz télescopique sont réalisés en variante de telle manière qu'après un trajet déterminé, le gaz peut sortir à l'emplacement correct dans le tissu, et **en ce qu'**il est prévu des techniques alternatives avec bouchons déverrouillables et trous transversaux.

13. Système d'airbag selon l'une des revendications 6 à 12, **caractérisé en ce que** les moyens de commande de déploiement comprennent de préférence des pistons dans des cylindres afin d'amener ainsi l'airbag en position.

14. Système d'airbag selon l'une des revendications 6 à 13, **caractérisé en ce qu'**un bloc de passage de gaz télescopique soulève un système de tubes en position afin d'amener ainsi l'airbag en positon.

15. Système d'airbag selon l'une des revendications 6 à 14, **caractérisé en ce qu'**une tige ou analogue empêche l'éjection de bouchonsdans ou sur les extrémités de guidage d'entrée de gaz, des ouvertures du boîtier de répartition de gaz, du système desoufflage de gaz, des tuyaux et/ou des tubes de soufflage de gaz aussi longtemps jusqu'à ce que la mécanique de soufflage soit amenée en position, et il esten particulier prévu une commande de course du mécanisme, ladite commande de course annulant l'enclenchement d'une fonction de maintien d'un organe d'arrêt, comme par exemple une tige.

16. Système d'airbag selon l'une des revendications précédentes, **caractérisé en ce que** les moyens de commande de déploiement contiennent un tissu analogue à un matelas pour engendrer dans tous les cas tout d'abord un écoulement transversal du gaz dans l'airbag.

17. Système d'airbag selon la revendication 16, **caractérisé en ce que** le tissu analogue à un matelas est formé par un matelas comprenant une pluralité de bourrelets, ledit matelas étant conçu de manière à être gonflé bourrelet après bourrelet, de sorte que l'airbag se déploie avec commande de course.

18. Système d'airbag selon la revendication 16 ou 17, **caractérisé en ce que** le tissu analogue à un matelas est formé par un matelas comprenant une pluralité de bourrelets, les bourrelets du matelas étant cousus les uns avec les autres dans ce matelas de telle façon qu'après remplissage sous la pression de gaz d'un bourrelet respectif des trous de liaison de ce bourrelet au bourrelet suivant éclatent, de sorte que ce dernier est rempli à son tour.

19. Système d'airbag selon l'une des revendications 16 à 18, **caractérisé en ce que** le tissu analogue à un matelas est formé par un matelas comprenant une pluralité de bourrelets, ledit matelas étant conçu de telle manière que le dernier bourrelet contient des trous qui, lorsqu'ils éclatent, permettent le soufflage du gaz dans l'airbagproprement dit

20. Système d'airbag selon l'une des revendications 16 à 19, **caractérisé en ce que** le tissu analogue à un matelas est formé par un matelas comprenant une pluralité de bourrelets, ledit matelas étant rempli de gaz depuis le milieu à partir d'une cheminée déployée de façon télescopique, et une plaque de couverture de la cheminée est en particulier pourvue de trous de telle manière que le milieu de l'airbag est également rempli directement avec du gaz de manière mesurée.

21. Système d'airbag selon l'une des revendications précédentes, **caractérisé en ce que** les moyens de commande de déploiement présentent un ou plusieurs des perfectionnements suivants :
- les moyens de commande de déploiement font partie du système d'airbag de réalisation modulaire ;
- les moyens de commande de déploiement contiennent au moins un canal à pression qui possède un prolongement déployable de manière télescopique, en particulier dans une zone coudée, pour déployer ainsi l'airbag et ensuite le remplir ;
- les moyens de commande de déploiement comprennent une tôle de guidage arrondie, autour de laquelle l'airbag est tiré lors de sa sortie ;
- les moyens de commande de déploiement contiennent des tuyaux via lesquels le courant de gaz est amené au tableau de bord, de sorte que la plus forte pression se détend directement dans l'airbag ;
- les moyens de commande de déploiement sont conçus et agissent de telle façon que le système d'airbag de réalisation modulaire n'est pas déformé lors de son déclenchement avec de la pression, de sorte que le module peut être échangé après une collision sans être endommagé ;
- les moyens de commande de déploiement contiennent des ouvertures d'aération et de dégivrage pour la sortie de l'airbag, de sorte que lors de l'utilisation normale du véhicule sans déclenchement du système d'airbag, l'air de dégivrage peut passer sans empêchement au-dessus de l'airbag, et en cas de collision, les tuyaux, les tubes, les airbags auxiliaires ou analogues, peuvent de préférence sortir à travers les buses de dégivrage ;
- les moyens de commande de déploiement comprennent des moyens auxiliaires de sortie qui sont conçus de telle façon que le gaz, qui sort à leur extrémité, tirent l'airbag à travers une fente dans le caisson du tableau de bord, à la manière d'un mouchoir en papier ;
- les moyens de commande de déploiement propulsent l'airbag avec des projectiles sortant d'une ouverture, de toute façon prévue de par conception dans l'habitacle du véhicule, à un emplacement pertinent vis-à-vis de la sécurité dans le véhicule ;
- les moyens de commande de déploiement comprennent au moins un canal à gaz qui est conçu pour engendrer un écoulement de gaz de forme circulaire dans une section, le canal à gaz étant de préférence réalisé à partir de segments circulaires de telle façon qu'un insert télescopique peut se déplacer à l'intérieur sur un trajet circulaire, ou la réalisation de forme circulaire est de préférence telle que l'airbag peut être extrait sans problème au-dessus de ces arrondis ; et
- les moyens de commande de déploiement comprennent, pour le déploiement de l'airbag, au moins un airbag auxiliaire dans lequel est cousu le générateur, et le textile de l'airbag auxiliaire est de préférence cousu pour former des tuyaux qui peuvent être alors retroussés ou dotés de projectiles.

22. Système d'airbag selon l'une des revendications précédentes, **caractérisé en ce que** les moyens de production de gaz, comme en particulier un générateur de gaz, sont conçus de telle manière qu'ils s'ajustent dans une ouverture de dégivrage, et soufflent de préférence vers les deux côtés.

23. Système d'airbag selon l'une des revendications précédentes, **caractérisé en ce qu'**il est prévu des moyens pour la rétraction de barrettes décoratives, en particulier avec des pistons qui utilisent à titre de source d'énergie l'écoulement de gaz pour l'airbag.

24. Système d'airbag selon l'une des revendications précédentes, **caractérisé en ce qu'**au moins un airbag auxiliaire est conçu de manière à ouvrir, en cas de déclenchement, un clapet intégré dans un tableau de bord, pour permettre une sortie de l'airbag qui se déploie et/ou qui se gonfle à travers l'ouverture ainsi réalisée dans le tableau de bord, et pour l'ouverture du clapet il est de préférence prévu une plaque de pression sur laquelle est fixé l'airbag auxiliaire, et il est en outre prévu de préférence des leviers d'enclenchement dans des coulisseaux, qui assurent à la plaque de pression une position supérieure stable directement au-dessous du corps du tableau de bord.

25. Système d'airbag selon l'une des revendications précédentes, **caractérisé en ce que** le système d'airbag est conçu sous forme de module à piston déroulant pour assurer une ouverture du clapet d'airbag au moyen de piston déroulant, et **en ce que** le module à piston déroulant comprend deux profilés extrudés formant des demi-coques de préférence en aluminium, avec canal à pression en particulier introduit par enfoncement, et avec un airbag auxiliaire posé sur le dessus.

26. Système d'airbag selon l'une des revendications précédentes, **caractérisé en ce que** le système d'airbag est un airbag de toiture et est logé dans le cadre pour le toit ouvrant réalisé en profilé extrudé, des canaux à gaz étant de préférence intégrés dans les profilés extrudés en aluminium du cadre de toiture, et de manière encore préférée, un airbag auxiliaire est intégré dans l'airbag proprement dit, pour pousser tout d'abord l'airbag proprement dit hors du boîtier en profilé extrudé, de sorte que l'airbag proprement dit est gonflé régulièrement dans l'espace libre.

27. Système d'airbag selon l'une des revendications précédentes, **caractérisé en ce que** le système d'airbag est modulaire, et **en ce que** le module d'airbag est raccordé ou peut être raccordé à des ouvertures d'aération pour l'habitacle d'un véhicule de telle manière que lors d'un déclenchement du système d'airbag, l'airbag sort ou peut sortir àtravers des ouvertures d'aération pour l'habitacle.

28. Procédé de fonctionnement pour un système d'airbag, **caractérisé en ce que** l'on emploie et l'on fait fonctionner un système d'airbag selon l'une des revendications précédentes de manière conforme à sa destination et à sa conception.

29. Procédé de fonctionnement pour un système d'airbag selon la revendication 28, **caractérisé en ce qu'**un flux de gaz est mené à travers un boîtier de répartition de gaz et/ou un tuyau de répartition de gaz.

30. Procédé de fonctionnement pour un système d'airbag selon la revendication 28 ou 29, **caractérisé en ce qu'**un flux de gaz est introduit depuis les deux côtés ou depuis tous les côtés de l'airbag de manière tangentielle ou perpendiculaire au gonflage de l'airbag.

31. Système d'airbag selon l'une des revendications 28 à 30, **caractérisé en ce qu'**un recouvrement d'airbag maintient l'airbag au-dessus d'une ouverture de sortie, et des emplacements de rupture de consigne du recouvrement d'airbag sont brisés par le courant de gaz, de sorte que les couches textiles supérieures de l'airbag sont soulevées sans empêchement par le courant de gaz.
